# EUROPEAN PATENT SPECIFICATION

(11) **EP 4 531 386 B1**
(45) Date of publication and mention of the grant of the patent: **11.02.2026**
(21) Application number: 23884458.3
(22) Date of filing: 08.09.2023
(51) Int. Cl.: H04M 1/72433, G10L 15/26, H04M 1/72439, H04M 1/72436, H04M 1/72403, G06T 11/60, G06F 40/166, G06F 3/04847, G06F 3/0482

(54) **INFORMATION PROCESSING METHOD AND ELECTRONIC DEVICE**
INFORMATIONSVERARBEITUNGSVERFAHREN UND ELEKTRONISCHE VORRICHTUNG
PROCÉDÉ DE TRAITEMENT D?INFORMATIONS ET DISPOSITIF ÉLECTRONIQUE

(30) Priority: 04.11.2022 CN 202211379551
(43) Date of publication of application: 02.04.2025
(73) Proprietor: Honor Device Co., Ltd., Shenzhen, Guangdong 518040 (CN)
(72) Inventor: QUAN, Ruilin, Shenzhen, Guangdong 518040 (CN); WANG, Long, Shenzhen, Guangdong 518040 (CN)
(74) Representative: Gill Jennings & Every LLP
(86) International application number: PCT/CN2023/117685
(87) International publication number: WO 2024/093525

(56) References cited:
- EP-A1- 3 547 107
- CN-A- 103 065 659
- CN-A- 111 819 830
- CN-A- 112 866 469
- CN-A- 114 512 132
- KR-A- 20170 005 590
- US-A1- 2013 297 308
- US-A1- 2013 297 308
- US-A1- 2022 093 103

## Description

This application claims priority to Chinese Patent Application No. 202211379551.4, filed with the China National Intellectual Property Administration on November 4, 2022 and entitled "INFORMATION PROCESSING METHOD AND ELECTRONIC DEVICE"

### TECHNICAL FIELD

This application relates to the field of terminal technologies, and in particular, to an information processing method and an electronic device.

### BACKGROUND

As functions of electronic devices gradually improve, more electronic devices may record information, and store the information. For example, input text information, or the like may be recorded and stored in a "Notepad" application. In this way, a user implements information recording by using the electronic device, instead of relying on a conventional paper recording manner, to improve information recording efficiency.

The electronic device may integrate recorded information of the user into a text. Such a text may also be referred to as a note. Currently, information recorded by the user by using the electronic device may include text information, picture information, or the like. EP 3547107 A1 discloses an electronic device and method for contemporaneously recording voice inputs and receiving content inputs to form and store voice-content pairs, which are searchable and convertible to text. US 20130297308 A1 discloses an electronic device and method for recording audio, converting it to text, extracting core keywords, and using them for naming and managing audio files.

### SUMMARY

This application provides an information processing method and an electronic device, so that when non-voice information is recorded, recording is performed to record a voice, and the recorded voice is converted into a text for recording, or a voice-to-text conversion function may be disabled, to improve information recording efficiency and voice-to-text conversion flexibility.

According to a first aspect, this application provides an information processing method. The method includes: An electronic device displays a first interface. The first interface includes a first area, a second area, and a first control in a first state. When the electronic device displays a second control and the first control in the first state at a first moment, the electronic device records a first voice, and displays, in the first area, a text converted from the first voice. The second control is used to indicate that recording is being performed, and the first control in the first state is used to indicate to convert a recorded voice into a text during recording. When displaying the second control and the first control in the first state, the electronic device receives a first information entered by a user, and displays the first information in the second area. In response to an operation performed on the first control in the first state, when displaying the second control, the electronic device switches a state of the first control to a second state, and stops conversion of the recorded voice into the text. The first control in the second state is used to indicate to pause conversion of the recorded voice into the text. The electronic device records the first voice, the text converted from the first voice, and the first information in a first file.

In the foregoing embodiments, the first area may be an area 1 involved in the embodiments, the second area may be an area 2 involved in the embodiments, the first control may be a conversion control involved in the embodiments, the conversion control in the first state may be the conversion control in a state C, and the conversion control in the second state may be the conversion control in a state D. The second control may be a recording pause control involved in the embodiments, and the first voice may be a voice recorded at a 1^{st} time involved in the embodiments.

The electronic device may support voice-to-text conversion during recording, receive other information (for example, a text or a picture) entered by the user, and display the other information in the second area. In addition, a switch may be performed between enabling of a voice-to-text conversion function and disabling of the voice-to-text conversion function. To be specific, during recording, the voice-to-text conversion function may be enabled to convert a recording into text information, and the text information obtained through conversion is displayed in the first area. In this way, when the voice-to-text conversion function is enabled, the other information entered by the user may be received during recording. The voice-to-text conversion function may alternatively be disabled, i.e., when voice is being recorded, the recorded voice may not be converted into text information. In this way, when the voice-to-text conversion function is disabled, the other information entered by the user may be received during recording. The other information may also be referred to as non-recording information. In this way, information recording efficiency and voice-to-text conversion flexibility are improved.

With reference to the first aspect, in some embodiments, the first area includes a first subarea and a second subarea, the first subarea is used to display the second control, and the second subarea is used to display a text converted from the voice. When the electronic device displays the second control, the method further includes: The electronic device replaces the second control with a third control in response to an operation performed on the second control. The third control is used to indicate the electronic device to end voice recording. After voice recording is ended, the first area does not include the second subarea when the electronic device does not obtain the text converted from the voice.

In the foregoing embodiments, the first area may be divided into two subareas. The first subarea may be an area 11 involved in the embodiments, and the second subarea may be an area 12 involved in the embodiments. The first subarea may be used to display content related to a recording process, for example, a recording-related control. Voice-to-text conversion content may be displayed in the second subarea.

If the text converted from the voice is not displayed in the second subarea, when voice recording is paused, the second subarea may be closed, and the second subarea is not displayed. In this way, a user interface may be simplified.

With reference to the first aspect, in some embodiments, the method further includes: The electronic device displays a progress bar when the first voice is played back. The progress bar is used to indicate a voice playback progress. When a first identifier is displayed at a first location in the progress bar, the electronic device displays the first information in a third state, and displays a second information in the second area in a fourth state. The first identifier at the first location is used to indicate the electronic device to play back the voice recorded at the first moment. An input time of the second information is a second moment, and the second moment is later than the first moment.

In the foregoing embodiments, the progress bar may be a playback progress bar involved in the embodiments, the first identifier may be an identifier 1411 involved in the embodiments, the first location may be a location corresponding to currently played back audio in the playback progress bar, and the third state is different from the fourth state. For example, in this embodiment, the third state may be that no mask is added, and the fourth state may be that a mask is added. The second information may be non-recording information involved in the embodiments.

The electronic device may implement voice-text synchronization in a voice playback process. No mask is added to non-recording information that is recorded in a note at an earlier time than the currently played back voice. A mask is added to non-recording information that is recorded in a note at a later time than the currently played back voice, so that the non-recording information is displayed differently, to notify the user that the non-recording information to which the mask is added is not recorded in the note when the currently played back voice is recorded in the note.

With reference to the first aspect, in some embodiments, when the first identifier is displayed at the first location in the progress bar, the method further includes: The electronic device displays, in the first area, the text converted from the voice recorded at the first moment.

In the foregoing embodiments, the electronic device may further implement voice-text synchronization based on the voice-to-text conversion content in the first area. In other words, text information converted from a currently played back voice may be displayed in the first area, so that the user has a preview.

With reference to the first aspect, in some embodiments, after the displaying second information in the second area in a fourth state, the method further includes: The electronic device displays the second information in the third state in response to an operation performed on a fourth control.

In the foregoing embodiments, the fourth control may be a "Stop note playback animation" control involved in the embodiments. For example, a "Note playback animation" setting item 381 and "Stop note playback animation" control 351 may be included. The electronic device may implement disabling of a voice-text synchronization function by using the fourth control, and provide more options for the user.

With reference to the first aspect, in some embodiments, when the first identifier is displayed at the first location in the progress bar, the method further includes: The electronic device displays third information in the second area in a fifth state in response to a first operation performed at a second location in the progress bar. An input time of the third information is a third moment, and a voice recorded by the electronic device at the third moment is indicated at the second location.

In the foregoing embodiments, an example of the second location may be a location T involved in the embodiments, and a fifth state may be highlighting involved in the embodiments. The electronic device may further implement an advance preview in the voice playback process. A specific location in the progress bar is touched and held. When a voice corresponding to the location is input, an input text may be highlighted, to help the user have a preview.

With reference to the first aspect, in some embodiments, the method further includes: The electronic device displays Q-1 nodes in the progress bar when Q segments of voices are recorded after the first file is created. The Q-1 nodes divide the progress bar into Q subprogress bars, an i^{th} subprogress bar in the Q subprogress bars is used to indicate an i^{th} segment of voice in the Q segments of voices, and Q is an integer greater than or equal to 2. The electronic device plays back the i^{th} segment of voice when the first identifier is displayed in the i^{th} subprogress bar after an operation performed on a fifth control is detected.

In the foregoing embodiments, the fifth control may be a playback start control involved in the embodiments. The electronic device may separately record a plurality of segments of voice information (voices), and make the plurality of segments of voice information into one segment of long voice. The plurality of segments of voices can be continuously played back when the long voice is played back. The Q segments of voices indicate that the electronic device performs Q times of recording. After one time of recording is started, the electronic device may collect a sound signal, and may obtain one segment of voice information based on the collected sound signal after the time of recording is ended. To be specific, the electronic device may perform recording in different times (Q separated time periods), to obtain the Q segments of voices. Then, the electronic device may integrate the Q segments of voices, to obtain one segment of long voice. In this way, when the long voice is played back, the separately recorded Q segments of voices can be continuously played back.

With reference to the first aspect, in some embodiments, the method further includes: The electronic device selects L segments of voices in the Q segments of voices. L is an integer less than or equal to Q. When a sixth control is in a sixth state, in response to an operation performed on a seventh control, the electronic device deletes the L segments of voices, and deletes a text converted from the L segments of voices; or when the sixth control is not in a sixth state, in response to an operation performed on the seventh control, the electronic device deletes the L segments of voices, and reserves a text converted from the L segments of voices.

In the foregoing embodiments, the sixth control may be a select control 581b involved in the embodiments, and the seventh control may be a delete control 581c involved in the embodiments. The electronic device may provide a function of whether to delete, when deleting a voice, a text converted from the voice, so that the user can have a plurality of choices when deleting the voice.

With reference to the first aspect, in some embodiments, the method further includes: When the eighth control is in an eighth state, in response to an operation performed on a ninth control, the electronic device transmits, to another device, content in the second area and a text converted from the Q segments of voices; or when the eighth control is not in an eighth state, in response to an operation performed on the ninth control, the electronic device transmits content in the second area to another device.

In the foregoing embodiments, the eighth control may be a select control (for example, a select control 521b) involved in the embodiments, and the ninth control may be a "Share" control (for example, the "Share" control) involved in the embodiments. The electronic device may provide a function of whether to share, when sharing non-recording information recorded in the note, a text converted from a voice in the note, so that the user can have a plurality of choices when sharing information.

With reference to the first aspect, in some embodiments, the receiving entered first information specifically includes: The electronic device displays a first input tool in the first interface; and the electronic device receives the entered first information through the first input tool. The method further includes: A tenth control is further displayed when the first input tool is displayed; the electronic device switches the first input tool to a second input tool in response to an operation performed on the tenth control; and an eleventh control is further displayed when the second input tool is displayed. The eleventh control is used to trigger a switch from the second input tool to the first input tool.

In the foregoing embodiments, the first input tool may be a keyboard involved in the embodiments, the tenth control may be a "Handwrite" control involved in the embodiments, the second input tool may be a pen toolbar involved in the embodiments, and the eleventh control may be a keyboard switching control involved in the embodiments. The electronic device may quickly switch the keyboard to the pen toolbar based on the tenth control, or may implement a switch from the pen toolbar to the keyboard based on the eleventh control. In this way, the user enters the non-recording information by using different input tools.

With reference to the first aspect, in some embodiments, the method further includes: The electronic device changes a size of the second subarea from a first size to a second size in response to an operation performed on a twelfth control.

In the foregoing embodiments, the twelfth control may be an expand control or a collapse control involved in the embodiments. The electronic device may make the size of the second subarea adjustable, to provide more choices for the user.

According to a second aspect, this application provides an electronic device. The electronic device includes: one or more processors and a memory. The memory is coupled to the one or more processors, the memory is configured to store computer program code, the computer program code includes computer instructions, and the one or more processors invoke the computer instructions, to enable the electronic device to perform the method according to any one of the first aspect or the implementations of the first aspect.

In the foregoing embodiments, the electronic device may support voice-to-text conversion during recording, receive other information (for example, a text or a picture) entered by a user, and display the other information in a second area. In addition, a switch may be performed between enabling of a voice-to-text conversion function and disabling of the voice-to-text conversion function. To be specific, during recording, the voice-to-text conversion function may be enabled to convert a recording into text information, and the text information obtained through conversion is displayed in a first area. In this way, when the voice-to-text conversion function is enabled, the other information entered by the user may be received during recording. The voice-to-text conversion function may alternatively be disabled, i.e., when voice is being recorded, the recorded voice may not be converted into text information. In this way, when the voice-to-text conversion function is disabled, the other information entered by the user may be received during recording. The other information may also be referred to as non-recording information. In this way, information recording efficiency and voice-to-text conversion flexibility are improved.

According to a third aspect, an embodiment of this application provides a chip system. The chip system is applied to an electronic device, the chip system includes one or more processors, and the processor is configured to invoke computer instructions, so that the electronic device performs the method according to any one of the first aspect or the implementations of the first aspect.

In the foregoing embodiments, the electronic device may support voice-to-text conversion during recording, receive other information (for example, a text or a picture) entered by a user, and display the other information in a second area. In addition, a switch may be performed between enabling of a voice-to-text conversion function and disabling of the voice-to-text conversion function. To be specific, during recording, the voice-to-text conversion function may be enabled to convert a recording into text information, and the text information obtained through conversion is displayed in a first area. In this way, when the voice-to-text conversion function is enabled, the other information entered by the user may be received during recording. The voice-to-text conversion function may alternatively be disabled, i.e., when voice is being recorded, the recorded voice may not be converted into text information. In this way, when the voice-to-text conversion function is disabled, the other information entered by the user may be received during recording. The other information may also be referred to as non-recording information. In this way, information recording efficiency and voice-to-text conversion flexibility are improved.

According to a fourth aspect, an embodiment of this application provides a computer program product including instructions. When the computer program product runs on an electronic device, the electronic device is enabled to perform the method according to any one of the first aspect or the implementations of the first aspect.

In the foregoing embodiments, the electronic device may support voice-to-text conversion during recording, receive other information (for example, a text or a picture) entered by a user, and display the other information in a second area. In addition, a switch may be performed between enabling of a voice-to-text conversion function and disabling of the voice-to-text conversion function. To be specific, during recording, the voice-to-text conversion function may be enabled to convert a recording into text information, and the text information obtained through conversion is displayed in a first area. In this way, when the voice-to-text conversion function is enabled, the other information entered by the user may be received during recording. The voice-to-text conversion function may alternatively be disabled, i.e., when voice is being recorded, the recorded voice may not be converted into text information. In this way, when the voice-to-text conversion function is disabled, the other information entered by the user may be received during recording. The other information may also be referred to as non-recording information. In this way, information recording efficiency and voice-to-text conversion flexibility are improved.

According to a fifth aspect, an embodiment of this application provides a computer-readable storage medium, including instructions. When the instructions run on an electronic device, the electronic device is enabled to perform the method according to any one of the first aspect or the implementations of the first aspect.

In the foregoing embodiments, the electronic device may support voice-to-text conversion during recording, receive other information (for example, a text or a picture) entered by a user, and display the other information in a second area. In addition, a switch may be performed between enabling of a voice-to-text conversion function and disabling of the voice-to-text conversion function. To be specific, during recording, the voice-to-text conversion function may be enabled to convert a recording into text information, and the text information obtained through conversion is displayed in a first area. In this way, when the voice-to-text conversion function is enabled, the other information entered by the user may be received during recording. The voice-to-text conversion function may alternatively be disabled, i.e., when voice is being recorded, the recorded voice may not be converted into text information. In this way, when the voice-to-text conversion function is disabled, the other information entered by the user may be received during recording. The other information may also be referred to as non-recording information. In this way, information recording efficiency and voice-to-text conversion flexibility are improved.

### BRIEF DESCRIPTION OF DRAWINGS

FIG. 1A and FIG. 1B show example user interfaces in which an electronic device creates a new note;
FIG. 2-FIG. 7A, FIG. 7B, FIG. 7C, and FIG. 7D show a 1^{st} time of recording and example user interfaces involved in the 1^{st} time of recording;
FIG. 8A, FIG. 8B, FIG. 8C, and FIG. 8D show example user interfaces involved when voice-to text content is edited after a 1^{st} time of recording is ended;
FIG. 9A, FIG. 9B, and FIG. 9C-FIG. 12A, FIG. 12B, FIG. 12C, and FIG. 12D show a 2^{nd} time of recording and example user interfaces involved in the 2^{nd} time of recording;
FIG. 13-FIG. 17 show a group of example user interfaces involved in information viewing;
FIG. 18-FIG. 24 show a group of example user interfaces involved when an electronic device deletes information;
FIG. 25-FIG. 26, FIG. 27A-FIG. 27B, and FIG. 28-FIG. 29 show a group of example user interfaces involved when an electronic device shares information;
FIG. 30 is an example flowchart of an information processing method according to this application; and
FIG. 31 is a schematic structural diagram of an electronic device according to an embodiment of this application.

### DESCRIPTION OF EMBODIMENTS

Terms used in the following embodiments of this application are only intended to describe particular embodiments, and are not intended to limit this application. The singular expressions "one", "one type of", "the", "the foregoing", "that", and "this" used in this specification and the appended claims of this application are also intended to include plural expressions, unless otherwise specified in the context clearly. It should be further understood that the term "and/or" used in this application indicates and includes any or all possible combinations of one or more listed items.

The terms "first" and "second" mentioned below are merely intended for a purpose of description, and shall not be understood as an indication or implication of relative importance or implicit indication of the quantity of indicated technical features. Therefore, a feature limited by "first" and "second" may explicitly or implicitly include one or more features. In the descriptions of embodiments of this application, unless otherwise specified, "a plurality of" means two or more.

In a solution, an electronic device may record voice information through recording. During recording, other information, for example, one or more of text information (which may be referred to as a text in the following content), picture information (which may be referred to as a picture in the following content), or the like entered by a user may be further received.

However, in such an information recording manner, when the electronic device supports an input of the other information during recording, the electronic device does not support to simultaneously convert a recording into corresponding text information.

An embodiment of this application provides an information processing method. The information processing method may be used by an electronic device to generate a note. Information involved herein includes but is not limited to voice information, text information, or picture information. Involved information processing includes but is not limited to one or more of the following content: information recording, information viewing, and information management. Information recording includes: inputting the information, performing processing based on the input information, and using a processing result as content in the note. For example, input voice information is converted into text information, and input text information is edited, marked, or the like. Information management may further include: deleting the information, transmitting (sharing) the information, or the like.

**By implementing the information processing method, the electronic device may implement one or more of the following functions, and the following functions constitute no limitation.**

**Function 1:** During information recording, the electronic device may support voice-to-text conversion during recording, and receive other information (for example, a text or a picture) entered by a user. In addition, a switch may be performed between enabling of a voice-to-text conversion function and disabling of the voice-to-text conversion function. To be specific, during recording, the voice-to-text conversion function may be enabled to convert a recording into text information. In this way, when the voice-to-text conversion function is enabled, the other information entered by the user may be received during recording. Alternatively, the voice-to-text conversion function may be disabled, i.e., when voice is being recorded, the recorded voice may not be converted into text information. In this way, when the voice-to-text conversion function is disabled, the other information entered by the user may be received during recording. The other information may also be referred to as non-recording information.

**Function 2:** During information recording, the electronic device may separately record a plurality of segments of voice information (voices), and make the plurality of segments of voice information into one segment of long voice. The plurality of segments of voices can be continuously played back when the long voice is played back. Q segments of voices indicate that the electronic device performs Q times of recording. After one time of recording is started, the electronic device may collect a sound signal, and may obtain one segment of voice information based on the collected sound signal after the time of recording is ended. To be specific, the electronic device may perform recording in different times (Q separated time periods), to obtain the Q segments of voices. Then, the electronic device may integrate the Q segments of voices, to obtain one segment of long voice. In this way, when the long voice is played back, the separately recorded Q segments of voices can be continuously played back. Q is an integer greater than or equal to 2.

In some possible cases, after a Q^{th} time of recording is stopped, the electronic device may display a playback progress bar corresponding to the segment of long voice. The playback progress bar includes Q-1 nodes, and the playback progress bar is divided into Q segments (which may be referred to as Q subprogress bars). An i^{th} subprogress bar in the Q subprogress bars corresponds to an i^{th} segment of voice. A length of the i^{th} subprogress in the playback progress bar is directly proportional to a ratio of total duration of the i^{th} segment of voice to total duration of the long voice: When the ratio of the total duration of the i^{th} segment of voice to the total duration of the long voice is larger, it indicates that a proportion of the i^{th} segment of voice to the long voice is larger, and the length of the i^{th} subprogress bar in the playback progress bar is longer.

It should be understood that the long voice involved herein means that the voice includes more content than any of the plurality of segments of voice information, and may be considered as a set of the plurality of segments of voice information, instead of indicating that a time of the long voice is long. The total duration of the long voice is not limited in this embodiment of this application.

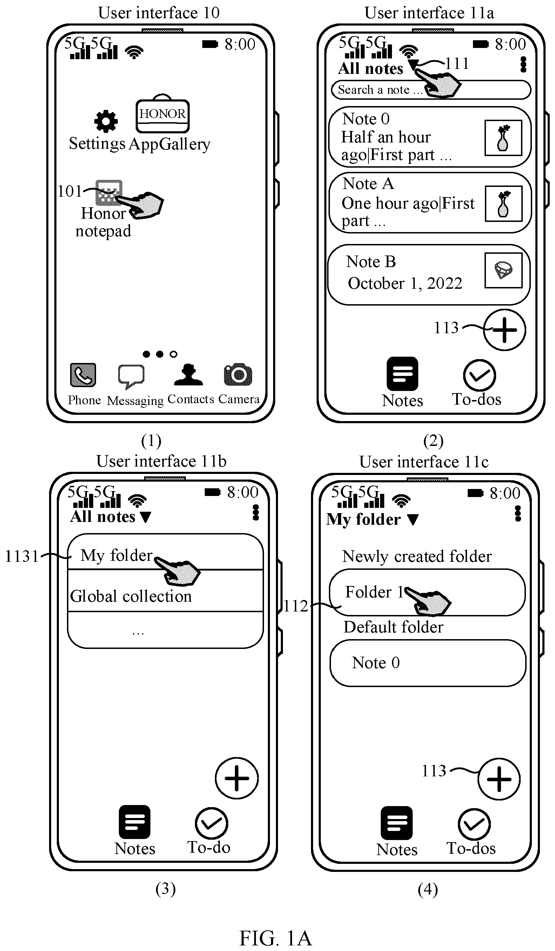

It should be further understood that, in a process in which the information is recorded to generate a note, another function is included in addition to Function 1 and Function 2. Function 1 and Function 2 may enable the electronic device to record the information more conveniently. For related content in such a scenario of information recording, refer to the following descriptions of FIG. 1A, FIG. 1B, and FIG. 3-FIG. 12A, FIG. 12B, FIG. 12C, and FIG. 12D. Details are not described herein.

**Function 3:** During information viewing, the electronic device may implement voice-text synchronization when playing back a recording. Voice-text synchronization includes: When the recording is played back, non-recording information (denoted as information A) corresponding to a voice that is played back is displayed in a state A, and non-recording information (denoted as information B) corresponding to a voice that is not played back is displayed in a state B. Herein, the information A and the information B are described by using an example in which the electronic device plays back a voice A (a recording time is a time A).

It should be understood that the time A may indicate a moment, or may indicate a time range.

When the time A indicates a moment, the information A is information whose input time is earlier than or equal to the time A, and the information B is information whose input time is later than the time A.

When the time A indicates a time range, the information A is information whose input time is earlier than a start time of the time A or whose input time is earlier than an end time of the time A, and the information B is information whose input time is later than the end time of the time A.

The time A may also be referred to as a timestamp corresponding to the voice A. The input time of the information A may be referred to as a timestamp corresponding to the information A. The input time of the information B may be referred to as a timestamp corresponding to the information B.

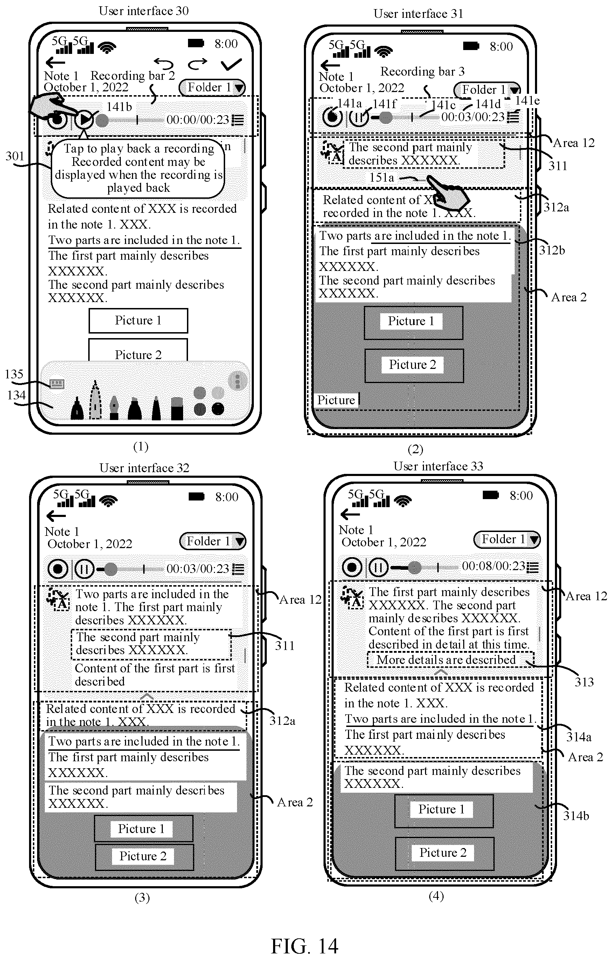

It should be understood that, when the information is viewed, another function is further included in addition to Function 3. Function 3 may enable a user to view the information more conveniently by using the electronic device. For related content in such a scenario of information viewing, refer to the following descriptions of FIG. 14-FIG. 17. Details are not described herein.

**Function 4:** During information management, the electronic device may delete information, share information, and the like. The deleting information includes: making a choice of deleting some or all of voice information recorded in a note. For example, a choice of deleting the voice information may be made. When the voice information is deleted, whether to delete text information corresponding to selected voice information may be further determined based on a user requirement. The sharing information includes: To-be-shared content in the note is transmitted to another terminal, and a sharing manner may be selected. In some possible cases, the to-be-shared content includes content in the note other than the voice information, or includes content in the note other than the voice information and text information converted from the voice information. In addition, a user may select, by using the electronic device, whether to use, as a part of the to-be-shared content, the text information converted from the voice information.

The sharing manner includes but is not limited to one or more of the following sharing manners:

Sharing manner 1: After the to-be-shared content in the note is converted into a picture, the to-be-shared content is transmitted to the another terminal in a form of a picture.

Sharing manner 2: After the to-be-shared content in the note is converted into a document, the to-be-shared content is transmitted to the another terminal in a form of a document.

Sharing manner 3: The to-be-shared content in the note is still transmitted to the another terminal in a form of a note.

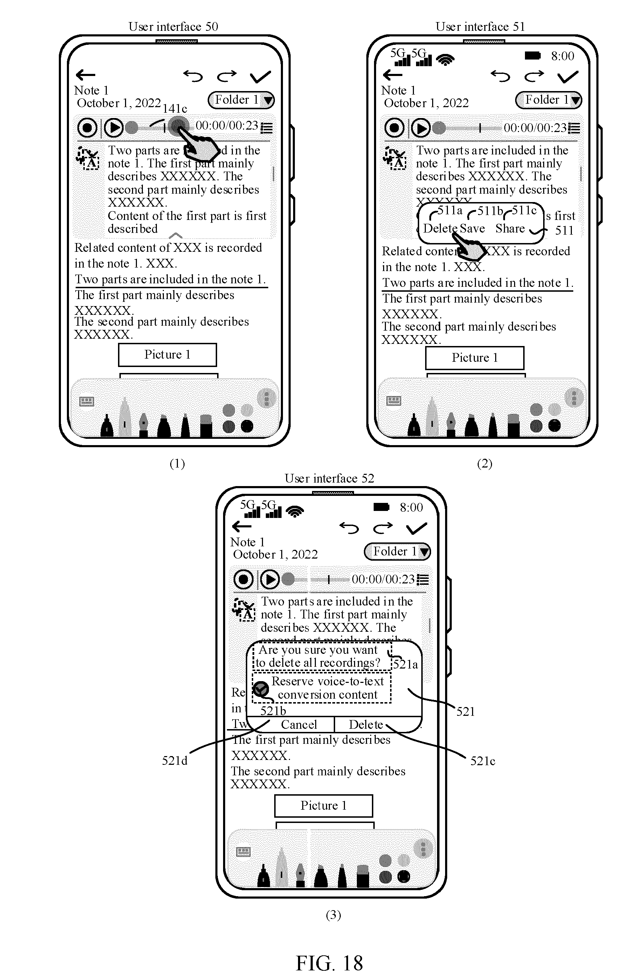

For related content in such a scenario of information management, refer to the following descriptions of FIG. 18-FIG. 29. Details are not described herein.

**First, related content involved in information recording is described.**

**FIG. 1A, FIG. 1B****, and** **FIG. 3****-****FIG. 12A****,** **FIG. 12B****,** **FIG. 12C****, and** **FIG. 12D** **describe a group of example user interfaces involved in information recording.**

Herein, two segments of voices are separately recorded in one note, and an example in which voice-to-text conversion and an input of other information are simultaneously performed is used for description in processes of two times of recording.

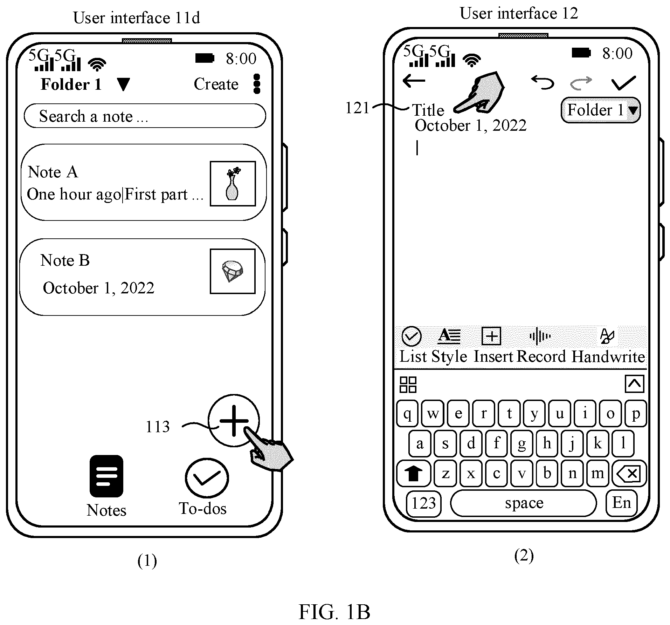

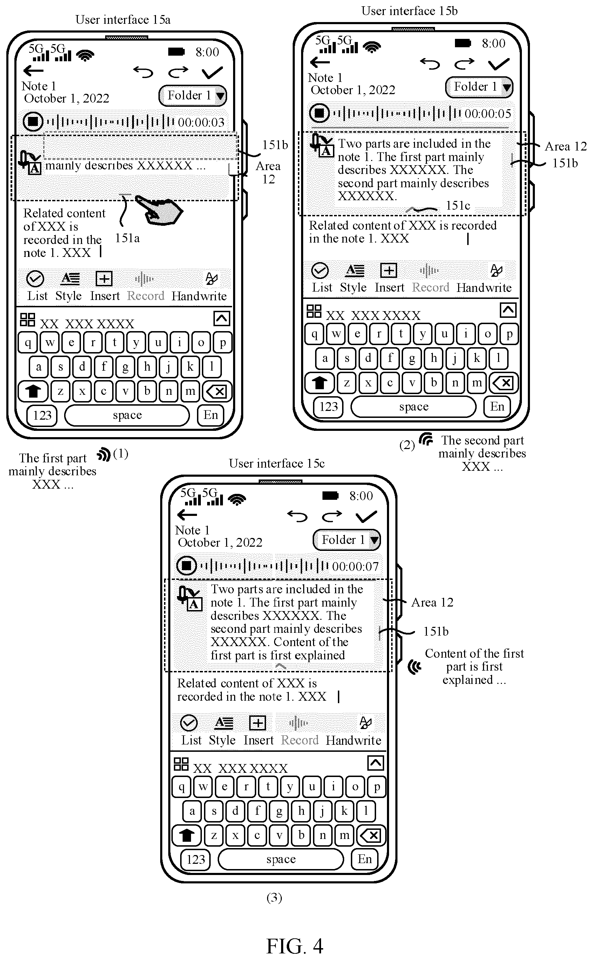

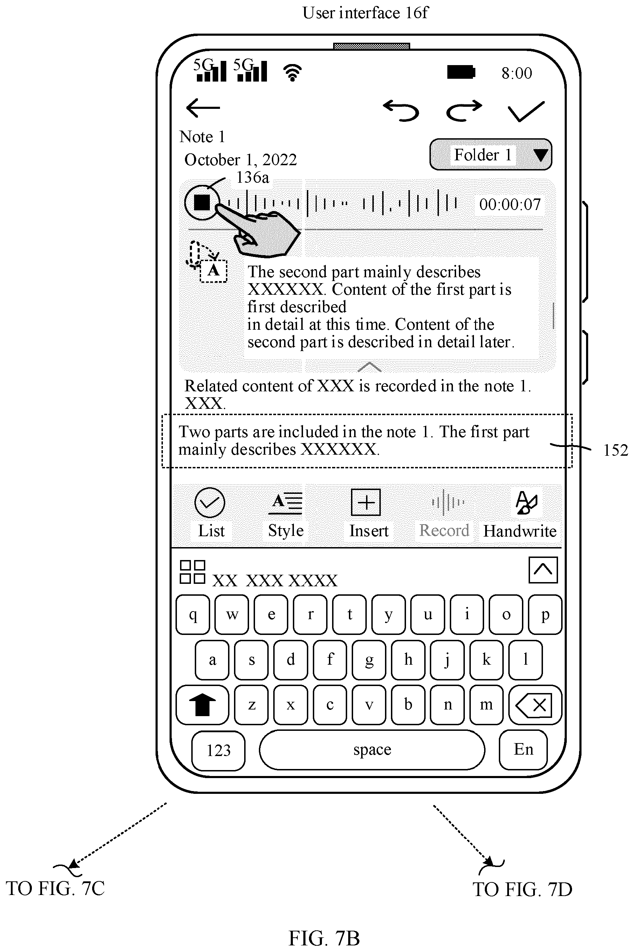

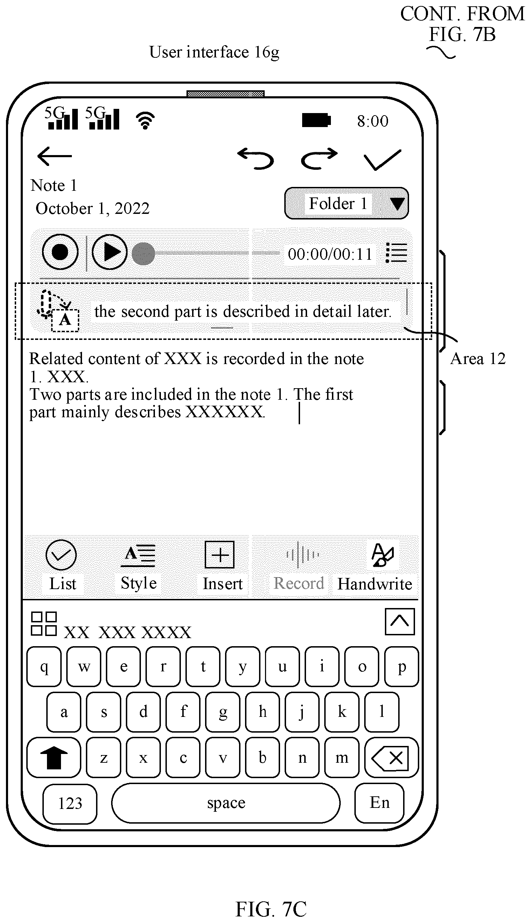

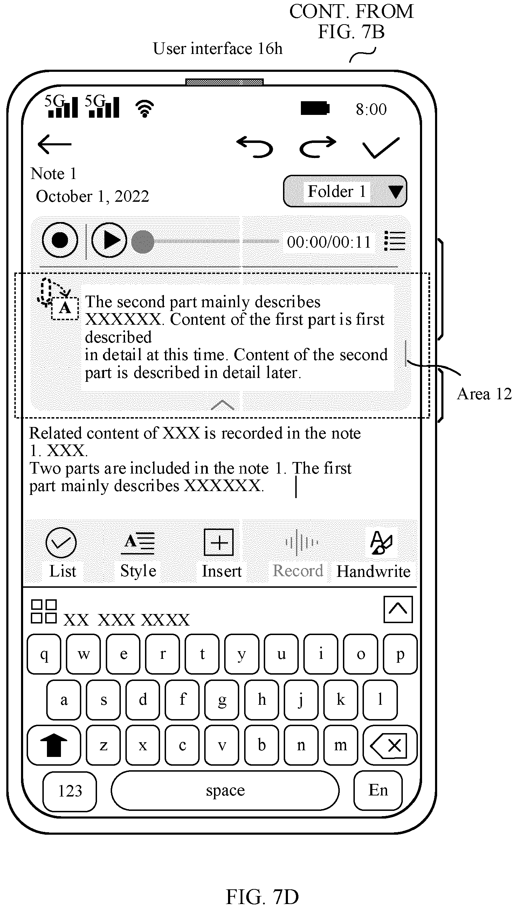

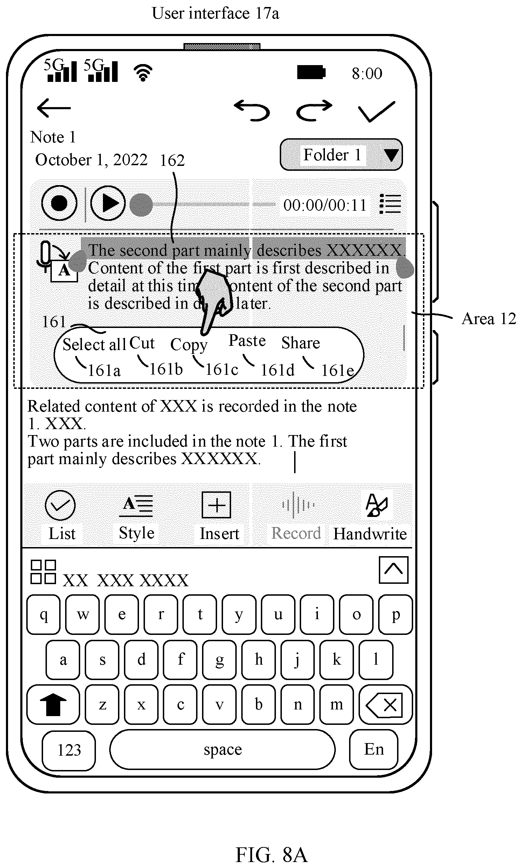

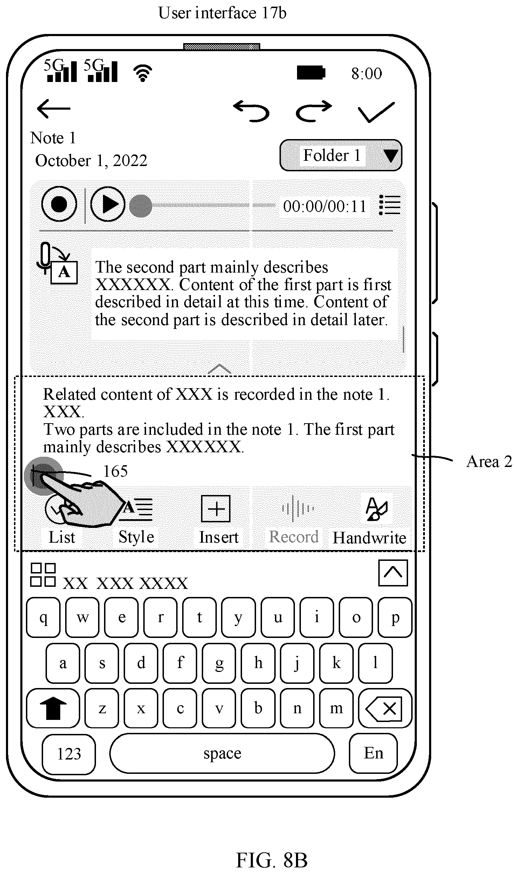

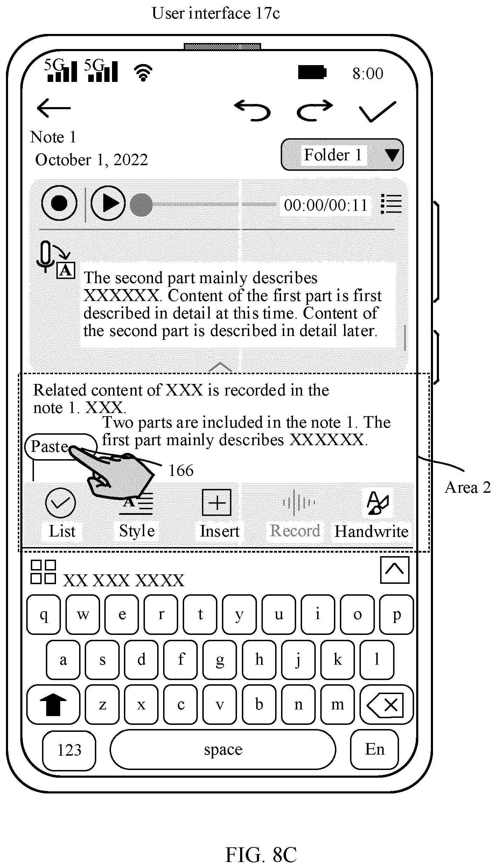

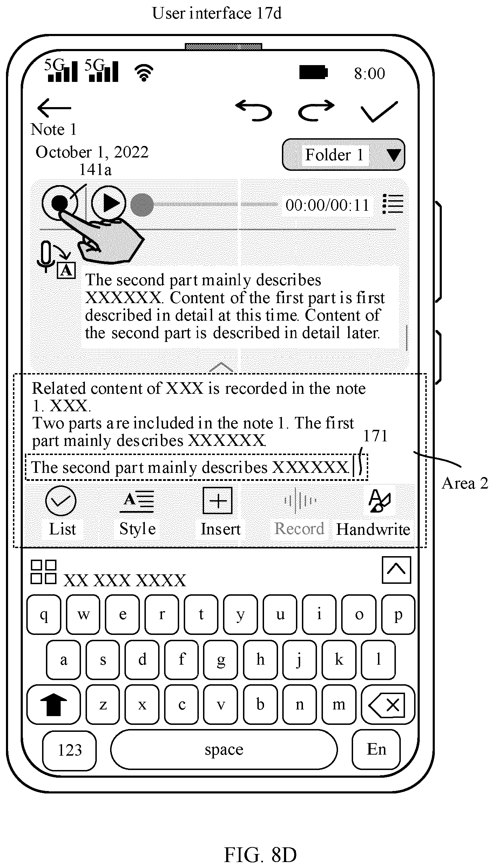

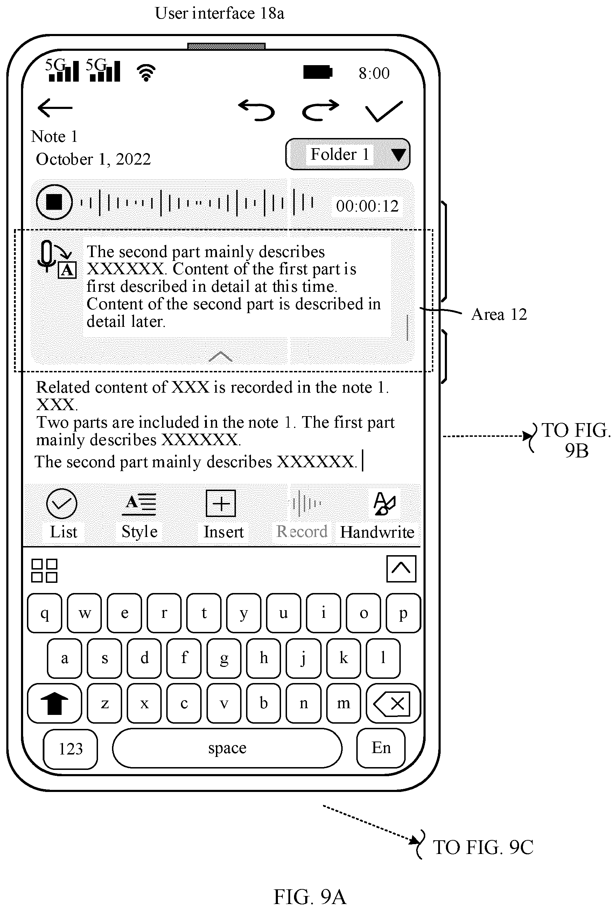

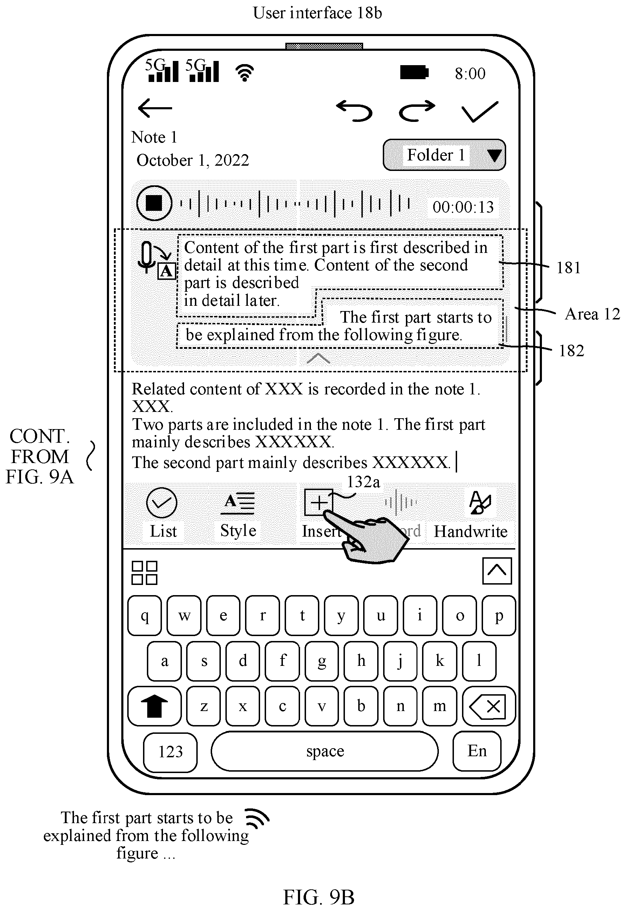

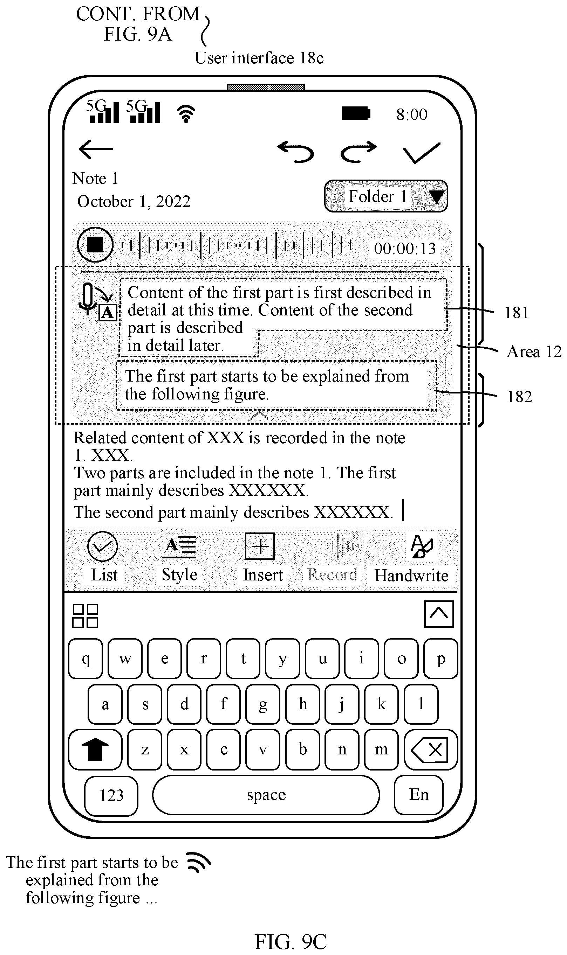

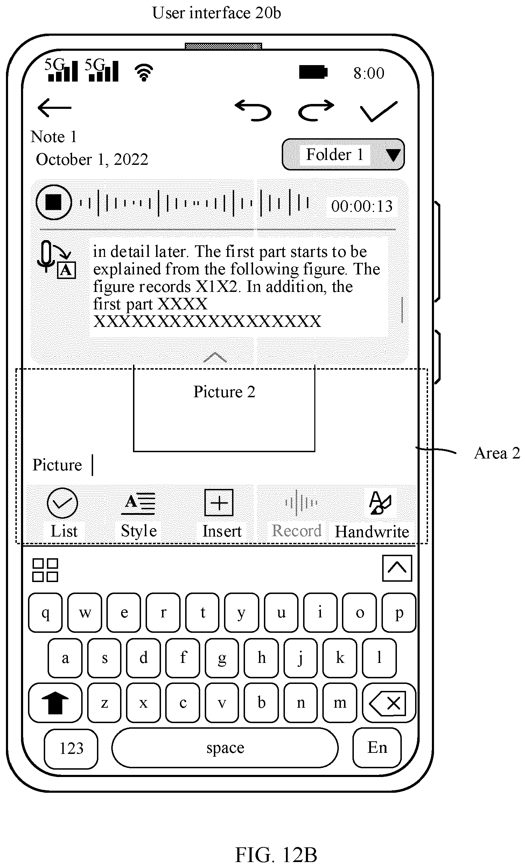

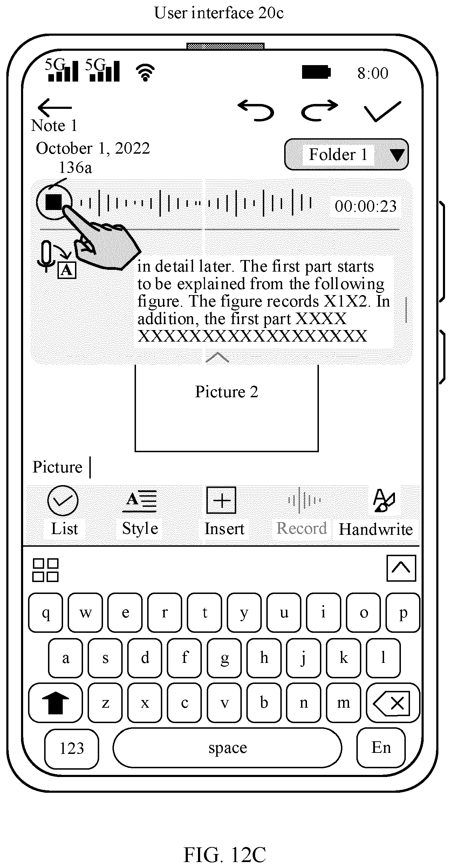

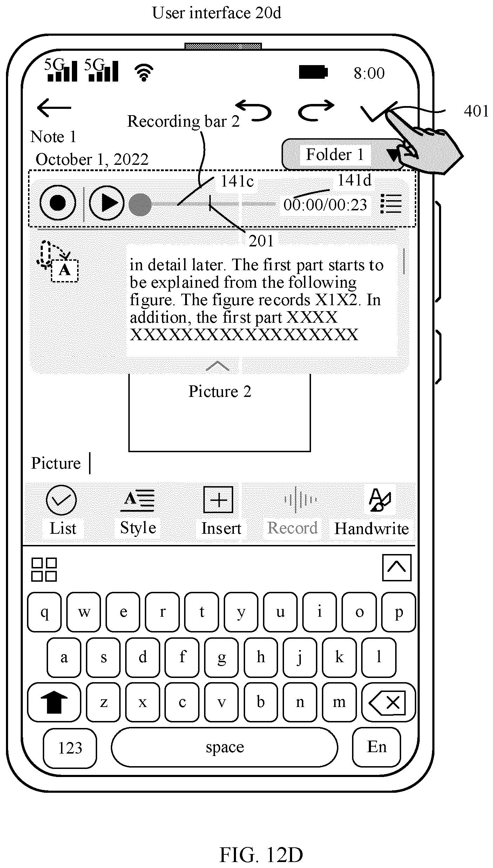

For related content of creating a new note by an electronic device, refer to the following descriptions of FIG. 1A and FIG. 1B. For a 1^{st} time of recording and related content involved in the 1^{st} time of recording, refer to the following descriptions of FIG. 4-FIG. 7A, FIG. 7B, FIG. 7C, and FIG. 7D. For related content of information recording by the electronic device after the 1^{st} time of recording is ended, refer to the following descriptions of FIG. 8A, FIG. 8B, FIG. 8C, and FIG. 8D. For a 2^{nd} time of recording and related content involved in the 2^{nd} time of recording, refer to the following descriptions of FIG. 9A, FIG. 9B, and FIG. 9C-FIG. 12A, FIG. 12B, FIG. 12C, and FIG. 12D.

**The following provides, based on** **FIG. 1A and FIG. 1B****, example descriptions of the related content of creating a new note by the electronic device.**

As shown in a user interface 10 shown in (1) in FIG. 1A, in response to an operation (for example, a tap operation) performed on a note application (for example, Honor notepad 101), the electronic device may enable the note application. In this case, the electronic device may display a user interface 11a shown in (2) in FIG. 1A.

As shown in (2) in FIG. 1A, the user interface 11a is an example user interface involved when the new note is created. The user interface 11a may include a control 111 corresponding to viewing all notes. In response to an operation performed on the control 111, the electronic device may display a user interface 11b in (3) in FIG. 1A.

The user interface 11b may include a control 1131. The control 1131 may trigger the electronic device to display a folder involved in storing a note.

In response to an operation performed on the control 1131, the electronic device may display all folders. All the folders include a folder created by a user by using the electronic device (for example, may be collectively referred to as a newly created folder), and further include a default folder in a system. Any non-empty folder may include at least one file, and each file may be referred to as a note. An empty folder includes no file. For example, as shown in a user interface 11c shown in (4) in FIG. 1A, the newly created folder may include a folder 1, and the default folder may be independent of the newly created folder. In response to an operation performed on an icon 112 corresponding to the folder 1, the electronic device may display all notes included in a file 1. For example, in this case, the electronic device may display a user interface 11d shown in (1) in FIG. 1B.

As shown in (1) in FIG. 1B, the user interface 11d includes a note involved in the file 1, including a note A and a note B.

The user interface 11a and the user interface 11c may further include a new creation control 113, and the new creation control 113 may be used to trigger creation of a new note. In response to an operation (for example, a tap operation) performed by the user on the new creation control 113 in the user interface 11c, the new note created by the electronic device belongs to a currently opened folder, and herein, belongs to the file 1.

It should be understood herein that, in the user interface 11a shown in (2) in FIG. 1A, because no folder is currently opened but all the notes are displayed, in response to an operation (for example, a tap operation) performed by the user on the new creation control 113 in the user interface 11a, the new note created by the electronic device does not belong to a folder created by the user by using the electronic device, and belongs to the default folder included in the system. Subsequently, the user can set the new note in another folder.

In response to the operation performed on the new creation control 113, the electronic device may create the new note. In this case, the electronic device may display a user interface shown in (2) in FIG. 1B.

As shown in (2) in FIG. 1B, the user interface 12 is an initialization interface involved after the new note is created. In response to an operation performed on a title input control 121, the electronic device may set a name of the newly created note. For example, the newly created note is named as a note 1 herein.

It should be understood that a manner of creating the new note shown in FIG. 1A and FIG. 1B is described as an example. In an actual application, a process of creating the new note may involve more or fewer interfaces and controls, and should not constitute a limitation on this embodiment of this application.

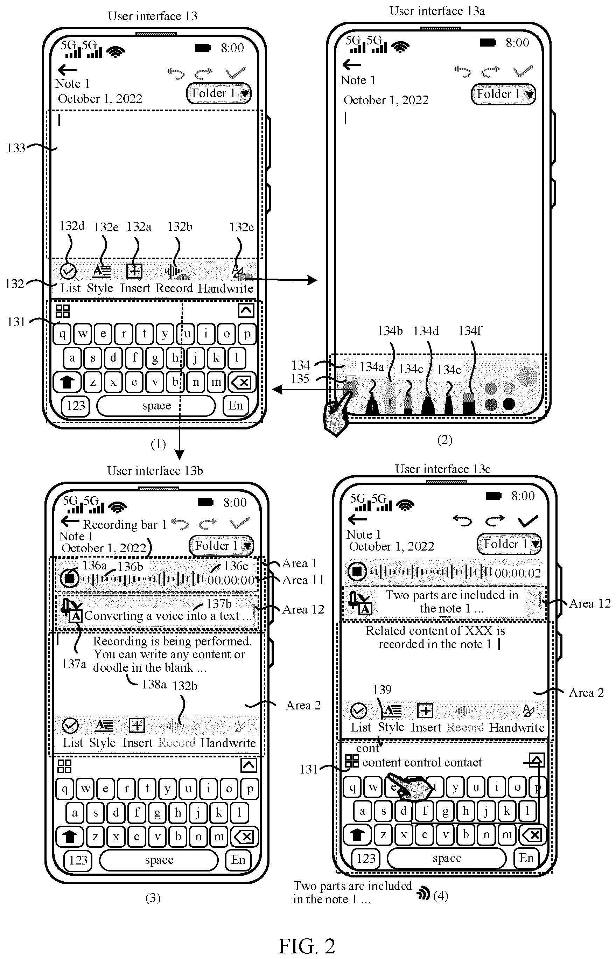

**The following provides, based on** **FIG. 2****-****FIG. 7A****,** **FIG. 7B****,** **FIG. 7C****, and** **FIG. 7D****, example descriptions of the 1^{st} time of recording and the related content involved in the 1^{st} time of recording.**

Information entered by the user is not recorded in the foregoing involved note 1. After entering the note 1, the electronic device may trigger enabling of a recording function by using a "Record" control. After the recording function is enabled, the electronic device may obtain two areas (an area 1 and an area 2) through division in a user interface. The area 1 is used to present recording-related content, and the area 1 may also be referred to as a recording area. The area 2 is used to present other information (for example, a text or a picture) entered by the user. The other information may be referred to as non-recording information. The area 2 may also be referred to as an editing area.

The recording area (area 1) may further include two subareas: a voice recording/playback area (denoted as an area 11) and a voice-to-text conversion area (denoted as an area 12). Related descriptions of the area 11 and the area 12 are as follows.

The voice recording/playback area (area 11) may include a functional control, for example, a recording bar, involved when a voice is recorded/played back (recorded or played back). The recording bar may be used to trigger functions such as recording a voice, pausing recording of a voice, playing back a voice, and pausing playback of a voice. The recording bar has different states. The recording bar in different states includes different components. The function of the recording bar varies with the state of the recording bar. For details, refer to descriptions of related content in the following. Details are not described herein.

The voice-to-text conversion area (area 12) may include voice-to-text conversion content, and may further include a conversion control. The conversion control is a control for enabling or disabling a voice-to-text conversion function provided by the electronic device. The voice-to-text conversion content includes a text converted from a recorded voice.

It should be understood that, in addition to the recording bar, the functional control that is involved when a voice is recorded/played back (recorded or played back) and that is included in the area 11 may include another control, for example, the conversion control. This is not limited in this embodiment of this application.

It should be understood that, an example in which the area 11 and the area 12 are displayed in an area (area 1) is used for description herein. In another possible case, the area 11 and the area 12 may be separated.

The editing area (area 2) is used to present the other information (non-recording information) such as a text or a picture entered by the user. The electronic device may provide an input tool for inputting information. The input tool may include a keyboard and a pen toolbar.

In some possible cases, the electronic device may display one input tool in a user interface. When the input tool is displayed, a shortcut control for switching to another input tool may be provided.

In this way, in some possible cases, when the electronic device performs recording, the user may view a recording in the area 11 by using the recording bar. During recording, the electronic device may further implement voice-to-text conversion, and display a text obtained through conversion in the area 12 for viewing by the user. During recording, the user may further implement a manual input by using the input tool, and display input information in the area 2 for viewing by the user. The manual input includes inputting a text, inserting a picture, or the like.

**For related content of the area 1, the area 2, and different input tools,**

### refer to the following example descriptions of FIG. 2.

As shown in (1) in FIG. 2, a user interface 13 is an example user interface displayed after the electronic device enters a note. In this case, the input tool provided by the electronic device by default is the keyboard. For example, a keyboard 131 may be displayed in the user interface 13. When the keyboard is displayed, the electronic device may further display a note toolbar (for example, a note toolbar 132).

The note toolbar can provide a convenient function (for example, the recording function) entry when the user records information. The note toolbar 132 may include an "Insert" control 132a, a "Record" control 132b, and a "Handwrite" control 132c. The "Insert" control 132a may be used to trigger an input of information such as a picture or a video into the user interface 13 for display. The "Record" control 132b may be used to trigger enabling of the recording function. The "Handwrite" control 132c may be used to trigger switching of the input tool from the keyboard 131 to the pen toolbar. In addition to the "Insert" control 132a, the "Record" control 132b, and the "Handwrite" control 132c, the note toolbar may further include another control, for example, may further include a list creation control 132d and a style setting control 132e.

The user interface 13 may further include an editing area 133, and the editing area 133 may be used to display non-recording information entered by the user. For example, the user may enter, by using the keyboard 131, text information into the editing area 133 for display, or may insert, by using the "Insert" control 132a, information such as a picture for an input into the editing area 133 for display.

In response to an operation (for example, a tap operation) performed on the "Handwrite" control 132c, the electronic device switches the input tool from the keyboard 131 to the pen toolbar. As shown in (2) in FIG. 2, the pen toolbar may be, for example, a pen toolbar 134 displayed in a user interface 13a. The pen toolbar 134 may include different pens such as a pen 134a-a pen 134f. The pen may be used to make a mark in the editing area, for example, adding an underline or drawing a circle. The user interface 13a may further include a keyboard switching control 135. The keyboard switching control 135 may be used to trigger the electronic device to switch the input tool from the pen toolbar to the keyboard.

In some possible cases, the keyboard switching control 135 may be used as a shortcut control in the pen toolbar 134.

In response to an operation (for example, a tap operation) performed on the "Record" control 132b in a state A1, the electronic device may enable the recording function, and the area 1 and the area 2 that are involved above are obtained through division in the user interface. In this case, the electronic device may switch a state of the "Record" control 132b from the state A1 to a state B1. The "Record" control 132b in the state B1 may indicate that the recording function is enabled, and the "Record" control 132b in the state A1 may indicate that the recording function is disabled. The state of the "Record" control 132b in the user interface 13 is the state A1, and the state B1 is another state different from the state A1. As shown in (3) in FIG. 2, the "Record" control 132b in a user interface 13b is grayed. In other words, a grayed state is the state B1. In response to an operation (for example, a tap operation) performed on the "Record" control 132b in the state B1, the electronic device may disable the recording function, and update the state of the "Record" control 132b from the state B1 to the state A1.

As shown in the user interface 13b shown in (3) in FIG. 2. When the state of the "Record" control 132b is the state B1, the electronic device may obtain the area 1 and the area 2 through division in the user interface. It may be understood herein that the area 2 is a new editing area.

The area 1 may be divided into the area 11 and the area 12.

The area 11 may include a recording bar (which may also be referred to as a recording bar 1) in a state 1. The recording bar 1 may include a "Pause recording" control 136a, a recording status bar 136b, and corresponding recording duration 136c when a voice is recorded. The recording duration 136c may be total duration of all recorded voices. The "Pause recording" control 136a is used to indicate that a current terminal has started recording. The recording status bar 136b may reflect a magnitude of energy of a sound signal collected by the electronic device. When the energy is larger, it indicates that the recording status bar 136b may change to a larger extent. When the energy is smaller, it indicates that the recording status bar 136b may change to a smaller extent. The recording duration 136c may be used to indicate the total duration of all the recorded voices.

The area 12 may include a conversion control 137a in a state C, and the conversion control 137a in the state C may be represented by a solid line. The conversion control 137a in the state C may indicate that the electronic device enables the voice-to-text conversion function. The area 12 does not display text information obtained through voice-to-text conversion. When the voice-to-text conversion function is enabled, the electronic device may further display prompt information 137b. The prompt information 137b may be used to notify that the electronic device enables the voice-to-text conversion function. For example, the prompt information 137b may be a prompt text: "Converting a voice into a text". When the voice-to-text conversion function is enabled, the electronic device may process the collected sound signal to obtain a voice, convert the voice, and display, in the area 12, a text obtained through conversion.

In some other possible cases, the recording duration 136c may not be used to indicate the total duration of all the recorded voices, and may be used to indicate total duration of a segment of voice that is being recorded.

The area 2 is used to present input non-recording information such as a text or a picture. When no non-recording information is displayed in the area 2, prompt information 138a may be displayed. The prompt information 138a may be used to notify the user that recording is being performed and information may be input into the area 2. The prompt information 138a may be a text prompt: "Recording is being performed. You can write or doodle in the blank".

When recording is started and the voice-to-text conversion function is enabled, during recording, the electronic device may further implement voice-to-text conversion, and display a text obtained through conversion in the area 12 for viewing by the user. During recording, the user may further implement a manual input by using the input tool, and display input information in the area 2 for viewing by the user. The manual input includes inputting a text, inserting a picture, or the like. As shown in a user interface 13c in (4) in FIG. 2, after recording is performed, the electronic device may collect a sound signal of the user or in an environment, and convert the sound signal into a voice. Content of the sound signal is "The note includes two parts". In addition, the voice may be converted into a text, and the text is displayed in the area 12, and non-voice information entered by the user is received. For example, the non-voice information may be input, for display, by the user into the area 2 by using the keyboard 131 or a tool in the pen toolbar 134. The non-voice information may include text information and information 139 that are input into the area 2. The information 139 is "content".

The electronic device may be further set to disable the voice-to-text conversion function. In this way, after recording is started, a recorded voice may not be converted into text information, but non-recording information entered by the user may be received during recording.

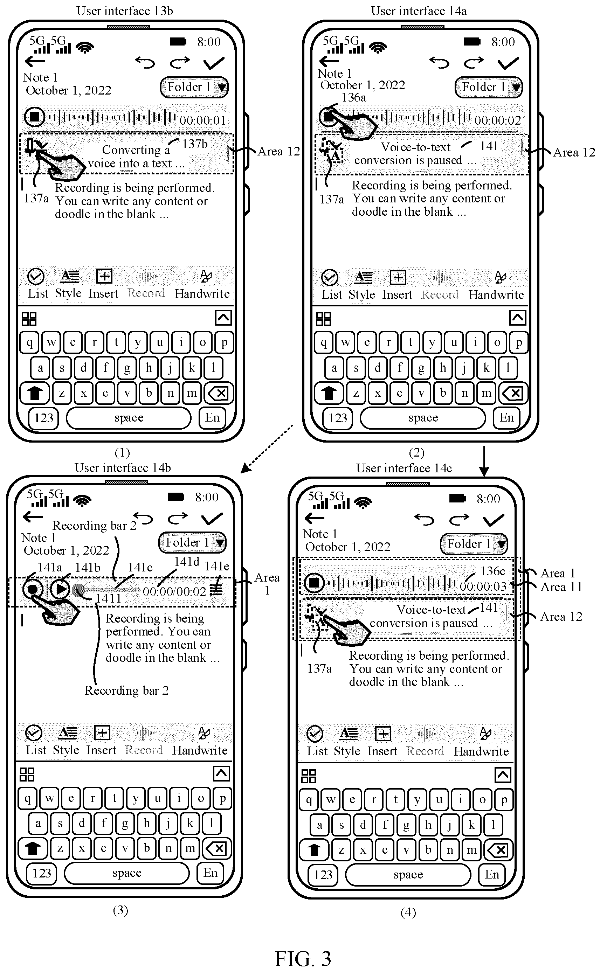

**For content involved when the voice-to-text conversion function is disabled, refer to the following example descriptions of** **FIG. 3****.**

As shown in the user interface 13b in (1) in FIG. 3, in response to an operation (for example, a tap operation) performed on the conversion control 137a (in the state C), the electronic device may disable the voice-to-text conversion function, and update a state of the conversion control 137a from the state C to a state D. The state D is different from the state C. When the prompt information 137b is displayed in the area 12, it indicates that the electronic device does not obtain the voice-to-text conversion content. In this case, in response to the operation (for example, the tap operation) performed on the conversion control 137 (in the state C), the electronic device may no longer display the prompt information 137b, but display prompt information 141. The prompt information 141 is used to notify the user that the voice-to-text conversion function is disabled.

As shown in (2) in FIG. 3, a user interface 14a is an example user interface involved when the voice-to-text conversion function is disabled. The prompt information 141 may be displayed in the area 12, to indicate that the electronic device disables the voice-to-text conversion function. For example, prompt content of the prompt information may be "Voice-to-text conversion is paused". In this case, the conversion control 137a (in the state D) may be represented by a dashed line. In some possible cases, in addition to being represented by a solid line, the state D may be represented in another form. For example, a color is changed, or graying is performed. This is not limited in this embodiment of this application.

In some embodiments, after the recording function is enabled, when recording is paused, if the area 12 does not include a text obtained through voice-to-text conversion, the electronic device may no longer display the area 12. In this case, the area 1 may include only the area 11. For example, in response to an operation performed on the "Pause recording" control 136a in the user interface 14a, the electronic device may pause recording, and display a user interface 14b shown in (3) in FIG. 3. A state 2 is a state in which recording is paused after the recording function is enabled.

As shown in (3) in FIG. 3, the user interface 14b is an example user interface involved after recording is paused. In this case, the area 1 includes only a recording bar 2. In some possible cases, the recording bar 2 may include a recording start control 141a, a playback start control 141b, a playback progress bar 141c, a playback time indicator 141d, and a voice menu control 141e. The recording start control 141a may be used to trigger the electronic device to start recording again. The playback start control 141b may be used to trigger the electronic device to play back a recorded voice. The playback progress bar 141c may be used to indicate a current voice playback progress. The playback time indicator 141d is used to indicate a current playback time and total duration of all voices. The voice menu control 141e is used to trigger the electronic device to display and manage all recorded voices. All the voices include all voices recorded in the note 1. When all the voices recorded in the note 1 is Q (an integer greater than or equal to 2) segments of voices, the electronic device may integrate the Q segments of voices into a segment of long voice, and total duration of the Q segments of voices is total duration of the long voice. In this case, the playback progress bar 141c may further include Q-1 nodes, and the playback progress bar 141c is divided into Q segments (which may be referred to as Q subprogress bars). An i^{th} subprogress bar in the Q subprogress bars corresponds to an i^{th} segment of voice. For descriptions of a node and related content of the node, refer to the following descriptions of FIG. 12D. Details are not described herein.

It should be understood that the playback progress bar 141c may be used to indicate the current voice playback progress: The playback progress bar 141c may include an identifier 1411. If the identifier 1411 is at a location A1 in the playback progress bar 141c, it indicates that a voice corresponding to the location A1 is played back.

It should be understood herein that, in the user interface 14a shown in (2) in FIG. 3, recording of a voice may be paused in response to an operation performed on the "Pause recording" control 136a. The user interface 14b shown in (3) in FIG. 3 is displayed to indicate that a recording process may be paused. When the recording process is paused, the area 12 may be closed if no text converted from the voice is displayed in the area 12. Actually, in this embodiment of this application, a process of a 1^{st} time of recording is not ended herein. A possible display manner includes: After the user interface 14a shown in (2) in FIG. 3 is displayed, the user does not operate the control 136a in the user interface 14a. Therefore, the electronic device continues recording, and displays a user interface 14c shown in (4) in FIG. 3.

In some possible cases, when the electronic device records the i^{th} segment of voice in the Q segments of voices, start recording duration corresponding to the i^{th} segment of recording may be end recording duration of the (i-1)^{th} segment of voice, or end recording duration of the (i-1)^{th} segment of voice plus 1. In this case, a time correspondingly displayed for recording duration 136c when the electronic device completes recording of a Q^{th} segment of voice is the total duration of the Q segments of voices. For example, as shown in (3) in FIG. 3 and (4) in FIG. 3, as shown in the user interface 14b in (3) in FIG. 3, end recording duration corresponding to a voice recorded by the electronic device is 2s. When the recording start control 141a is tapped to record a next segment of voice, recording duration 136c shown in (4) in FIG. 3 indicates that start recording duration is 3s or may be 2s. This is not limited in this embodiment of this application.

In some other possible cases, when the electronic device records the i^{th} segment of voice in the Q segments of voices, the start recording duration corresponding to the i^{th} segment of recording may start from a 0th second. In this case, the recording duration 136c may not be used to indicate total duration of all the recorded voices, or may be used to indicate total duration of a segment of voice that is being recorded.

It should be understood that when all the voices recorded in the note 1 are one segment of voice, the playback progress bar 141c does not include a node. For example, as shown in the user interface 14b in (3) in FIG. 3, because only a first segment of voice is recorded in this case, the playback progress bar 141c does not include a node.

It should be further understood that the recording bar 2 shown in (3) in FIG. 3 is merely an example for description. In an actual application, the recording bar 2 may further include more or fewer components. A form of each component may be the same as or different from that shown in the figure. This is not limited in this embodiment of this application.

In response to an operation (for example, a tap operation) performed on the recording start control 141a, the electronic device may be triggered to record a segment of new voice, and the area 1 is divided into the area 11 and the area 12. In this case, the electronic device may display the user interface shown in (4) in FIG. 3.

As shown in (4) in FIG. 3, the user interface 14c is an example user interface involved when the electronic device records a segment of new voice. The user interface 14c may include the area 1, and the area 1 includes two subareas (the area 11 and the area 12). In this case, the area 11 may include the recording bar (recording bar 1) in the state 1, to notify the user that the electronic device is recording a voice currently.

In some possible cases, if the voice-to-text conversion function of the electronic device is disabled before the operation performed on the recording start control 141a is detected, the voice-to-text conversion function of the electronic device is still disabled after the operation performed on the recording start control 141a is detected. For example, in the user interface 14c, when the electronic device starts to record a segment of new voice, the conversion control in the area 12 is in a dashed line state (the state D), it indicates that the voice-to-text conversion function is disabled. If the area 12 does not include the text converted from the voice, the electronic device may further display the prompt information 141, to notify the user that the voice-to-text conversion function is disabled. In response to an operation (for example, a tap operation) performed on the conversion control 137a in the state D, the electronic device may enable the voice-to-text conversion function.

In some possible cases, a size of a voice-to-text conversion area (area 12) may be adjusted, and the size of the area 12 may be switched between a size 1 and a size 2. The size 1 is less than the size 2. In addition, the voice-to-text conversion area supports to perform display through sliding. A text converted from a most recently recorded voice may be displayed after all words in the area 12. A maximum quantity of complete characters that can be displayed in the voice-to-text conversion area is W. When W characters are displayed in the voice-to-text conversion area, each time E new characters are added, E original characters (which are displayed) may not be displayed or cannot be completely displayed in the voice-to-text conversion area. W is an integer greater than or equal to 1, and E is an integer less than or equal to W. Values of W are different when the size of the voice-to-text conversion area is the size 1 and the size 2. More voice-to-text conversion content may be displayed when the size is the size 2. The voice-to-text conversion content herein may include a text obtained through voice-to-text conversion and a punctuation mark added by the electronic device.

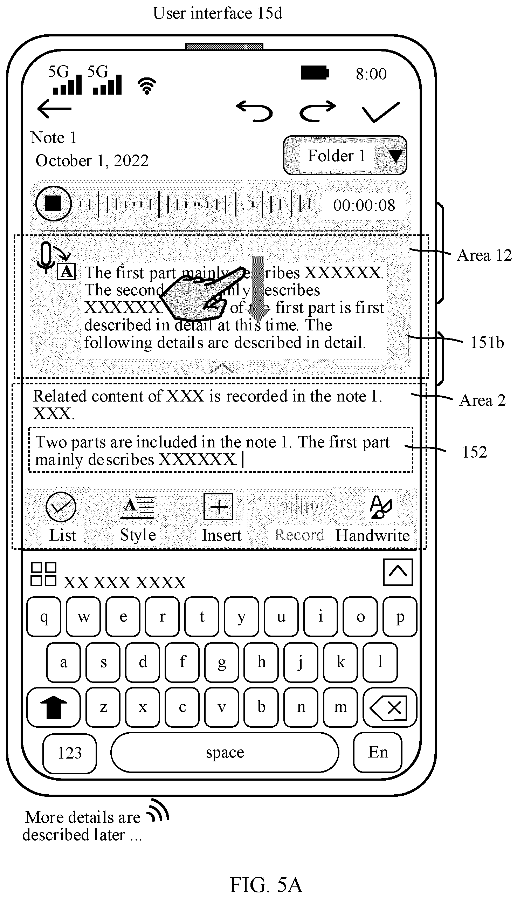

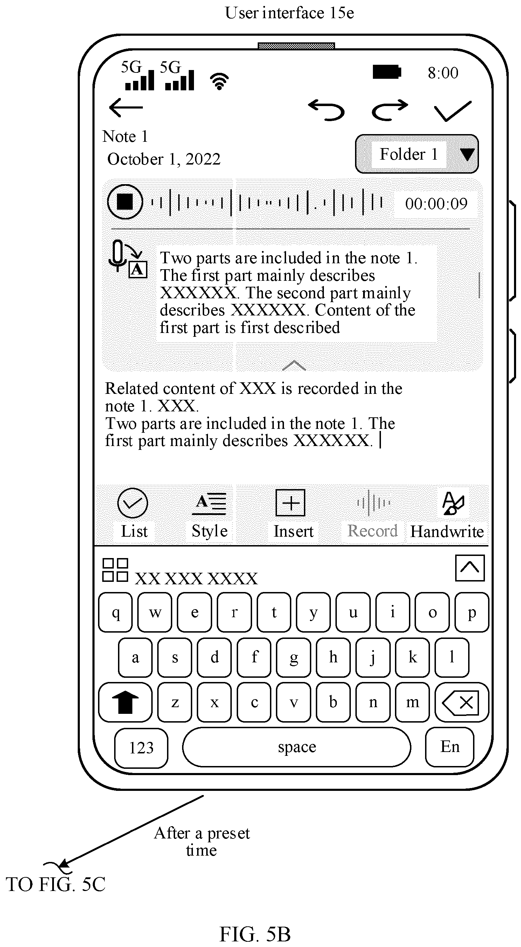

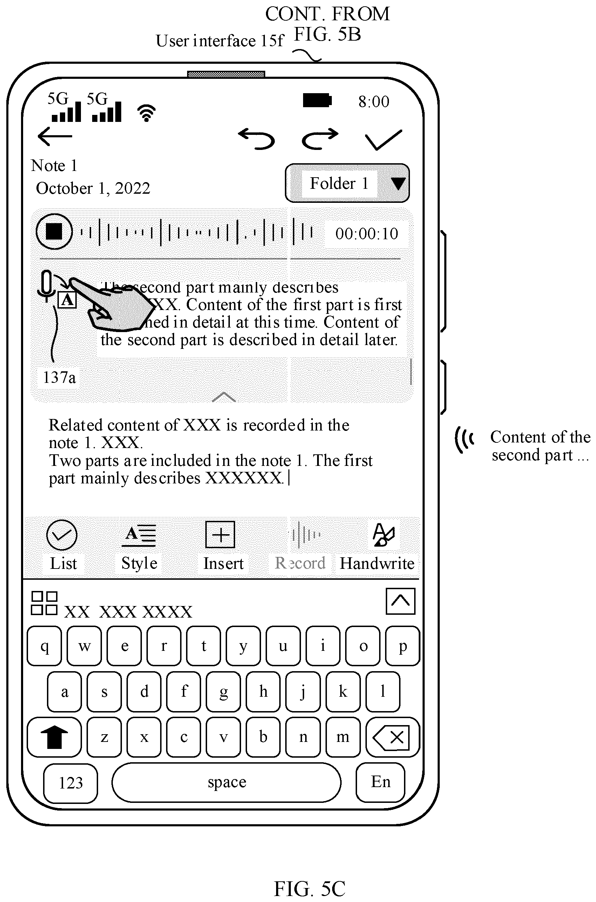

**For related content of a change of the size of the voice-to-text conversion area (area 12) and text display, refer to the following descriptions of** **FIG. 4** **and** **FIG. 5A****,** **FIG. 5B****, and** **FIG. 5C****.**

As shown in (1) in FIG. 4, in a user interface 15a, the electronic device may record a voice. For example, voice content recorded in this case may be "The first part mainly describes XXX". In addition, the electronic device may display, in the voice-to-text conversion area (area 12), the text converted from the voice. In this case, the user interface 15a displays an example area 12 whose size is the size 1. A line of characters may be completely displayed in the area 12, and a line of characters may be incompletely displayed. In some possible cases, the electronic device may add a mask to the incompletely displayed line of characters, so that the incompletely displayed line of characters are "partially hidden and partially visible". In this case, a line of characters may always be completely displayed in the area 12. Each time E new characters are added, the E new characters may be completely displayed in the area 12, and first E original characters (which are displayed) may be slided upward by one line to be incompletely displayed.

The area 12 whose size is the size 1 may further include an expand control 151a and a slide control 151b. The expand control 151a may be used to switch the size of the area 12 from the size 1 to the larger size 2. The slide control 151b may be used to indicate that the area 12 supports to perform display through sliding.

In response to an operation (for example, a tap operation) performed on the expand control 151a, the electronic device may expand the area 12, and change the size to the size 2. In this case, the electronic device may display a user interface shown in (2) in FIG. 4.

As shown in (2) in FIG. 4, the user interface 15b is an example user interface after the area 12 is expanded. The area 12 whose size is the size 2 may include a collapse control 151c. The collapse control 151c may be used to trigger a change of the size of the area 12 from the size 2 to the size 1.

In some possible cases, when the size of the area 12 is the size 2, the size of the area 12 may be set to a size of 1/3 of a mobile phone screen or another size. This is not limited in this embodiment of this application.

As shown in (2) in FIG. 4, the electronic device continues to collect a sound signal. Content of the sound signal is "The second part mainly describes XXXX". Then, a voice is obtained based on the sound signal, the voice is converted into a text (text 1), and the text is displayed in the area 12 (whose size is the size 2). Subsequently, the electronic device may continue to convert the recorded voice into a text, and display the text in the area 12, for example, as shown in the user interface 15c shown in (3) in

FIG. 4.

As shown in (3) in FIG. 4, the electronic device continues to collect a sound signal. Content of the sound signal is "Content of the first part is first explained". Then, a voice is obtained based on the sound signal, the voice is converted into a text (text 2), and the text is displayed in the area 12 (whose size is the size 2). In this case, the text 2 is displayed after the text 1 involved above. In this case, compared with the area 12 before the text 2 is displayed, the area 12 after the text 2 is displayed includes one newly added line of text. Therefore, a location of the slide control 151b may be moved downward. The location of the slide control 151b may correspond to a location of a newly added character: When the newly added character is later in the area 12, the slide control is lower.

In some possible cases, a text displayed in the area 12 is a text converted from a voice whose recording time is later. The area 12 may support to perform display through sliding, and display a text converted from a voice whose recording time is earlier. As shown in FIG. 5A, the electronic device continues to collect a sound signal, converts a voice obtained based on the sound signal into a text, and display the text in the area 12. For example, content of the sound signal is "More details are described later". In response to an operation 1 (for example, a slide-down operation) in the area 12, the electronic device may display a text converted from a voice whose time is earlier. Before the operation 1 is detected, the text converted from the voice whose time is earlier may not be displayed in the area 12. For example, in this case, the electronic device may display a user interface 15e shown in FIG. 5B.

It should be understood herein that, a manner of displaying, in the area 12, the text converted from the voice whose time is earlier may be another operation different from the operation 1 in the area 12 shown in FIG. 5A. For example, the another operation may include: dragging the slide control 151b upward. This is not limited in this embodiment of this application.

As shown in FIG. 5B and FIG. 5C, after the operation 1 is detected, no operation in the area 12 is detected again within a preset time (for example, 1s). In this case, the electronic device may continue to display, in the area 12, the text converted from the latest recorded voice. In this case, a user interface displayed by the electronic device may be updated from the user interface 15e to a user interface 15f shown in FIG. 5C.

As shown in FIG. 5C, the electronic device may continue to collect a sound signal, and obtain a voice based on the sound signal. The electronic device may continue to display, in the area 12, a text converted from the latest recorded voice. For example, content of the sound signal herein may be "Content of the second part".

It should be understood that in the foregoing content, a character may be incompletely displayed in the area 12, and a mask is added to the incompletely displayed character. In some possible cases, only a character that can be completely displayed may be displayed in the area 12, or no mask may be added. This case may be reflected in the area 12 in subsequent accompanying drawings. Details are not described herein.

In some possible cases, in addition to display a text through sliding, the voice-to-text conversion area (area 12) may support another function. For example, processing, for example, editing (including copying or pasting) or sharing may be performed on a text in the area 12. Word information 152 shown in FIG. 5A is obtained after the text in the area 12 is copied and pasted.

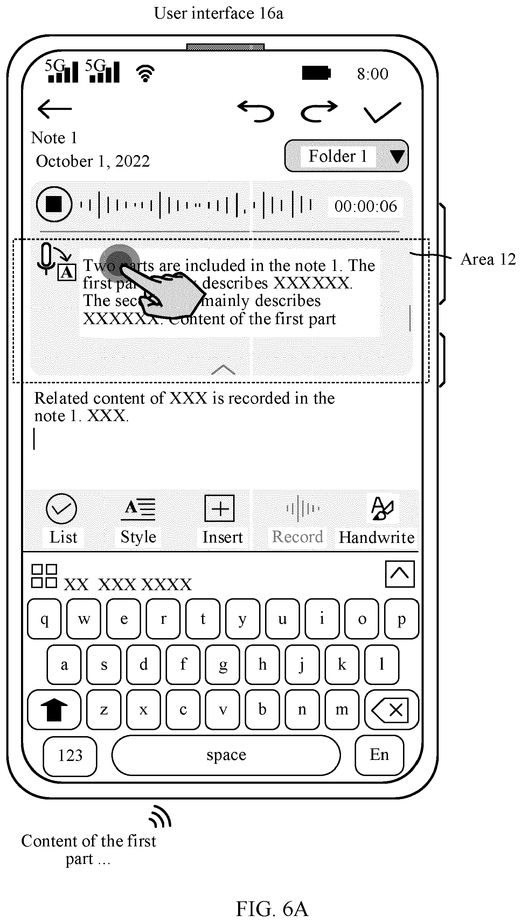

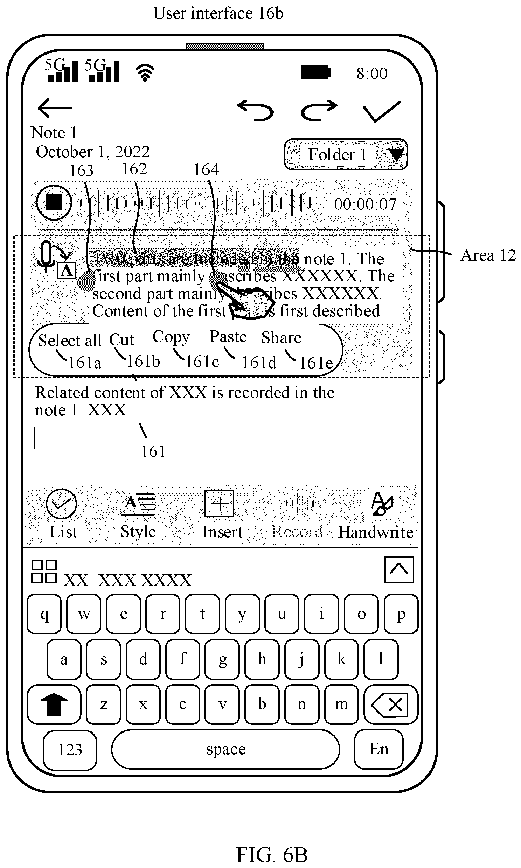

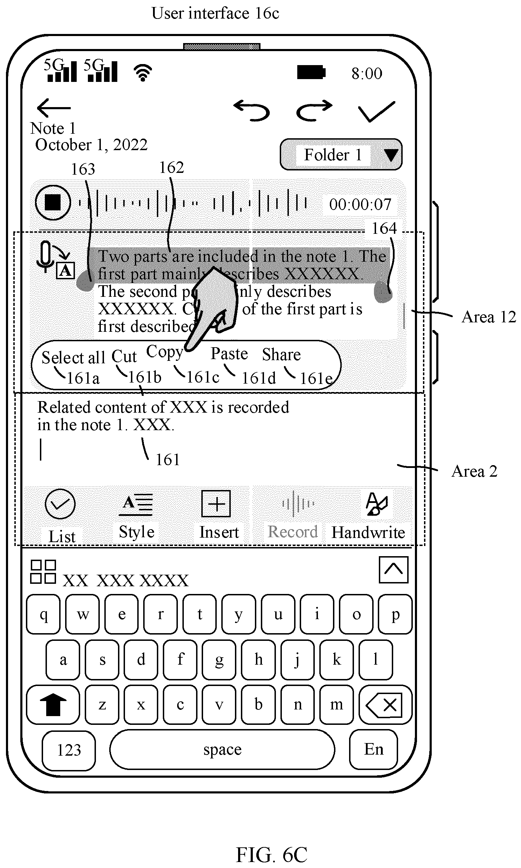

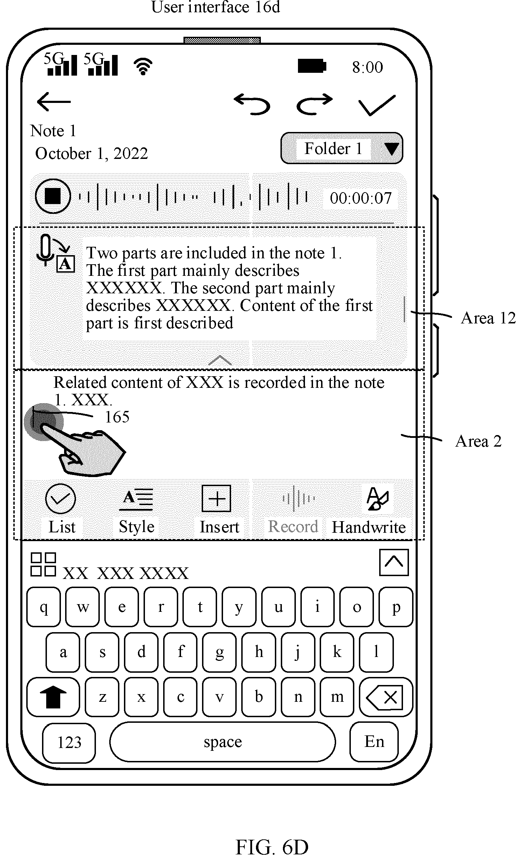

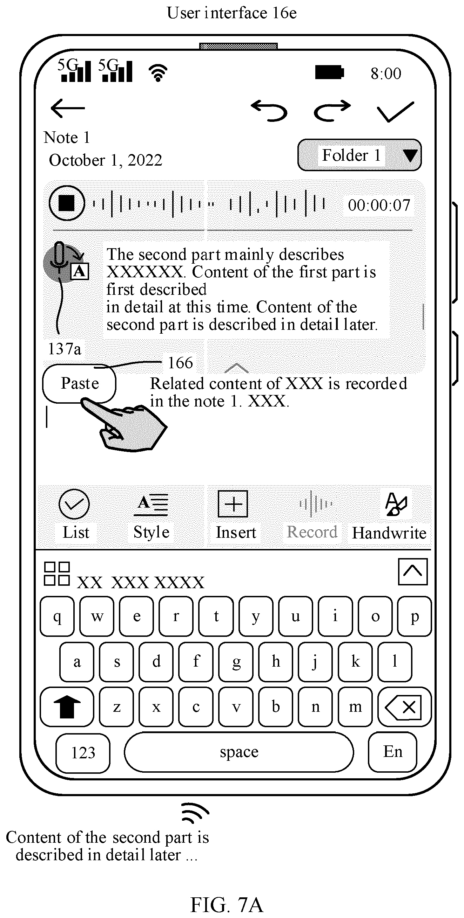

**In the recording process, for a process of editing the text in the area 12, refer to the following descriptions of related content of** **FIG. 6A****,** **FIG. 6B****,** **FIG. 6C****, and** **FIG. 6D** **and** **FIG. 7A****,** **FIG. 7B****,** **FIG. 7C****, and** **FIG. 7D****.**

Herein, the voice-to-text conversion area (area 12) may be understood as an editable area, and a text in the voice-to-text conversion area may be edited. Editing involved herein includes but is not limited to one or more of the following content: copying, cutting, selecting all (selecting all), and inserting a text. The inserting a text includes: pasting the text into the area 12 or inputting the text by using the keyboard, and then displaying the text in the area 12.

In a user interface 16a shown in FIG. 6A, in response to an operation 2 (for example, a touch and hold operation) performed at a location 1 in the area 12, the electronic device may select U words closest to the location 1, and may display a processing toolbar. The processing toolbar may include a functional control involved when a selected text is processed. In this case, the electronic device may display a user interface shown in FIG. 6B.

As shown in FIG. 6B, in a user interface 16b, six words ("Two parts are included in the") are selected. The electronic device may add a selection mark 162 to a selected character. One end of the selection mark 162 includes a control 163, and the other end includes a control 164. The control 163 and the control 164 may be used to trigger adjustment of a selection area corresponding to the selection mark 162. In other words, the control 163 and the control 164 may be used to set a quantity and locations of selected characters. The user interface 16b may further include a processing toolbar 161, and the processing toolbar 161 may include a "Select all" control 161a, a "Cut" control 161b, a "Copy" control 161c, a "Paste" control 161d, and a "Share" control 161e. The "Select all" control 161a may be used to trigger selection of all characters displayed in the area 12, and display a new toolbar including the "Cut" control 161b, the "Copy" control 161c, the "Paste" control 161d, and the "Share" control 161e. The "Cut" control 161b may be used to trigger copying of the selected character and deletion after copying. The "Copy" control 161c may be used to trigger copying of the selected character. The "Paste" control 161d may be used to trigger replacement of the selected characters with another character (copied character).

In response to an operation performed on the control 164, for example, an operation of sliding the control 164 rightward to a location A, the electronic device may display the control 164 at the location A. The character included in the selection mark 162 is all characters between the control 163 and the control 164 (displayed at the location A). In this case, the electronic device may display a user interface 16c shown in FIG. 6C.

As shown in FIG. 6C, the character (selected character 1) included in the selection mark 162 is updated to "Two parts are included in the note 1. The first part mainly describes XXXXXX. ", which is the foregoing involved text information 152. In this case, a location of the control 163 does not change, and a location of the control 164 is updated from a location in the user interface 16b to a location shown in the user interface 16c (which may be considered as a case of the location A).

In response to an operation (for example, a tap operation) performed on the "Copy" control 161c in the processing toolbar 161, the electronic device may copy the selected character 1. Subsequently, the selected character 1 may be pasted into the area 12 or the area 2. For example, refer to descriptions of the following content.

In response to an operation (for example, a touch and hold operation) performed at a location at which a cursor 165 is located in the area 2 in a user interface 16d shown in FIG. 6D, the electronic device may display a user interface 16e shown in FIG. 7A. The user interface 16e includes a "Paste" control 166, and the "Paste" control 166 may be used to trigger pasting of a copied character (for example, the selected character 1) into the area 2 for display.

In response to an operation performed on the "Paste" control 166, the electronic device may paste the copied character (for example, the selected character 1) into the area 2. In this case, the electronic device may display a user interface 16f shown in FIG. 7B. For example, the text information 152 in the user interface 16f is a pasted character.

It should be understood that, in a process of the 1^{st} time of recording, in response to an operation (for example, a tap operation) performed on the conversion control 137a in the state C, the electronic device may disable the voice-to-text conversion function, and change the state of the conversion control 137a from the state C (for example, represented by the solid line) to the state D (for example, represented by the dashed line). As shown in the user interface 16f, if the area 12 includes the text obtained through voice-to-text conversion, the prompt information 141 may be no longer displayed in the area 12.

As shown in FIG. 7B, in response to an operation (for example, a tap operation) performed on the "Pause recording" control 136a, the electronic device may end the 1^{st} time of recording after the note 1 is created.

After the 1^{st} time of recording is ended, the electronic device may display the area 12 in the size 1, for example, as shown in a user interface 16g shown in FIG. 7C; or may display the area 12 in the size 2, for example, as shown in a user interface 16h shown in FIG. 7D. This is not limited in this embodiment of this application.

It should be understood that, in response to an operation (for example, a tap operation) performed on the "Pause recording" control 136a, the electronic device may end recording, and may also end voice-to-text conversion. In other words, regardless of whether the voice-to-text conversion function is available before recording is paused, the voice-to-text conversion function is unavailable when recording is paused. In this case, in response to the operation (for example, the tap operation) performed on the "Pause recording" control 136a, the electronic device may further set the state of the conversion control 137a to the state D (for example, represented by the dashed line), to indicate that the voice-to-text conversion function is unavailable. When recording is paused, the conversion control 137a may not receive an operation of the user.

In some possible cases, after recording is paused, the electronic device may perform processing, for example, editing (including copying, pasting, or the like) and sharing on the text in the area 12.

**When recording is paused, for a process of editing the text in the area 12, refer to the following descriptions of related content of** **FIG. 8A****,** **FIG. 8B****,** **FIG. 8C****, and** **FIG. 8D****.**

As shown in a user interface 17a shown in FIG. 8A, the electronic device may select some or all characters (a selected character 2) in the area 12, add the selection mark 162 to the selected character, and display the processing toolbar 161 to process the selected character. For example, the selected character may include "The second part mainly describes XXXXXX. ". For the selection mark 162, the processing toolbar 161, and a process in which the electronic device selects a character, refer to the foregoing description of related content in FIG. 6A and FIG. 6B. Details are not described herein again.

In response to an operation (for example, a tap operation) performed on the "Copy" control 161c in the processing toolbar 161, the electronic device may copy the selected character 2. Subsequently, the selected character 2 may be pasted into the area 12 or the area 2. For example, refer to descriptions of the following content.

As shown in a user interface 17b shown in FIG. 8B, in response to an operation (for example, a touch and hold operation) performed at a location at which the cursor 165 is located in the area 2, the electronic device may display a user interface 17c shown in FIG. 8C.

As shown in FIG. 8C, the user interface 17c includes a "Paste" control 166, and the "Paste" control 166 may be used to trigger pasting of a copied character (the selected character 2) into the area 2 for display.

In response to an operation performed on the "Paste" control 166, the electronic device may paste the copied character (the selected character 2) into the area 2. In this case, the electronic device may display a user interface 17d shown in FIG. 8D. For example, the text information 171 in the user interface 17d is a pasted character.

As shown in FIG. 8D, after the 1^{st} time of recording is completed, the electronic device may perform the 2^{nd} time of recording in response to an operation performed on the recording start control 141a. For related descriptions of the 2^{nd} time of recording, refer to the following descriptions of FIG. 9A, FIG. 9B, and FIG. 9C-FIG. 12A, FIG. 12B, FIG. 12C, and FIG. 12D.

Then, the electronic device may make the 1^{st} time of recording and the 2^{nd} time of recording into a segment of long voice. After the 2^{nd} time of recording is stopped, one node 1 may be displayed in the playback progress bar, and the playback progress bar is divided into two subprogress bars by using the node. A subprogress bar before the node 1 corresponds to a voice obtained through the 1^{st} time of recording, and a subprogress bar after the node 1 corresponds to a voice obtained through the 2^{nd} time of recording.

It should be understood that the long voice obtained based on the 1^{st} time of recording and the 2^{nd} time of recording is used as an example for description herein. In an actual case, the electronic device may further perform a 3^{rd} time of recording, a 4^{th} time of recording, and the like. Herein, a quantity of recording times is denoted as Q. After the Q^{th} time of recording is completed, a node may be added to the playback progress bar. After the Q^{th} time of recording is completed, a total of Q-1 nodes exist in the playback progress bar, and the playback progress bar is divided into Q segments (which may be referred to as Q subprogress bars). The i^{th} subprogress bar in the Q subprogress bars corresponds to the i^{th} segment of voice. Q is an integer greater than or equal to 2. For a process of subsequent recording such as the 3^{rd} time of recording and the 4^{th} time of recording, refer to the foregoing descriptions of the 1^{st} time of recording and the subsequent descriptions of the 2^{nd} time of recording. Details are not described herein.

It should be further understood that, in the recording process and after recording is paused, the electronic device may input non-recording information in the area 2. In addition to performing an input by using a keyboard and copying and pasting, a manner of inputting the non-recording information may include performing editing in the area 2 in another manner, including: inserting a picture into the area 2, and performing editing in the area 2 by using the pen toolbar (for example, doodling or inputting a text through handwriting). Related content of performing editing in the area 2 in another manner may be described during the 2^{nd} time of recording. For details, refer to the following related descriptions of FIG. 9A, FIG. 9B, and FIG. 9C-FIG. 12A, FIG. 12B, FIG. 12C, and FIG. 12D.

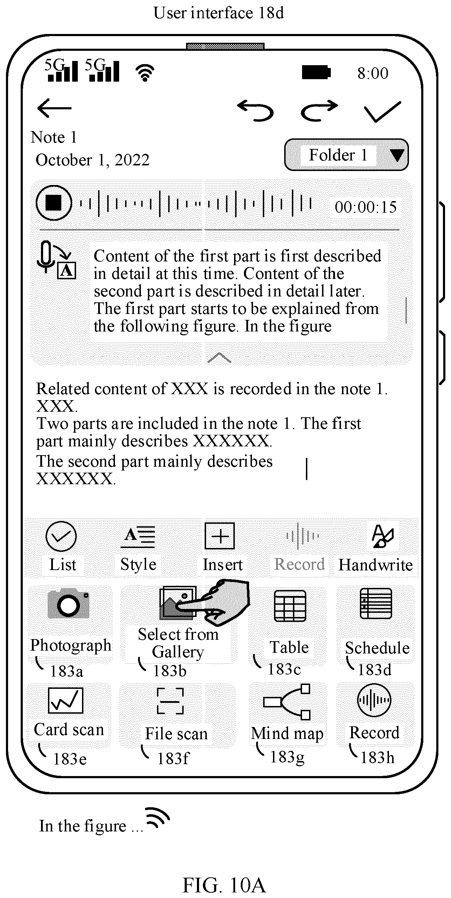

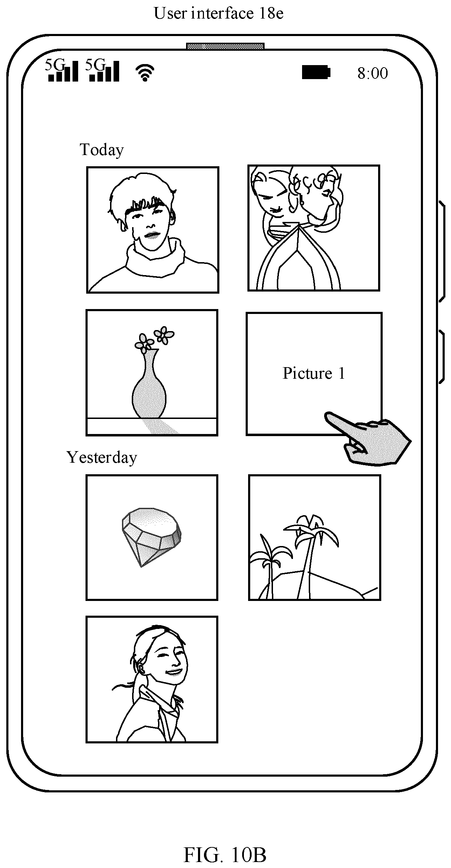

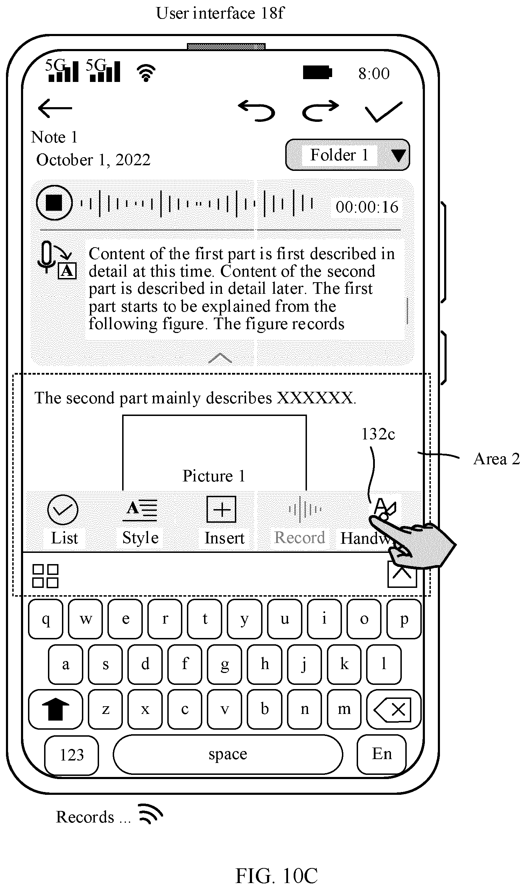

**For a partial process involved in the 2^{nd} time of recording and a process of inserting the picture into the area 2, refer to the following descriptions of** **FIG. 9A****,** **FIG. 9B****, and** **FIG. 9C** **and** **FIG. 10A****,** **FIG. 10B****, and** **FIG. 10C****.**

As shown in FIG. 9A, a user interface 18a is an example user interface involved in a process of the 2^{nd} time of recording. In this case, the text displayed in the area 12 is converted from the voice obtained through the 1^{st} time of recording. When displaying, in the area 12, a text converted from the voice of the 2^{nd} time of recording, the electronic device may display the text in different manners, including but not limited to the following display manners.

In a display manner 1, the text converted from the voice obtained through the 1^{st} time of recording and the text converted from the voice obtained through the 2^{nd} time of recording are continuously displayed. To be specific, it is assumed that, after the 1^{st} time of recording is completed and before the 2^{nd} time of recording is started, a last character included in the area 12 is displayed in an h^{th} line in all characters in the area 12. When the last character is not a last character in the h^{th} line, the electronic device may display, in the h^{th} line, a 1^{st} text converted from the voice obtained through the 2^{nd} time of recording, and display the 1^{st} text after the last character. In this case, there may be no space between the 1^{st} text (obtained at the 2^{nd} time of recording) and the last character (obtained at the 1^{st} time of recording). When the last character is a last character in the h^{th} line, the electronic device may display, in a next line of the last character, a 1^{st} text converted from the voice obtained through the 2^{nd} time of recording. For an example user interface involved in the display manner 1, refer to the following descriptions of FIG. 9B.

As shown in FIG. 9B, a user interface 18b includes text information 181 and text information 182. The text information 181 is converted from the voice obtained through the 1^{st} time of recording. The text information 182 is converted from the voice obtained through the 2^{nd} time of recording. For example, content of the text information 182 may be "The first part starts to be explained from the following figure". In this case, a last character in the text information 181 and a 1^{st} character in the text information 182 are displayed in a same line, and are continuously displayed, and there is no space between the last character and the 1^{st} character.

In a display manner 2, the text converted from the voice obtained through the 1^{st} time of recording and the text converted from the voice obtained through the 2^{nd} time of recording are separately displayed. For example, it is assumed that, after the 1^{st} time of recording is completed and before the 2^{nd} time of recording is started, a last character included in the area 12 is displayed in an h^{th} line in all characters in the area 12. When the last character is not a last character in the h^{th} line, the electronic device may display, in a next line of the last character, a 1^{st} text converted from the voice obtained through the 2^{nd} time of recording. For an example user interface involved in the display manner 2, refer to the following descriptions of FIG. 9C. As shown in FIG. 9C, a user interface 18c also includes the text information 181 (obtained through the 1^{st} time of recording) and the text information 182 (obtained through the 2^{nd} time of recording) that are involved above. In this case, a last character in the text information 181 and a 1^{st} character in the text information 182 are displayed in different lines: The 1^{st} character in the text information 182 is displayed in a next line of the last character in the text information 181.

In another possible implementation of the display manner 2, when the last character is the last character in the h^{th} line, the electronic device may generate a blank line (the blank line may not be used to display any character), and then display, in a next line of the blank line, the 1^{st} text converted from the voice obtained through the 2^{nd} time of recording; or the electronic device may display, after two spaces in a next line of the h^{th} line, the 1^{st} text converted from the voice obtained through the 2^{nd} time of recording.

For subsequent content, the display manner 1 is used as an example to describe other content in this embodiment of this application. For example, the process of inserting the picture into the area 2 is described.

As shown in FIG. 9B, in response to an operation performed on the "Insert" control 132a, the electronic device may display at least one insertion manner identifier or at least one insertable content identifier. In this case, the electronic device may display a user interface 18d shown in FIG. 10A.

As shown in FIG. 10A, the user interface 18d may include a plurality of insertion manner identifiers and a plurality of insertable content identifiers. For example, the insertable content identifier may include a "Photograph" icon 183a, a "Table" icon 183c, a "Schedule" icon 183d, a "Card scan" icon 183e, a "Mind map" icon 183g, and a "Record" icon 183h. The insert manner identifier may include a "Select from Gallery" icon 183b and a "File scan" icon 183f. The "Photograph" icon 183a may be used to trigger opening of a camera, to photograph a picture, and then insert the photographed picture into the area 2. The "Table" icon 183c may be used to insert a table into the area 2. The "Schedule" icon 183d may be used to insert a schedule identifier into the area 2. The "Card scan" icon 183e may be used to trigger enabling of a scanning function, to scan a card, and display obtained scanning content in the area 2. The "Mind map" icon 183g may be used to insert a mind map into the area 2. The "Record" icon 183h may be used to insert a recorded voice into the area 2. The "Select from Gallery" icon 183b may be used to trigger opening of Gallery, to select a picture or video from Gallery, and insert the picture or the video into the area 2. The "File scan" icon 183f may be used to trigger enabling of a scanning function, to scan a file, and display obtained scanning content in the area 2.

It should be understood that the insertion manner identifier and the insertable content identifier shown in the user interface 18d are merely example descriptions, and may actually include another identifier, or may include more or fewer identifiers than those in the figure. A form of the identifier may be an icon, or may be another form, for example, a text. This is not limited in this embodiment of this application.

In response to an operation (for example, a tap operation) performed on the "Select from Gallery" icon 183b, the electronic device may open Gallery, select a picture or a video from Gallery, insert the picture or the video into the area 2, and display the user interface shown in FIG. 10B. In this case, the electronic device may further collect a sound signal to obtain a voice, convert the voice into a text, and display the text in the area 11. For example, content of the sound signal may be "In the figure".

As shown in FIG. 10B, a user interface 18e is an example interface after Gallery is opened. In response to an operation (for example, a tap operation) performed on a picture 1, the electronic device may insert the picture 1 into the area 2. In this case, the electronic device may display a user interface 18f shown in FIG. 10C.

As shown in FIG. 10C, the picture 1 may be displayed in the area 2, to prompt the user that the picture 1 is inserted. In this case, the electronic device may further collect a sound signal to obtain a voice, convert the voice into a text, and display the text in the area 11. For example, content of the sound signal may be "recorded".

In response to an operation (for example, a tap operation) performed on the "Handwrite" control 132c, the electronic device may switch the input tool from the keyboard to the pen toolbar. Subsequently, editing may be performed in the area 2 by using the pen toolbar (for example, doodling or handwriting a text).

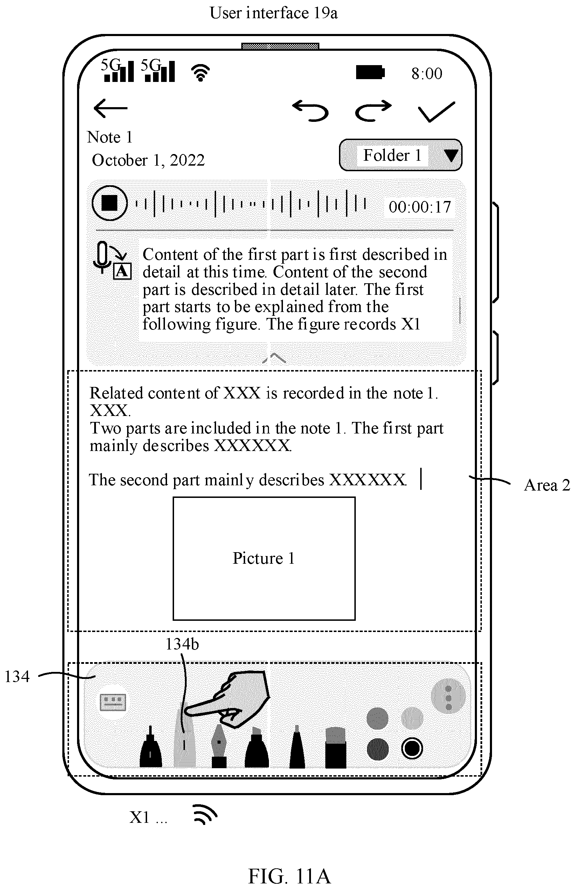

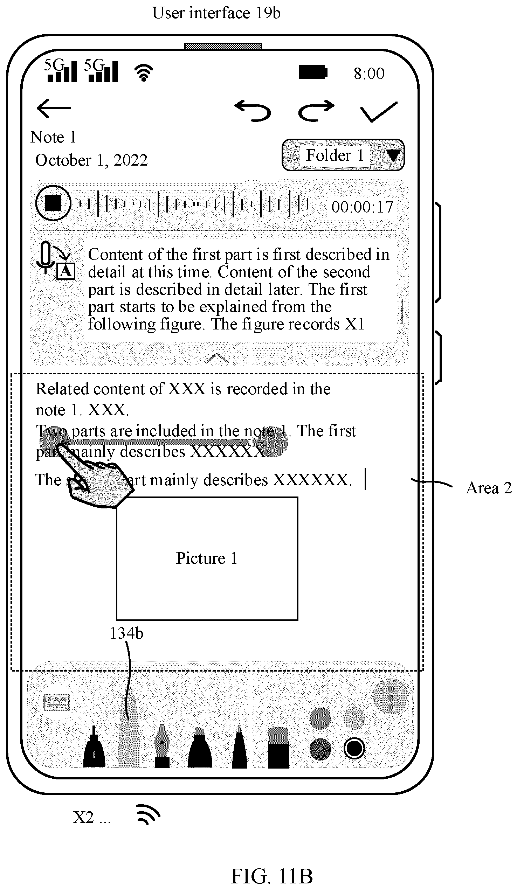

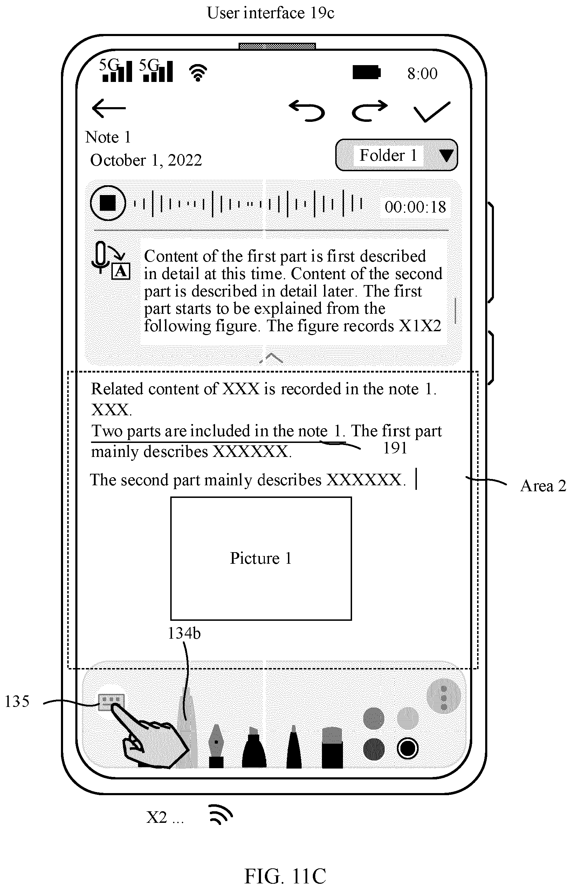

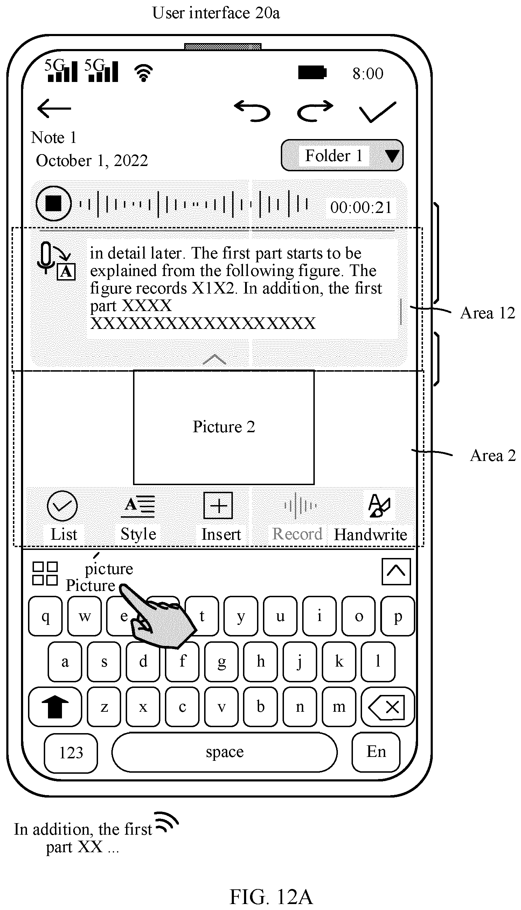

**For a partial process involved in the 2^{nd} time of recording and a process of performing editing (for example, doodling) in the area 2 by using the pen** toolbar, **refer to the following descriptions of** **FIG. 11A****,** **FIG. 11B****, and** **FIG. 11C** **and** **FIG. 12A****,** **FIG. 12B****,** **FIG. 12C****, and** **FIG. 12D****.**

As shown in a user interface 19a shown in FIG. 11A, in response to an operation (for example, a tap operation) performed on a pen 134b in the pen toolbar 134, the electronic device may trigger editing (for example, doodling) performed in the area 2 by using the pen 134b, and the electronic device may highlight the pen 134b or change a state of the pen 134b, to indicate that the pen 134b is selected. In this case, the electronic device may display a user interface shown in FIG. 11B.

As shown in a user interface 19b shown in FIG. 11B, the pen 134b is highlighted to indicate that the pen 134b is selected. In response to an operation of performing doodling in the area 2 by using the pen 134b, the electronic device may display a user interface shown in FIG. 11C.

As shown in FIG. 11C, a user interface 19c may include an underline 191, and the underline 191 is added to the area 2 by using the pen 134b.

It should be understood that the pen toolbar may include at least one pen, and different pens are of different types. For example, the pen toolbar may include a marking pen 1, a marking pen 2, an erasing pencil, and a pencil. When editing (for example, doodling) is performed in the area 2 by using different pens, different results are obtained. It may also be understood that, when editing is performed by using different pens, different types of lines are drawn. That the lines are of different types may include that the colors or the shapes are different. For example, a line (for example, a straight line) of a shape 1 may be drawn by using the marking pen 1, and a line (for example, a curve) of a shape 2 may be drawn by using the marking pen 2. Lines edited by using different stylus may be adjusted. For example, a color, a thickness, or the like of the line may be adjusted.

In response to an operation (for example, a tap operation) performed on the keyboard switching control 135, the electronic device may switch the input tool from the pen toolbar to the keyboard. Subsequently, during the 2^{nd} time of recording, the electronic device continues to input the non-recording information in the area 2, and then ends the 2^{nd} time of recording.

As shown in FIG. 12A, a user interface 20a includes a picture 2. It is assumed herein that the picture 2 is displayed after the picture 1. For a process of inserting the picture 2, refer to the foregoing descriptions of inserting the picture 1. Details are not described herein again. In this case, the electronic device may continue to collect a sound signal to obtain a voice. Content of the sound signal may be "In addition, the first part XX ...". During recording, the electronic device may perform voice-to-text conversion, and display a text obtained through conversion in the area 12. In addition, during recording, the electronic device may further input the non-voice information into the area 2. For example, in response to an operation (for example, a tap operation) performed on an edited text "picture", the electronic device may input the edited text "picture" into the area 2 for display. In this case, the electronic device may display a user interface 20b shown in FIG. 12B.

Subsequently, the electronic device may end the 2^{nd} time of recording. As shown in a user interface 20c shown in FIG. 12C, in response to an operation (for example, a tap operation) performed on the "Pause recording" control 136a, the electronic device may end the 2^{nd} time of recording. In this case, if duration of the voice obtained through the 2^{nd} time of recording is 12s, the recording duration is reflected as 23s, and may be considered as a sum of duration (11s) of a voice 1 and duration (12s) of a voice 2. After the 2^{nd} time of recording is ended, the electronic device may display a user interface shown in FIG. 12D.

As shown in FIG. 12D, a user interface 20d may include a recording bar (recording bar 2) in the state 2. After the 2^{nd} time of recording is ended, the electronic device may make, into a long voice (long voice 1), the voice (voice 1) obtained through the 1^{st} time of recording and the voice (voice 2) obtained through the 2^{nd} time of recording. Herein, duration of the long voice 1 may be represented as the duration of the voice 1 plus the duration of the voice 2. For example, as shown in the user interface 20d, it may be learned from the playback time indicator 141d that the duration of the long voice 1 is 23s and may be considered as the sum of the duration (11s) of the voice 1 and the duration (12s) of the voice 2.

The user interface 20d may further include a playback progress bar 141c, and the playback progress bar 141c may include a node 201 (which may be considered as a node 1). The node 201 may divide the playback progress bar 141c into two subprogress bars. A subprogress bar before the node 201 corresponds to the voice (voice 1) obtained through the 1^{st} time of recording, and a subprogress bar after the node 201 corresponds to the voice (voice 2) obtained through the 2^{nd} time of recording.

Subsequently, the electronic device may store the note 1 in which information is recorded. After storing the note 1, the user may view the note 1 by using the electronic device.

**For content of storing the note 1 by the electronic device, refer to the following descriptions.**

As shown in the user interface 20d shown in FIG. 12D, the electronic device may store the note 1 in response to an operation (for example, a tap operation) on a complete control 401.

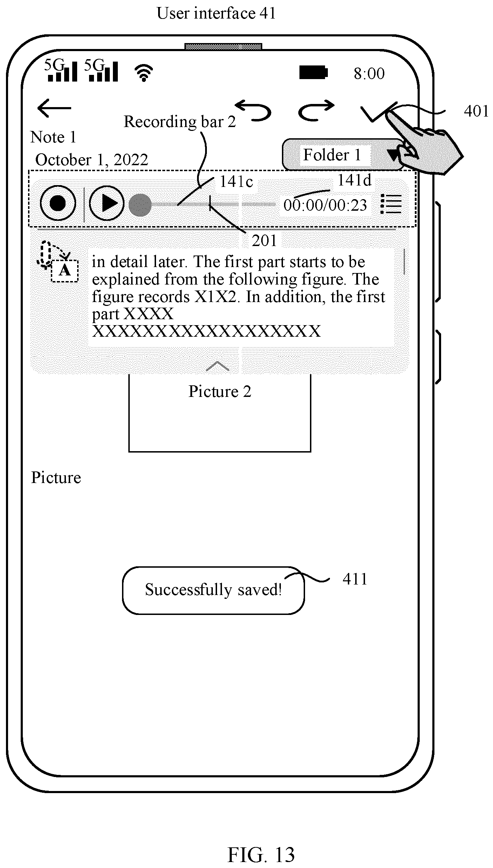

In some possible cases, after the note 1 is stored, the electronic device may further display prompt information, to notify the user that storage succeeds. For example, as shown in FIG. 13, the user interface 41 may include prompt information 411. The prompt information 411 is used to notify the user that the note 1 is successfully saved.

It should be understood that the foregoing content is described by using an example in which the electronic device records voices for two times after the note 1 is created. In an actual case, after the note 1 is created, the electronic device may further record more or fewer voices. This is not limited in this embodiment of this application. After the information is recorded in the note 1, the user may further view, by using the electronic device, the information recorded in the note 1. For content involved when the information is viewed, refer to the following descriptions of FIG. 14-FIG. 17.

**The following describes related content involved in information viewing.**

**FIG. 14-FIG. 17** **describe a group of example user interfaces involved in information viewing.**

Before a note 1 is stored and after the note 1 is stored, a user may view information recorded in the note 1 by using an electronic device. When the note is viewed, the electronic device may play back a voice, so that the user views recording content. When playing back the voice, the electronic device may implement voice-text synchronization.

In some possible cases, voice-text synchronization may include one or more of the following content:

In a synchronization manner 1, when a recording is played back, non-recording information (denoted as information A) corresponding to a voice that is played back in an area 2 (editing area) is displayed in a state A, and non-recording information (denoted as information B) corresponding to a voice that is not played back in the area 2 is displayed in a state B. Herein, the information A and the information B are described by using an example in which the electronic device plays back a voice A (a recording time is a time A). The information A is information whose input time is earlier than or equal to the time A. The information B is information whose input time is later than the time A. The time A may also be referred to as a timestamp corresponding to the voice A. The input time of the information A may be referred to as a timestamp corresponding to the information A. The input time of the information B may be referred to as a timestamp corresponding to the information B. The state A is different from the state B. For example, the state B may be that a mask is added to the information B, or displaying the information B in a translucent manner, so that the information B is "partially hidden and partially visible", to indicate that the information B is not input into the note before the currently played back voice is recorded. The state A may be that no mask is added to the information A, to indicate that the information A is input into the note before the currently played back voice is recorded.

In a synchronization manner 2, when a recording is played back, a text converted from a voice that is played back may be displayed in an area 12 (voice-to-text conversion area).

In FIG. 14-FIG. 17, descriptions are provided by using an example in which voice-text synchronization includes the synchronization manner 1 and the synchronization manner 2. In an actual application, voice-text synchronization may include only the synchronization manner 1 or the synchronization manner 2. This is not limited in this embodiment of this application.

**The following provides, based on** **FIG. 14-FIG. 16****, example descriptions of related content involved in voice-text synchronization.**

As shown in (1) in FIG. 14, a user interface 30 is an example user interface involved when recording is paused after a recording function is enabled, and the user interface 30 may include a recording bar (recording bar 2) in a state 2. The state 2 is a state in which recording is paused after the recording function is enabled.

It should be understood that a pen toolbar 134 shown in (1) in FIG. 14 may be obtained through switching by touching a "Handwrite" control 132c. The electronic device may further switch the pen toolbar 134 to a keyboard by using a keyboard switching control 135.

In response to an operation (for example, a tap operation) performed on a playback start control 141b in the recording bar 2, the electronic device may start to play back a recorded voice (long voice). The electronic device may implement voice-text synchronization in a voice playback process. For example, the electronic device may implement voice-text synchronization when playing back a 3^{rd} second. In this case, the electronic device may display a user interface shown in (2) in FIG. 14.

As shown in a user interface 31 shown in (2) in FIG. 14, when a voice (voice A1) corresponding to the 3^{rd} second is played back, the electronic device implements voice-text synchronization in the following two aspects.

In a first aspect, text information 311 may be displayed in the voice-to-text conversion area (area 12). The text information 311 includes a text obtained through conversion when the voice A1 is recorded. For related content involved when the electronic device records the voice A1 (the voice corresponding to the 3^{rd} second), refer to the foregoing descriptions of the user interface 15a in (1) in FIG. 4. Details are not described herein again.

In a second aspect, no mask is added to non-recording information 312a in the editing area (area 2), and a mask is added to non-recording information 312b. It may also be understood that no mask is added to an area in which the non-recording information 312a is displayed in the area 2, and a mask is added to an area in which the non-recording information 312b is displayed. An input time of the non-recording information 312a is earlier than or equal to a time of recording the voice A1. An input time of the non-recording information 312b is later than the time of recording the voice A1.

In the foregoing descriptions, the area 12 in the size 1 is used as an example to describe that voice-text synchronization may be performed in the voice-to-text conversion area (area 12). Voice-text synchronization may also be performed in the voice-to-text conversion area (area 12) whose size is the size 2. For example, in response to an operation (for example, a tap operation) performed on an expand control 151a, the electronic device may display the voice-to-text conversion area (area 12) whose size is the size 2. In this case, the electronic device may display a user interface 32 shown in (3) in FIG. 14. In the user interface 32, the area 12 still includes the text information 311. No mask is added to the non-recording information 312a in the area 2. A mask is added to non-recording information other than the non-recording information 312a in the area 2.

Subsequently, the electronic device may continue to implement voice-text synchronization when playing back a voice. As shown in a user interface 33 in (4) in FIG. 14, when playing back a voice (voice A2) corresponding to an 8^{th} second, the electronic device may display text information 313 in a voice-to-text conversion area (area 12) whose size is the size 2. The text information 313 includes a text obtained through conversion when the voice A2 is recorded. For related content involved when the electronic device records the voice A2 (the voice corresponding to the 8^{th} second), refer to the foregoing descriptions of the user interface 15d in FIG. 5A. Details are not described herein again. The electronic device may further add a mask to non-recording information 314b in the editing area (area 2), to distinguish from non-recording information 314a. It indicates that an input time of the non-recording information 314b is later than a time of recording the voice A2, and an input time of the non-recording information 314a is earlier than or equal to the time of recording the voice A2.

It should be understood that, in response to an operation (for example, a tap operation) performed on the playback start control 141b in the recording bar 2, the electronic device may start to play back the recorded voice (long voice). In this case, the electronic device may further replace the playback start control 141b in the recording bar 2 with a playback pause control 141f, to obtain a recording bar (recording bar 3) in a state 3. The playback control 141b may be used to trigger a pause in playback of a voice (long voice). The recording bar 3 may further include another control such as a recording start control 141a, a playback progress bar 141c, a playback time indicator 141d, and a voice menu control 141e. For related content of the another control, refer to the foregoing descriptions of the another control in the user interface 14b in (3) in FIG. 3. Details are not described herein again.

In some possible cases, before starting to play back audio, the electronic device may further display prompt information, to notify the user that voice-text synchronization may be implemented when a voice is played back. For example, in the user interface 30 in FIG. 14, the electronic device may display a prompt box 301. The prompt box 301 may be presented in a form of a bubble, and points to the playback start control 141b. Content in the prompt box 301 may be "Tap to play back a recording. Recorded content may be displayed when the recording is played back". The content in the prompt box 301 may be used to prompt the user to tap the playback start control 141b to play back audio. Voice-text synchronization may be implemented when audio is played back. The prompt box 301 may be displayed after recording is paused, and a quantity of display times is one. The prompt box 301 may disappear when the user taps any location on a screen, and the prompt box 301 may also have another display rule and a disappearance rule. This is not limited in this embodiment of this application.

In some possible cases, when the note is viewed, the electronic device may further implement an advance preview. The advance preview may include one or more of the following content.

In a preview manner 1, if an operation A (for example, a continuous touch and hold operation) performed at a location T (a voice correspondingly played back at the location T is a voice recorded in a time C) in the playback progress bar when a voice recorded in a time B is played back, the electronic device may display, in the area 12, a text converted from the voice recorded in the time C (a specific time after the time B) and a part of the text converted from a voice recorded before the time C, without affecting playback of the voice recorded in the time B, so that the user can preview the text converted from the voice recorded at the time C. The time C and the time B may indicate a period of time, or may indicate a moment. This is not limited in this embodiment of this application.

In a preview manner 2, if an operation B (for example, a continuous touch and hold operation after a double-tap) performed at a location T (a voice correspondingly played back at the location T is a voice recorded in a time C) in the playback progress bar when a voice recorded in a time B is played back, the electronic device may highlight, in the area 2, non-recording information (non-recording information A) input at the time C, without affecting playback of the voice recorded in the time B. Highlighting includes one or more of marking the non-recording information A in red, bold, or the like. This is not limited in this embodiment of this application. Highlighting the non-recording information A may also be understood as displaying the non-recording information A in different states (a state different from the state A and the state B).

It should be understood that the operation A and the operation B may be a same operation or may be different operations. Herein, an example in which the operation A and the operation B are a same operation and the electronic device may implement the advance preview in the preview manner 1 and the preview manner 2 is used for description. In an actual application, the operation A and the operation B may be different, and the electronic device may implement the advance preview in one of the preview manner 1 or the preview manner 2.

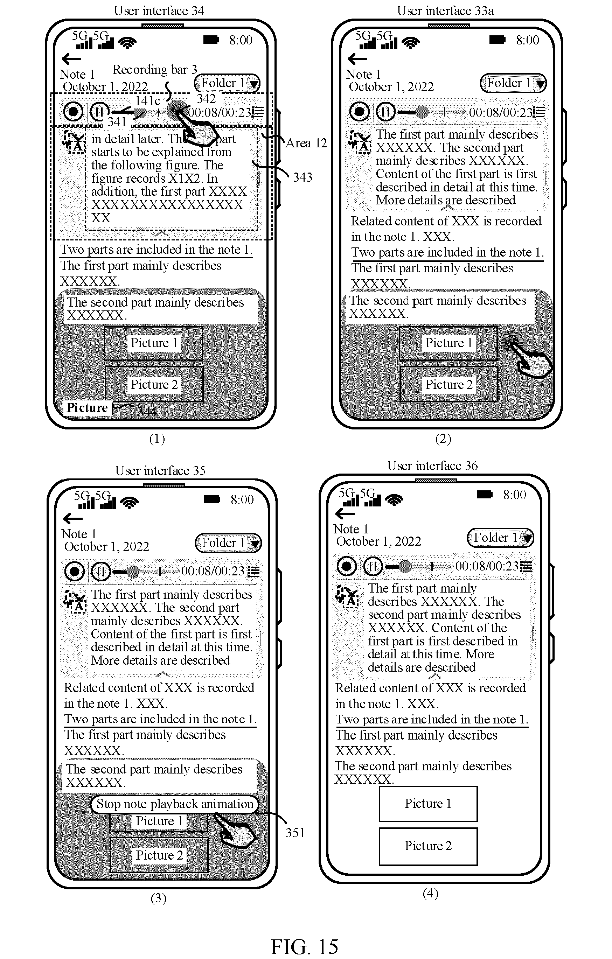

As shown in (1) in FIG. 15, a voice currently played by the electronic device is a voice (namely, the voice corresponding to the 8^{th} second in a user interface 34) correspondingly played back at a location 341 in the playback progress bar 141c in the recording bar 3.

In response to an operation (for example, a continuous touch and hold operation) performed at a location 342 (equivalent to one type of the location T) in the playback progress bar 141c in the recording bar 3, the electronic device may change content displayed in the area 12 and the area 2, and in this case, the electronic device may continue to play back the voice correspondingly played back at the location 341. Herein, it is assumed that a voice correspondingly played back at the location 342 is a voice corresponding to a 23^{rd} second, and a recording time of the voice corresponding to the 23^{rd} second is the time C. The electronic device may display, in the area 12, the text converted from the voice recorded in the time C and the part of the text converted from the voice recorded before the time C. For example, text information 344 may be included. For content involved when the electronic device obtains the text information 344, refer to the foregoing descriptions of FIG. 12A. Details are not described herein again. The electronic device may further highlight, in the area 2, non-recording information 334 (non-recording information A) input in the time C. For example, the non-recording information 334 may be displayed in bold. For content of inputting the non-recording information 334 into the area 2 by the electronic device, refer to the foregoing descriptions of FIG. 12A. Details are not described herein again.

It should be understood that when detecting that the user ends the operation of touching and holding the location 342, the electronic device may update content included in the area 12 and the area 2 to content displayed when the voice corresponding to the location 341 is played back. For example, in the user interface 34, the electronic device may re-display the foregoing involved user interface 33 in response to that the user ends the operation of touching and holding the location 342.

In some possible cases, after the electronic device opens the note 1, when the voice in the note 1 is played back, a voice-text synchronization function is enabled by default, and the electronic device may disable the voice-text synchronization function. For an example method for disabling the voice-text synchronization function, refer to the following descriptions shown in (2) in FIG. 15, (3) in FIG. 15, and (4) in FIG. 15.

As shown in a user interface 33a shown in (2) in FIG. 15, in response to an operation (for example, a touch and hold operation) performed at any location in the area 2, the electronic device may display a control corresponding to disabling the voice-text synchronization function. For example, as shown in a user interface 35 shown in (3) in FIG. 15, a control 351 is the control corresponding to disabling the voice-text synchronization function. The control 351 may further include prompt information. The prompt information is used to remind the user that the control is used to trigger disabling of the voice-text synchronization function. For example, the prompt information may be "Stop note playback animation". The note playback animation is the foregoing involved voice-text synchronization. After the voice-text synchronization function is disabled, the electronic device no longer adds a mask to the area 2 to distinguish whether an input time of the non-recording information is later than a recording time of the currently played back voice. For example, in this case, the electronic device may display a user interface 36 shown in (4) in FIG. 15.

It should be understood that the foregoing involved manner of disabling the voice-text synchronization function may be considered as disabling voice-text synchronization of the note 1. It may also be considered that voice-text synchronization of all notes is disabled. This is not limited in this embodiment of this application.

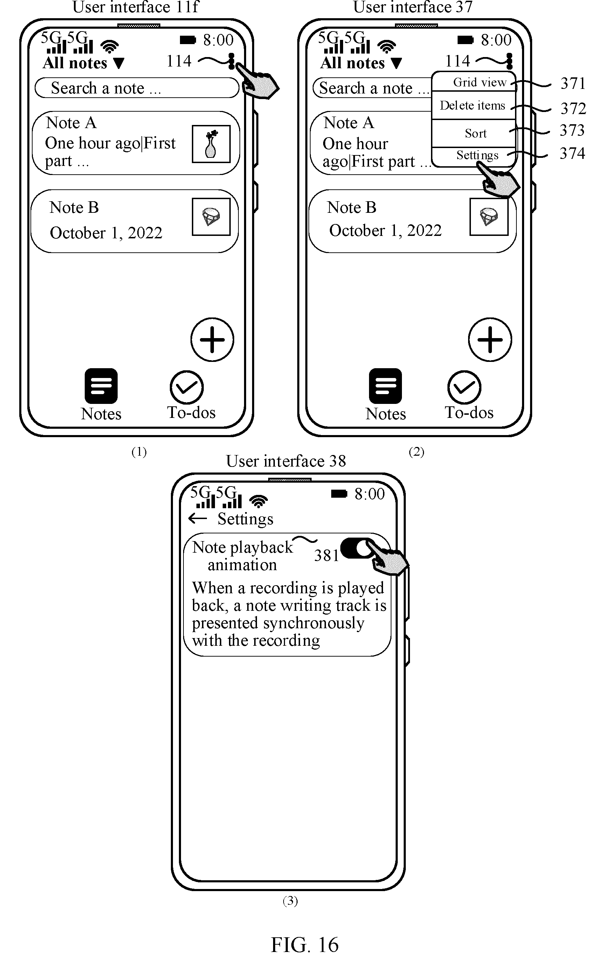

In some other possible cases, the electronic device may alternatively disable voice-text synchronization of all notes in another manner. For example, the electronic device may add a setting item 1 for all the notes. The setting item 1 may be used to control whether to enable voice-text synchronization. When a setting value corresponding to the setting item 1 is OFF (OFF), it indicates that voice-text synchronization of all the notes is disabled. In other words, the voice-text synchronization function cannot be used when any note is entered. When a setting value corresponding to the setting item 1 is ON (ON), it indicates that voice-text synchronization of all the notes is enabled. In other words, the voice-text synchronization function may be used when any note is entered. For related content involved in the process, refer to the following descriptions of FIG. 16.

As shown in (1) in FIG. 16, a user interface 11f may include a control 114. The control 114 may be used to trigger the electronic device to display more setting items for the notes. For descriptions of the user interface 11f, refer to the foregoing descriptions of the user interface 11a in (2) in FIG. 1A. Details are not described herein again.

In response to an operation performed on the control 114, the electronic device may display at least one setting item for the notes. For example, in this case, the electronic device may display a user interface shown in (2) in FIG. 16.

As shown in (2) in FIG. 16, a user interface 37 may include a "Settings" function item 374. The "Settings" function item 374 may be used to trigger the electronic device to perform setting for all the notes. For example, the voice-text synchronization function is set (disabled or enabled) for all the notes. The user interface 37 may further include another setting item, for example, may further include a "Grid view" setting item 371, a "Delete in batches" setting item 372, and a "Sorting manner" setting item 373. The "Grid view" setting item 371 may be used to set a display manner of all the notes. The "Delete in batches" setting item 372 may be used to delete one or more notes at one time. The "Sorting manner" setting item 373 may be used to set a sorting manner of all the notes. For example, the notes are arranged from the front to the back based on sizes of the notes.

In response to an operation (for example, a tap operation) performed on the "Settings" function item 374, the electronic device may display more setting items for all the notes. In this case, the electronic device may display a user interface shown in (3) in FIG. 16.

As shown in FIG. 16 (3), the user interface 38 may include a "Note playback animation" setting item 381 (equivalent to one type of the setting item 1). The "Note playback animation" setting item 381 is enabled by default. In other words, the electronic device enables the voice-text synchronization function of all the notes by default. In response to an operation of disabling the "Note playback animation" setting item 381, the electronic device may disable the voice-text synchronization function of all the notes.

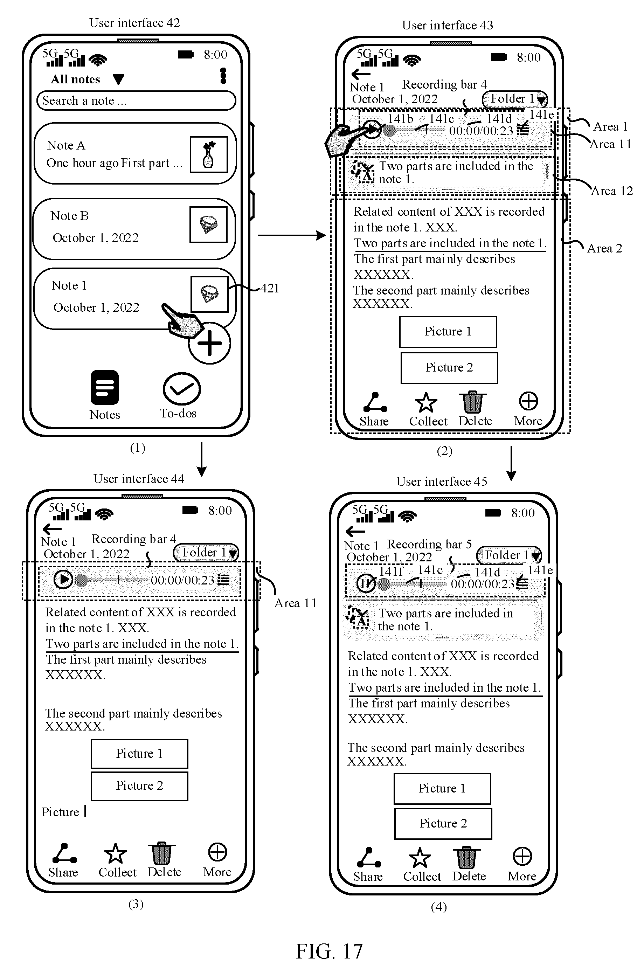

**After the electronic device stores the note 1, the user may view the information recorded in the note 1, or may continue to record information in the note 1. For such a process, refer to the following descriptions of** **FIG. 17****.**

As shown in (1) in FIG. 17, a user interface 42 includes a directory entry corresponding to at least one note. The user triggers a directory entry corresponding to a note, and the electronic device may open the corresponding note, to display content recorded in the note. For example, in response to an operation (for example, a tap operation) performed on a directory entry 421 corresponding to the note 1, the electronic device may open the note 1, to display content recorded in the note 1.

In some possible cases, when the electronic device opens the note 1 in which information is recorded, the electronic device may still obtain two areas through division in a user interface: a recording area (the foregoing involved area 1) and an editing area (the foregoing involved area 2). The area 1 is used to present recording-related content, and the area 2 is used to display non-recording information. After the note 1 is closed and when the note 1 is opened again, the content included in the area 1 is one of the following two cases:
Case 1: After the note 1 is closed and when the note 1 is opened again, the area 1 is still divided into a voice recording/playback area (the foregoing involved area 11) and a voice-to-text conversion area (the foregoing involved area 12). For example, as shown in the user interface 43 shown in (2) in FIG. 17, in the user interface 43, the area 11 includes a recording bar. After the note 1 is disabled and when the note 1 is opened again, the recording function is in a disabled state by default. In this case, the recording bar displayed in the area 11 may be referred to as a recording bar (recording bar 4) in a fourth state. The state 4 is a state when the recording function is disabled and no voice is played back. Voice-to-text conversion content may be displayed in the area 12. The recording bar 4 may include a playback start control 141b, a playback progress bar 141c, a playback time indicator 141d, and a voice menu control 141e. For descriptions of each control included in the recording bar 4, refer to the foregoing descriptions of each control included in the recording bar 2. Details are not described herein again.
Case 2: After the note 1 is closed and when the note 1 is opened again, the area 1 may include a recording area (area 1), but does not include a voice-to-text conversion area (area 12). For example, as shown in a user interface 44 shown in (3) in FIG. 17, in the user interface 44, the area 11 may include the area 1, and the area 11 includes a recording bar 4. In this case, the area 1 does not include the voice-to-text conversion area (area 12).

It should be understood that displaying the recording bar 4 herein is merely an example description. In another case, the recording bar may be in another state, for example, may be a recording bar (recording bar 2) in the foregoing involved state 2. This is not limited in this embodiment of this application.

Case 1 is used as an example for description herein. In response to an operation (for example, a tap operation) performed on the playback start control 141b, the electronic device may start to play back the recorded voice (long voice). In this case, the electronic device may display a user interface 45 shown in (4) in FIG. 17.

The user interface 45 may include a recording bar (recording bar 5) in a state 5. The state 5 is a state in which the recording function is disabled and a voice is played back. The recording bar 5 may include a playback pause control 141f, a playback progress bar 141c, a playback time indicator 141d, and a voice menu control 141e. For descriptions of each control included in the recording bar 5, refer to the foregoing descriptions of each control included in the recording bar 3. Details are not described herein again.

It should be understood that displaying the recording bar 5 herein is merely an example description. In another case, the recording bar may be in another state, for example, may be a recording bar (recording bar 3) in the foregoing involved state 3. This is not limited in this embodiment of this application.

**The following describes related content involved in information management.**

Information management includes deleting information, sharing information, storing information, and the like. The deleting information includes: making a choice of deleting some or all of voice information recorded in a note 1. The sharing information includes that to-be-shared content in the note is transmitted to another terminal, and a sharing manner may be selected. The to-be-shared content may be selected by a user by using an electronic device. For example, the user may choose to share other information different from a voice in the note 1, or may choose to share other information different from a voice and a text converted from the voice in the note 1, or may share all information in the note 1, or the like.

**FIG. 18****-****FIG. 29** **describe related content involved when the electronic device manages information.**

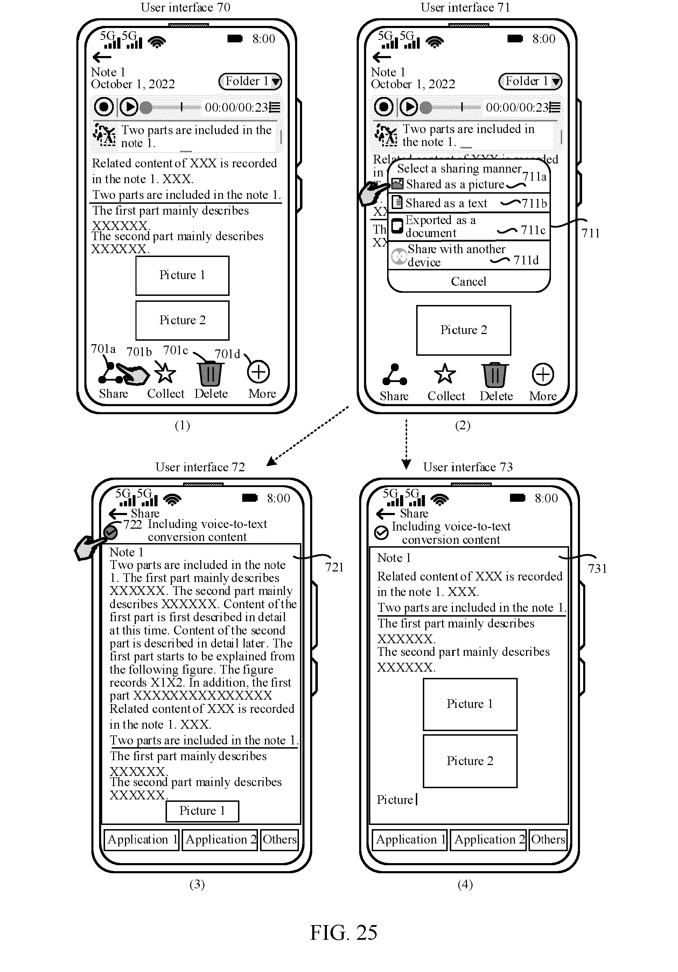

FIG. 18-FIG. 24 show a group of example user interfaces involved when an electronic device deletes information. FIG. 25-FIG. 29 show a group of example user interfaces involved when an electronic device shares information.

**The following describes, based on** **FIG. 18****-****FIG. 24****, related content involved in deleting information by the electronic device.**

The deleting information includes deleting voice information. When the voice information is deleted, the electronic device may further determine, based on a user requirement, whether to delete text information corresponding to the selected voice information. The text information corresponding to the voice information is converted from the voice. The note 1 may record Q segments of voices. The electronic device may make a choice of deleting L segments of voices in the Q segments of voices, and make a choice of whether to delete text information corresponding to the L segments of voices. L is an integer less than or equal to Q.

In some possible cases, the electronic device may provide a function of deleting all voices. When deleting all the voices, the electronic device may further determine, based on the user requirement, whether to delete text information corresponding to all the voices.

**FIG. 18** **describes a group of example user interfaces involved when the electronic device deletes all the voices.**

As shown in (1) in FIG. 18, when voice playback is paused, the electronic device may display a management toolbar in response to an operation C (for example, a touch and hold operation) performed on a playback progress bar 141c. The management toolbar includes at least one control involved in managing the note 1, and different controls may be used to trigger different processing performed on the note 1. For example, as shown in (2) in FIG. 18, a management toolbar 511 may include a "Delete" control 511a, a "Save" control 511b, and a "Share" control 511c. The "Delete" control 511a may be used to trigger the electronic device to delete all voice information. The "Save" control 511b may be used to trigger the electronic device to store all recorded voices. The "Share" control 511c may be used to trigger the electronic device to share all voice information.

As shown in a user interface 51 shown in (2) in FIG. 18, in response to an operation (for example, a tap operation) performed on the "Delete" control 511a, the electronic device may display a prompt box A involved in deleting all the voices. The prompt box A may be used to notify the user that to-be-deleted content is all the voices, and may be further used to receive an operation of confirming deletion of all the voices or an operation of canceling deletion of all the voices that is entered by the user. As shown in (3) in FIG. 18, a prompt box 521 displayed in a user interface 52 may be an example prompt box A.

The prompt box 521 may include prompt information 521a. The prompt information 521a may be used to notify the user of whether to delete all recordings (voices).

The prompt box 521 may further include a select control 521b, and the select control 521b may be used to receive an operation performed by the user on whether to reserve the voice-to-text conversion content (text information corresponding to all the recordings). In this case, the voice-to-text conversion content is the text information corresponding to all the voices. In some possible cases, "Reserve voice-to-text conversion content" is selected by default. In this case, the select control 521b is in a state E. For example, the state E is "grayed". When a state of the select control 521b is the state E, it indicates that "Reserve voice-to-text conversion content" is selected. In response to an operation performed on the select control 521b in the state E, the electronic device may change the state of the select control 521b to a state F. For example, the state F is "not grayed". When the state of the select control 521b is the state F, it indicates that "Reserve voice-to-text conversion content" is not selected. When all the voices are deleted, the voice-to-text conversion content is also deleted. The state of the select control 521b may be switched between the state E and the state F, to determine whether to delete voice-to-text conversion content corresponding to all the voices when all the voices are deleted.

The prompt box 521 may further include a deletion confirmation control 521c and a "Cancel" control 521d. The deletion confirmation control 521c may be used to trigger deletion of all the voices in the note 1. When the user makes a choice of deleting (not reserving) the voice-to-text conversion content corresponding to all the voices, the deletion confirmation control 521c may be further used to trigger deletion of the text information (voice-to-text conversion content) corresponding to all the voices. The "Cancel" control 521d is used to cancel deletion of all the voices, and is used to close the prompt box 521.

In some other possible cases, the electronic device may further make a choice of deleting some or all of the voices. When some or all of the voices are deleted, whether to delete text information corresponding to some or all of the voices may be further set.

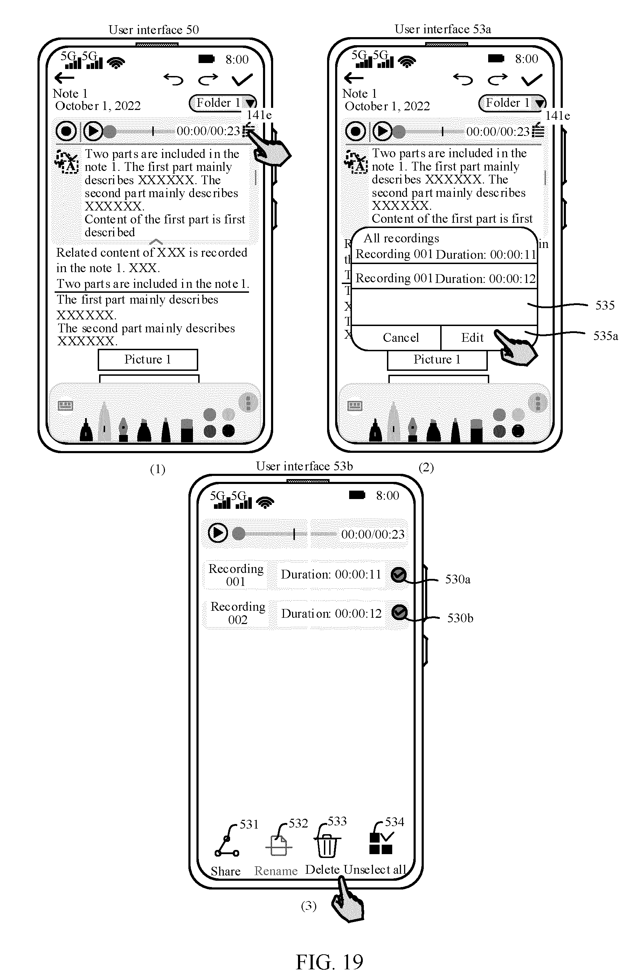

**For content involved in deleting all the voices by the electronic device, refer to related descriptions of** **FIG. 19-FIG. 21****.**

As shown in a user interface 50 shown in (1) in FIG. 19, in response to an operation (for example, a tap operation) performed on a voice menu control 141e, the electronic device may display a display box A including Q segments of voice information. The display box A is used to display information corresponding to Q segments of recordings (for example, recording duration). The display box A may further include a control involved when the recorded voice is managed. In this case, the electronic device may display a user interface shown in (2) in FIG. 19.

As shown in (2) in FIG. 19, a display box 535 included in a user interface 53a may be considered as an example display box A. The display block 535 may include recorded Q segments of voice information, including a name (recording 001) corresponding to a voice recorded at a 1^{st} time and total duration (11s) corresponding to the name, and a name (recording 002) corresponding to a voice recorded at a 2^{nd} time and total duration (12s) corresponding to the name. The display box 535 may further include an editing control 535a. The editing control 535a may be used to trigger display of a related interface involved when the recorded voice is processed (edited).

In response to an operation performed on the editing control 535a, the electronic device may display more controls involved when a voice in the note is managed (edited). Display of information corresponding to all the voices recorded in the note 1 may also be triggered. The information may include total duration of all the voices, names of the voices, and the like. In this case, the electronic device may display a user interface shown in (3) in FIG. 19.

As shown in (3) in FIG. 19, a user interface 53b is an example user interface involved when a voice is managed (edited). The user interface 53b may include a "Share" control 531, a "Rename" control 532, a "Delete" control 533, and a "Unselect all" control 534. The "Share" control 531 may be used to trigger sharing of a selected voice to another device. The "Rename" control 532 may be used to trigger a change in the name of the voice. The "Delete" control 533 may be used to trigger the selected voice. The electronic device may set that all the voices are selected for processing in a default case, and the "Unselect all" control 534 may be used to trigger updating of all the voices from "selected" to "unselected". In the user interface 53b, the electronic device selects all the voices by default. For example, a select control 530a corresponding to the recording 001 (the name corresponding to the voice obtained through the 1^{st} time of recording) is in the state E, for example, a grayed state. If the select control 530a is grayed, it indicates that the voice obtained through the 1^{st} time of recording is a selected voice. Similarly, a select control 530b corresponding to the recording 002 (the name corresponding to the voice obtained through the 2^{nd} time of recording) is also in the state E, for example, the grayed state. It indicates that the voice obtained through the 1^{st} time of recording is also a selected voice.

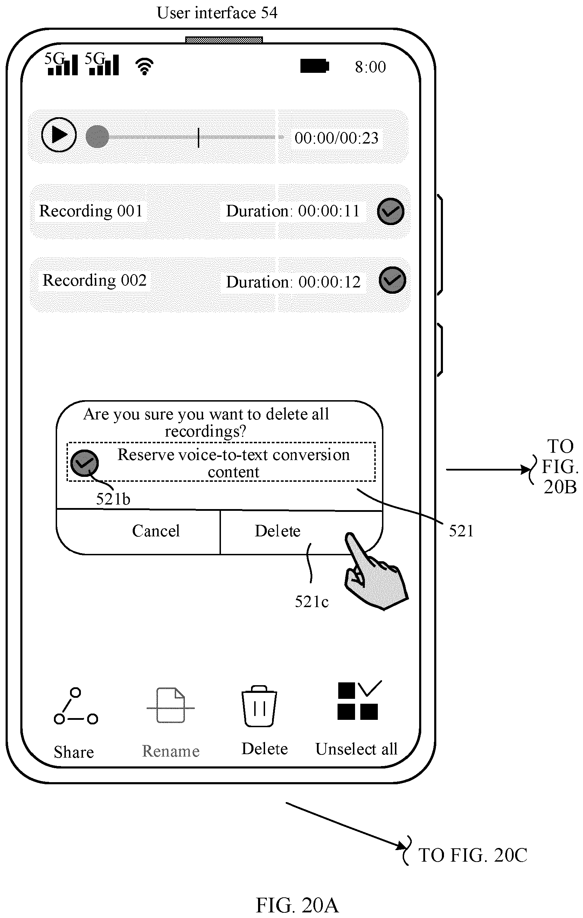

When the selected voice is all the voices, in response to an operation (for example, a tap operation) performed on the "Delete" control 533, the electronic device may display the prompt box A involved in deleting all the voices. The prompt box A may be used to notify the user that to-be-deleted content is all the voices, and may be further used to receive an operation of deleting all the voices or an operation of canceling deletion of all the voices that is entered by the user. When all the voices are selected, the "Delete" control 533 and the "Delete" control 511a may be considered as controls that have a same function, but have different forms. In this case, the electronic device may display a user interface 54 shown in FIG. 20A.

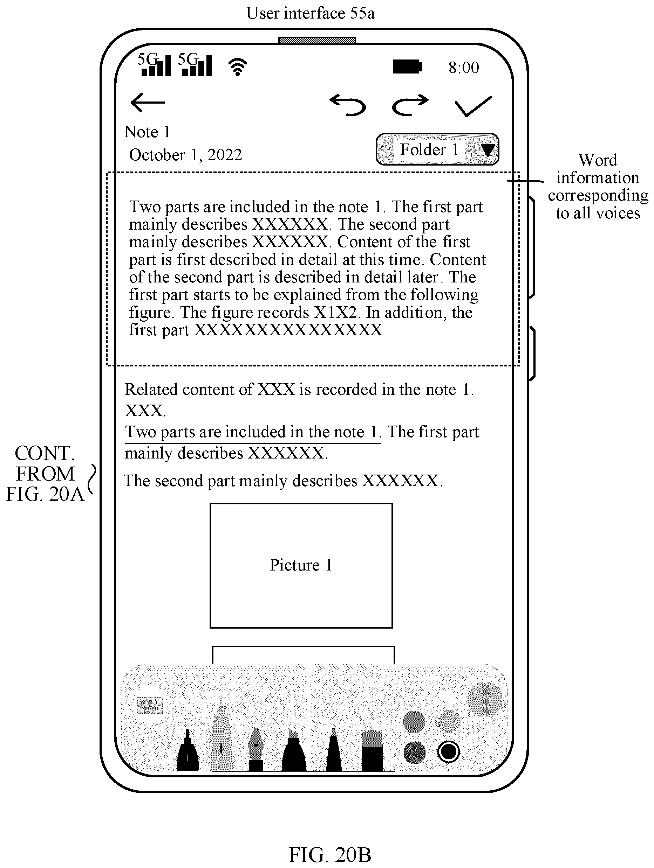

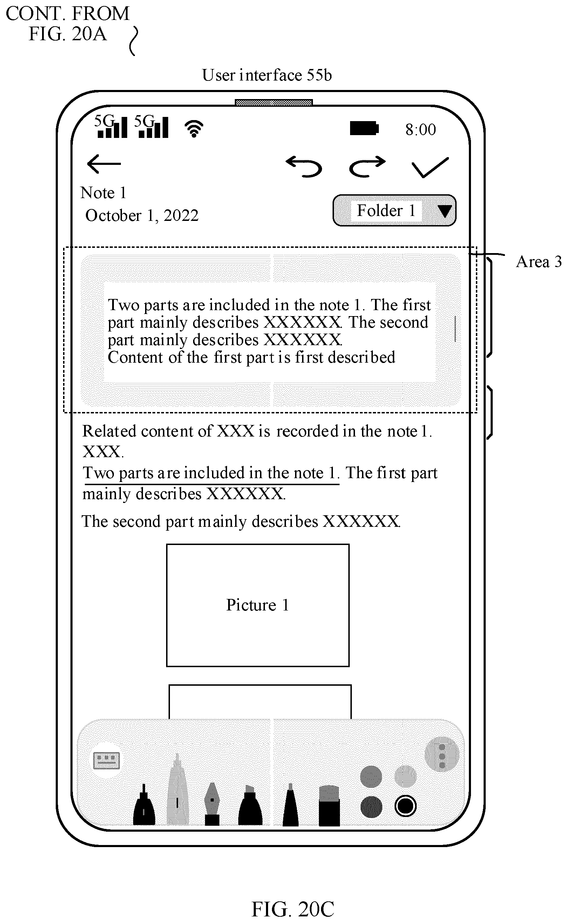

When all the voices are deleted, for related content involved when the electronic device reserves the text information corresponding to all the voices, refer to the following descriptions of FIG. 20A, FIG. 20B, and FIG. 20C.

As shown in FIG. 20A, the user interface 54 is an example user interface involved when a voice is managed. The user interface 54 may include a prompt box 521, and the prompt box 521 may be an example prompt box A. For related descriptions of the prompt box 521, refer to the foregoing content involved in (3) in FIG. 18. Details are not described herein again. In this case, a select control 521b in the prompt box 521 is in the state E, and it indicates that a choice to reserve (not delete) voice-to-text conversion content is made.

When all the voices are selected and a choice to reserve the text information (voice-to-text conversion content) corresponding to all the voices is made, in response to an operation performed on the deletion confirmation control 521c, the electronic device may delete all the voices, and reserve (not delete) the text information corresponding to all the voices. In other words, the electronic device may reserve the text information corresponding to all the voices in the note 1, but delete all the voices in the note 1. A manner in which the electronic device reserves the text information corresponding to all the voices in the note 1 includes but is not limited to one of the following two manners.

In a reservation manner 1, the electronic device may not display a recording area (area 1), and inserts the text information corresponding to all the voices before the non-recording information or after the non-recording information. For an example user interface involved when the text information corresponding to all the voices is inserted before the non-recording information, refer to a user interface 55a shown in FIG. 20B.

In a reservation manner 2, the electronic device may not display a recording area (area 1), and a new area (area 3) that supports to perform display through sliding is disposed in the note 1, to display the text information corresponding to all the voices. As shown in FIG. 20C, a user interface 55b may include an area 3, and the area 3 may display a part of the text information corresponding to all the voices. In response to an operation (for example, a slide operation) performed on the area 3, the electronic device may display another part of the text information corresponding to all the voices.

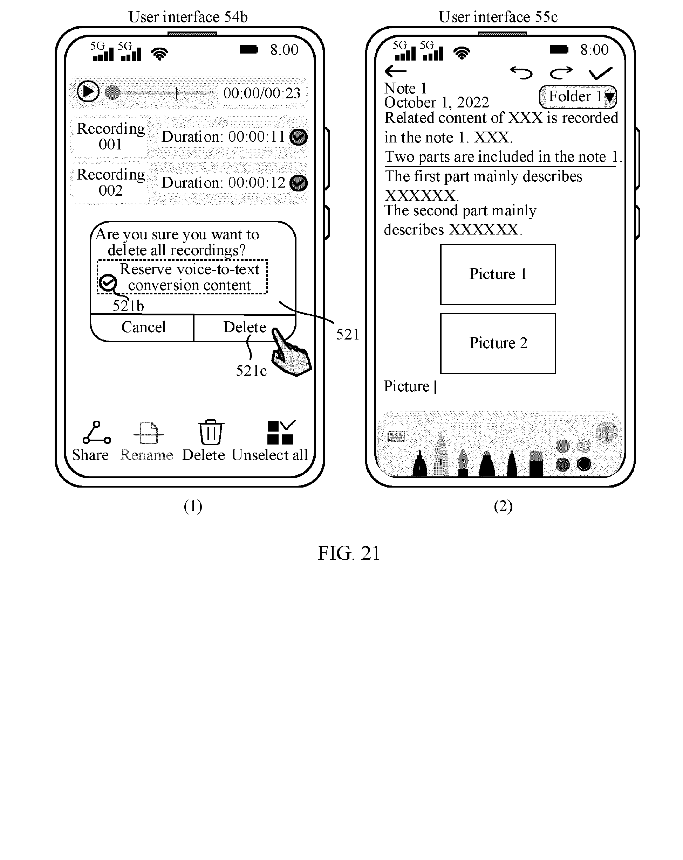

For related content involved when the electronic device deletes the text information corresponding to all the voices together when all the voices are deleted, refer to the following descriptions of FIG. 21.

As shown in (1) in FIG. 21, a user interface 54b is an example user interface involved when a voice is managed. The user interface 54b may include a prompt box 521, and the prompt box 521 may be an example prompt box A. For related descriptions of the prompt box 521, refer to the foregoing content involved in (3) in FIG. 18. Details are not described herein again. In this case, a select control 521b in the prompt box 521 is in the state F, and it indicates that a choice of deleting voice-to-text conversion content is made.

In response to an operation performed on the deletion confirmation control 521c, the electronic device may delete all the voices in the note 1, and delete the text information corresponding to all the voices. After deletion, the note 1 no longer includes the recorded voice and the text information corresponding to the voice, and may include non-recording information. For example, in this case, the electronic device may display a user interface 55c shown in (2) in FIG. 21.

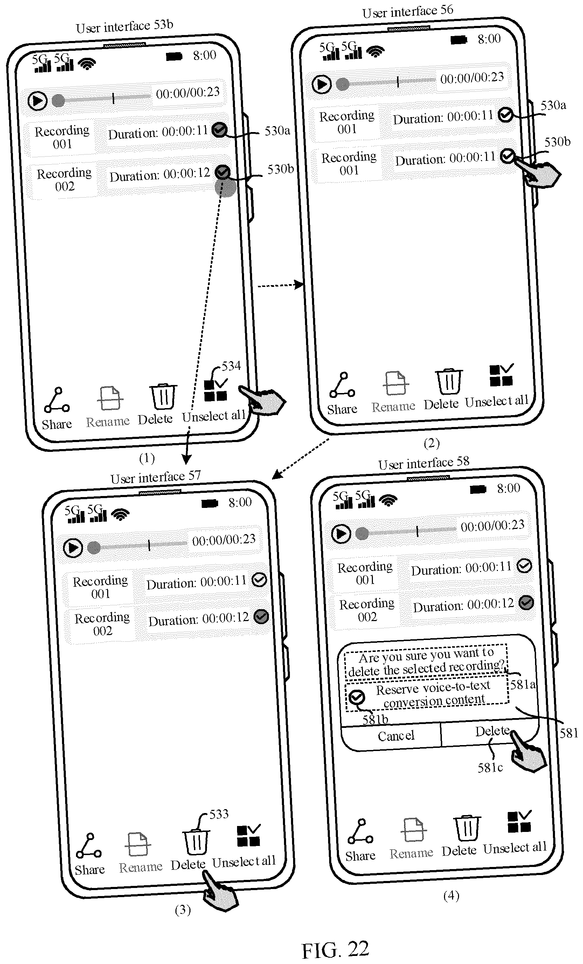

**For content involved in deleting some of the voices by the electronic device, refer to related descriptions of** **FIG. 22****-****FIG. 23****.**

As shown in the user interface 53b shown in (1) in FIG. 22, in response to an operation (for example, a tap operation) performed on the "Unselect all" control 534, the electronic device may change select controls (for example, the select control 530a and the select control 530b) corresponding to all the voices from the state E (for example, "grayed") to the state F ("not grayed"), to indicate that all the voices are set from "selected" to "unselected". In this case, the electronic device may display a user interface shown in (2) in FIG. 22. For related descriptions of the user interface 53b, refer to the foregoing descriptions of (3) in FIG. 19. Details are not described herein again.

As shown in (2) in FIG. 22, select controls (for example, the select control 530a and the select control 530b) corresponding to all the voices in a user interface 56 are not grayed. In response to an operation (for example, a tap operation) performed on the select control 530b that is not grayed, the electronic device may gray the control 530b, to indicate that the recording 002 is selected (the voice obtained at the 2^{nd} time of recording). In this case, the electronic device may display the following user interface 57 shown in (3) in FIG. 22.

As shown in (3) in FIG. 22, the selected voice includes the recording 002 (the voice obtained at the 2^{nd} time of recording), and does not include the recording 001 (the voice obtained at the 1^{st} time of recording). When some voices are selected, in response to an operation performed on the "Delete" control 533, the electronic device may display a prompt box B involved when the some voices (selected voice) are deleted. The prompt box B may be used to notify the user that to-be-deleted content is the selected voice, and may be further used to receive an operation of confirming to delete the selected voice or an operation of canceling deletion of the selected voice that is entered by the user.

As shown in (4) in FIG. 22, a prompt box 581 displayed in a user interface 58 may be an example prompt box B. The prompt box 581 may further include prompt information 581a. The prompt information 581a may be used to notify the user of whether to delete a selected recording (voice).

The prompt box 581 may further include a select control 581b, and the select control 581b may be used to receive an operation performed by the user on whether to reserve the voice-to-text conversion content (text information corresponding to the selected recording). In some possible cases, "Reserve voice-to-text conversion content" is selected by default. In this case, the select control 581b is in the state E. For example, the state E is "grayed". When a state of the select control 581b is the state E, it indicates that when the selected voice is deleted, text information corresponding to the selected voice is reserved (not deleted). In response to an operation performed on the select control 581b, the electronic device may change the state of the select control 581b to the state F. For example, the state F is "not grayed". When the state of the select control 581b is the state F, it indicates that the text information corresponding to the selected voice is deleted when the selected voice is deleted. The state of the select control 581b may be switched between the state E and the state F, to determine whether to delete voice-to-text conversion content corresponding to the selected voice when the selected voice is deleted.

In the user interface 58, the state of the select control 581b is "not grayed", and it indicates that the text information corresponding to the selected voice is deleted together when the selected voice is deleted. In this case, the selected voice includes the recording 002 (the voice obtained at the 2^{nd} time of recording), and does not include the recording 001 (the voice obtained at the 1^{st} time of recording). In response to an operation performed on the deletion confirmation control 581c, the electronic device may delete the voice obtained through the 2^{nd} time of recording and delete text information corresponding to the voice obtained through the 2^{nd} time of recording. The voice obtained through the 1^{st} time of recording and text information corresponding to the voice obtained through the 1^{st} time of recording may be still reserved in the note 1.

When Q segments of voices are recorded in the note 1 and L segments of voices are deleted, and when L is equal to Q, after the L segments of voices are deleted and text information corresponding to the L segments of voices is deleted, for a user interface displayed by the electronic device, refer to the foregoing descriptions of (2) in FIG. 21. After the L segments of voices are deleted but text information corresponding to the L segments of voices is reserved, for a user interface displayed by the electronic device, refer to the foregoing descriptions of FIG. 20B or FIG. 20C. Details are not described herein again.

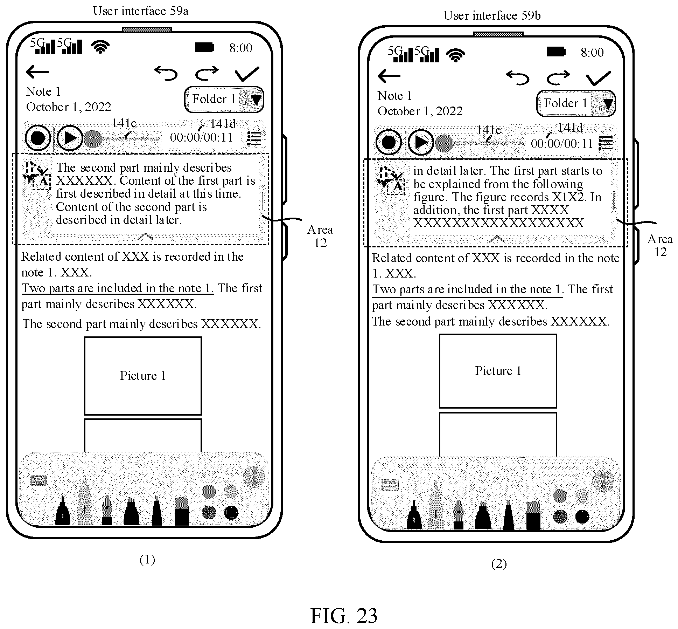

When Q segments of voices are recorded in the note 1 and L segments of voices are deleted, and when L is less than Q, after the L segments of voices are deleted and text information corresponding to the L segments of voices is deleted, for a user interface displayed by the electronic device, refer to the following descriptions of (1) in FIG. 23.

As shown in (1) in FIG. 23, a playback progress bar 141c included in the user interface 59a includes Q-L-1 nodes. To be specific, a quantity of nodes is L less than that before deletion, and L segments of voices are correspondingly deleted. Herein, Q=2, and L=1. The playback progress bar 141c no longer includes a node, and it indicates that in this case, only one voice is recorded in the note. Total duration recorded in the playback time indicator 141d changes from total duration of the Q segments of voices to total duration of Q-L segments of voices, for example, changes to total duration 11s of voices obtained through the 1^{st} time of recording herein. The area 12 includes text information corresponding to Q-L segments of voices that are not deleted, and no longer includes text information corresponding to deleted L segments of voices.

When Q segments of voices are recorded in the note 1 and L segments of voices are deleted, and when L is less than Q, after the L segments of voices are deleted and text information corresponding to the L segments of voices is not deleted (reserved), for a user interface displayed by the electronic device, refer to the following descriptions of (2) in FIG. 23.

As shown in (2) in FIG. 23, a playback progress bar 141c included in the user interface 59b includes Q-L-1 nodes. To be specific, a quantity of nodes is L less than that before deletion, and L segments of voices are correspondingly deleted. Herein, Q=2, and L=1. The playback progress bar 141c no longer includes a node, and it indicates that in this case, only one voice is recorded in the note. Total duration recorded in the playback time indicator 141d changes from total duration of the Q segments of voices to total duration of Q-L segments of voices, for example, changes to total duration 11s of voices obtained through the 1^{st} time of recording herein. The area 12 includes text information corresponding to the Q segments of voices.

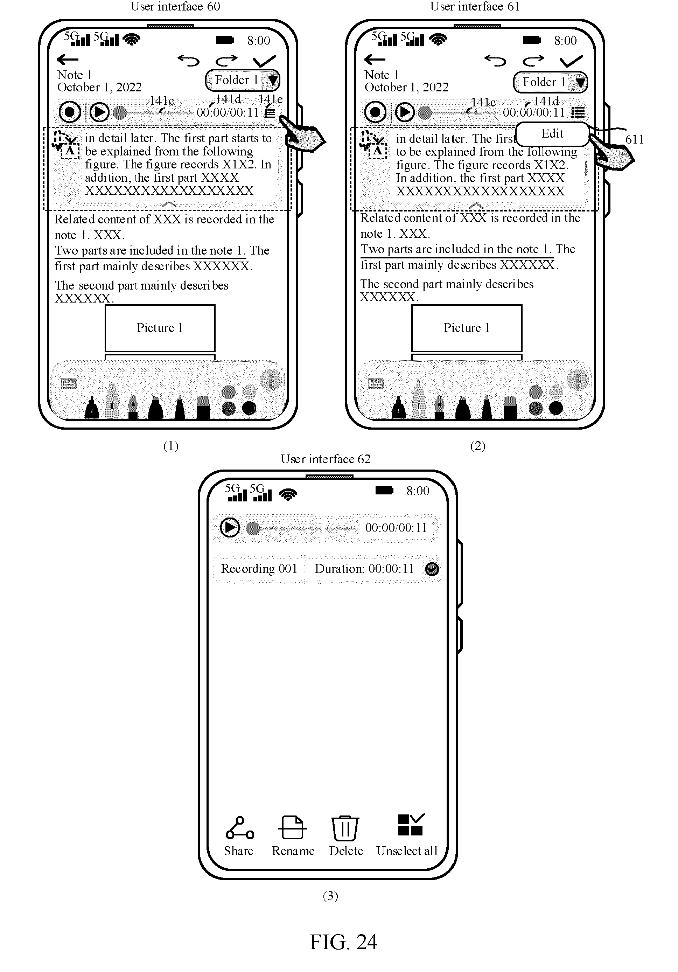

In some possible cases, when the voice recorded in the note 1 includes only one segment of voice, the electronic device may trigger, in another manner, display of an interface involved when the segment of voice is managed (edited). For such a process, refer to the following descriptions of FIG. 24.

As shown in a user interface 60 shown in (1) in FIG. 24, in response to an operation (for example, a tap operation) performed on the voice menu control 141e, the electronic device may not display the foregoing involved display box A. Only an editing control is displayed, and the editing control may be used to trigger display of an interface involved when the segment of voice is managed (edited). For example display of the editing control, refer to the following editing control 611 included in a user interface 61 shown in (2) in FIG. 24.

In response to an operation performed on the editing control 611, the electronic device may display more controls involved when the segment of voice is managed (edited). Display of information corresponding to the segment of voice may also be triggered. The information may include total duration of all the voices, names of the voices, and the like. In this case, the electronic device may display a user interface shown in (3) in FIG. 24. For related descriptions of a control involved in the user interface 62, refer to the foregoing descriptions of (2) in FIG. 22. Details are not described herein again.

**The following describes, based on** **FIG. 25****-****FIG. 28****, related content involved in sharing information by the electronic device.**

The sharing information includes that to-be-shared content in the note is transmitted to another terminal, and a sharing manner may be selected. The to-be-shared content may be selected by the user by using the electronic device.

In some possible cases, the to-be-shared content may be information in the note other than the voice information. For example, the information other than the voice information includes the voice-to-text conversion content in the area 12, and may further include the non-recording content in the area 2.

**For example,** **FIG. 25** **describes a group of example user interfaces involved when the to-be-shared content is information in the note other than the voice.**

As shown in (1) in FIG. 25, a user interface 70 is an example user interface involved when the note 1 is processed. The user interface 70 includes at least one functional control for the note 1, for example, may include a "Share" control 701a, a "Collect" control 701b, a "Delete" control 701c, and a "More" control 701d. The "Collect" control 701b may be used to trigger collection of the note 1. The "Delete" control 701c may be used to trigger deletion of the note 1. The "More" control 701d may be used to trigger display of more functional controls for the note 1. The "Share" control 701a may be used to trigger display of a related interface involved when content in the note 1 is shared.

In response to an operation (for example, a tap operation) performed on the "Share" control 701a, the electronic device may display a user interface 71 shown in (2) in FIG. 25. The user interface 71 is an example interface involved when the content in the note 1 is shared. The user interface 71 may include a selection box 711, and the selection box 711 may include controls involved in selecting different sharing manners. For example, the selection box 711 may include a control 711a, a control 711b, a control 711c, and a control 711d. The control 711a may be used to trigger transmission to another terminal in a form of a picture after the to-be-shared content in the note is converted into the picture. The control 711b may be used to trigger transmission to another terminal in a form of a document after the to-be-shared content in the note is converted into a text. A format of the text includes txt. The control 711d may be used to trigger transmission of the to-be-shared content in the note to another terminal still in a form of a note. In other words, a format of the note when the note is shared may not be changed. The control 711c may be used to trigger conversion of the note into a document for storage. Such a process includes: The electronic device may invoke a function of generating a document with a document editing application, to convert the note 1 into a document for storage. Subsequently, the electronic device may share the document with a terminal. The document may include a text document or a PDF document.

Herein, that the to-be-shared content is converted into a picture for sharing is used as an example for description.

In response to an operation performed on the control 711a, the electronic device may display the user interface 72 shown in (3) in FIG. 25. The user interface 72 is an example sharing interface involved when the to-be-shared content in the note is converted into a picture for sharing. The user interface 72 may further include an icon corresponding to an application with a sharing function. For example, the application with the sharing function may be an application 1, an application 2, another application, or the like shown in the figure. The icon corresponding to the application with the sharing function is used to trigger, by using an application corresponding to the icon, transmission of the to-be-shared content to another device.

The user interface 72 may include a select control 722. In a default case, a state of the select control 722 may be set to a state G (for example, the state G is "grayed"), and the select control 722 in the state G may be used to indicate to use voice-to-text conversion content in the area 12 as a part of the to-be-shared content. In this case, the electronic device may integrate the voice-to-text conversion content in the area 12 and the non-recording information in the area 2 into a picture for sharing. For example display of the integrated picture, refer to a picture 721 shown in the interface 72.

Subsequently, the electronic device may integrate, by using an application (for example, the application 1, the application 2, and another application shown in the figure) with the sharing function, the voice-to-text conversion content in the area 12 and the non-recording information in the area 2 into a picture for transmission to another device.

In response to an operation performed on the select control 722, the electronic device may display a user interface 73 in (4) in FIG. 25. In the user interface 73, the electronic device may set a state of the select control from the state G to the state F (for example, "not grayed"), and the select control 722 in the state F may be used to indicate that the voice-to-text conversion content in the area 12 may not be used as a part of the to-be-shared content. In this case, the electronic device may integrate the non-recording information in the area 2 into a picture for sharing. For example display of the integrated picture, refer to a picture 731 shown in the interface 73.

Subsequently, the electronic device may integrate, by using an application (for example, the application 1, the application 2, and another application shown in the figure) with the sharing function, the non-recording information in the area 2 into a picture for transmission to another device.

It should be understood that, that the select control 722 indicates, in a default state, to use the voice-to-text conversion content in the area 12 as a part of the to-be-shared content is used as an example for description herein. In actual use, the select control 722 may alternatively indicate, by default, not to use the voice-to-text conversion content in the area 12 as a part of the to-be-shared content. This is not limited in this embodiment of this application.

In some possible cases, the to-be-shared content may be all content in the note. For example, the all content may include all voices, may include the voice-to-text conversion content in the area 12, and may further include the non-recorded content in the area 2.

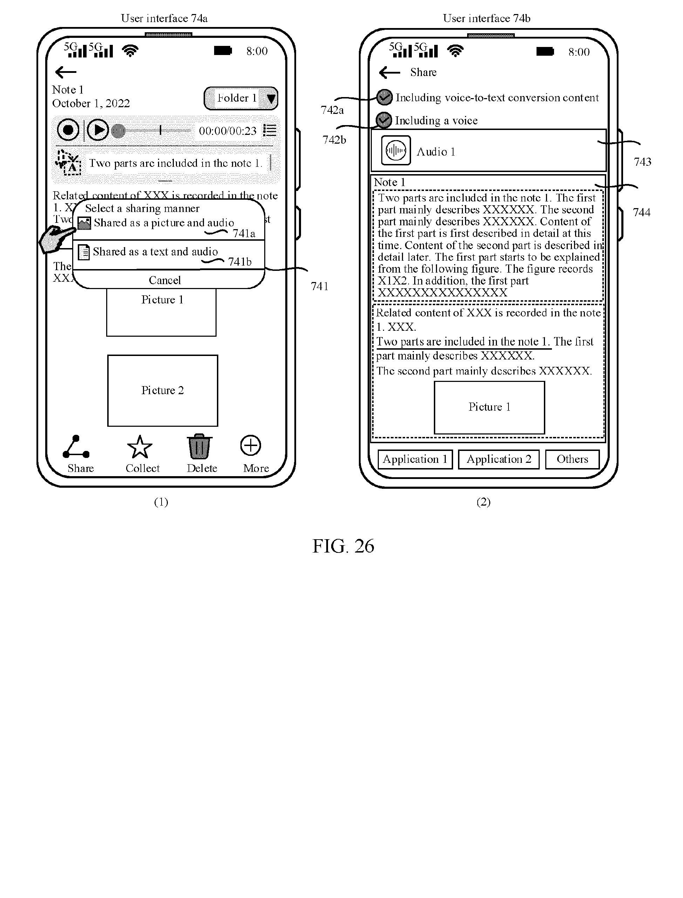

**For example,** **FIG. 26** **describes a group of example user interfaces involved when to-be-shared content may be all content in a note.**

In this case, in the user interface 70 shown in (1) in FIG. 25, in response to the operation performed on the "Share" control 701a, the electronic device may display a user interface 74a shown in (1) in FIG. 26. The user interface 74a is another example interface involved when content in the note 1 is shared.

As shown in (1) in FIG. 26, the user interface 74a may include a selection box 741, and the selection box 741 may include a control involved in selecting different sharing manners. For example, the selection box 741 may include a control 741a and a control 741b. The control 741a may be used to trigger transmission of a voice in the to-be-shared content to another terminal in a form of audio, and transmission to the another terminal in a form of a picture after other information different from the voice is converted into the picture. The control 741b may be used to trigger transmission of the voice in the to-be-shared content to another terminal in a form of audio, and transmission to the another terminal in a form of a document after other information different from the voice is converted into a text. A format of the text includes txt. Another sharing manner may be further included, for example, the foregoing manner of sharing with the another device in a form of a note. This is not limited in this embodiment of this application.

In response to an operation performed on the control 741a, the electronic device may display a user interface 74b in (2) in FIG. 26. The user interface 74b is an example sharing interface involved when to-be-shared content in a note is converted into a picture and audio for sharing. The user interface 74b may include a select control 742a and a select control 742b. In a default case, a state of the select control 742a and the select control 742b may be set to a state J (for example, the state J is "grayed"), and the select control 742a in the state J may be used to indicate to use voice-to-text conversion content in the area 12 as a part of the to-be-shared content. The control 742b in the state J is used to indicate that a voice in the note 1 is used as a part of the to-be-shared content. In this case, the electronic device may transmit the voice in the note 1 to another device as audio (for example, audio 743). The electronic device may further integrate the voice-to-text conversion content in the area 12 and the non-recording information in the area 2 into a picture for sharing. For example display of the integrated picture, refer to a picture 744 shown in the user interface 74b.

Subsequently, the electronic device may transmit the audio 743 and the picture 744 to the another device by using an application (for example, the application 1, the application 2, and another application shown in the figure) with the sharing function.

A display manner in which the another device receives the audio 743 and the picture 744 includes but is not limited to the following display manners:

**In a display manner 11,** the audio 743 and the picture 744 are displayed as two pieces of information. A display manner of the audio 743 includes displaying the audio 743 in a form of an audio file. After the audio file is downloaded, the audio 743 may be played back.

**In a display manner 12,** the audio 743 and the picture 744 are displayed as two pieces of information. A display manner of the audio 743 includes displaying the audio 743 in a form of an audio message, and the audio 743 may be played back in response to an operation (for example, a tap operation) performed on the audio message.

**In a display manner 13,** the audio 743 and the picture 744 are displayed as two pieces of information. A display manner of the audio 743 includes displaying the audio 743 in a form of a voice bar, and the voice bar may provide two controls. One control is used to trigger playback of the audio, and the other control is used to trigger voice-to-text conversion.

It should be understood herein that when the state of the select control 742b is a state K, for example, the state K may be "not grayed". The electronic device may integrate the voice-to-text conversion content in the area 12 and the non-recording information in the area 2 into a picture or a document for sharing. For such a process, refer to the foregoing descriptions of (3) in FIG. 25. Details are not described herein again. When the state of the select control 742a and the select control 742b is the state K, the electronic device may not analyze the voice-to-text conversion content in the area 12, but integrate the non-recording information in the area 2 into a picture or a document for sharing. For such a process, refer to the foregoing descriptions of (4) in FIG. 25. Details are not described herein again.

In some possible cases, the to-be-shared content may include a selected voice, and may further include text information corresponding to the selected voice.

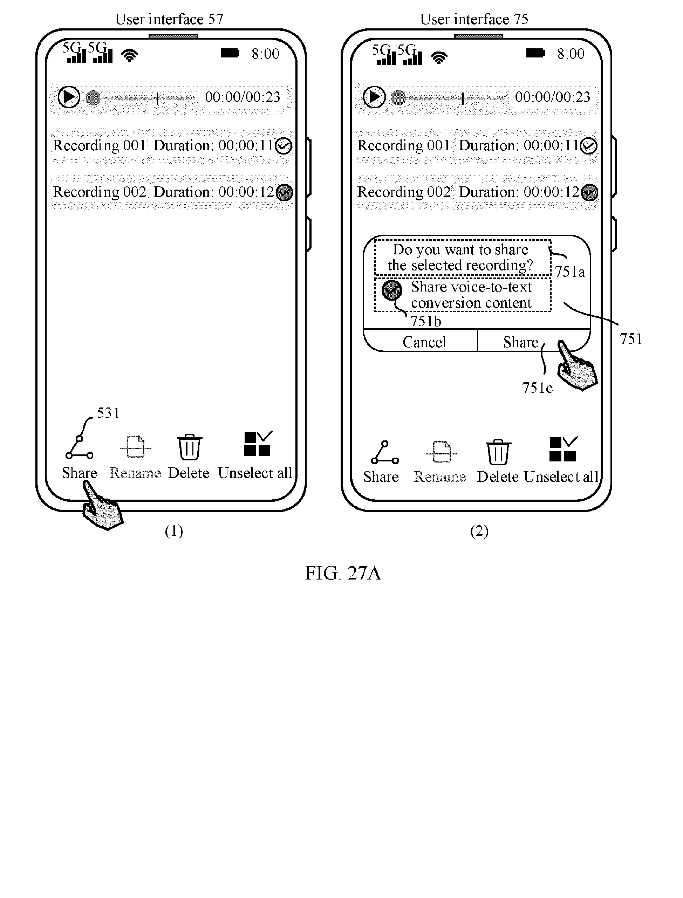

**For example,** **FIG. 27A** **describes a group of example user interfaces involved when to-be-shared content may be a selected voice and text information corresponding to the selected voice.**

As shown in (1) in FIG. 27A, a user interface 57 is an example interface involved when the voice is edited. For related descriptions of the user interface 57, refer to the foregoing descriptions of (3) in FIG. 22. Details are not described herein again. In this case, a voice selected by the electronic device includes the recording 002 (the name corresponding to the voice obtained through the 2^{nd} time of recording). In response to an operation performed on the "Share" control 531, the electronic device may display a prompt box C involved when the selected voice is shared. The prompt box C may be used to notify the user that the to-be-shared content is the selected voice, and may be further used to receive an operation of confirming sharing of the selected voice or an operation of canceling sharing of the selected voice that is entered by the user.

As shown in (2) in FIG. 27A, a prompt box 751 displayed in the user interface 75 may be an example prompt box C. The prompt box 751 may further include prompt information 751a. The prompt information 751a may be used to notify the user of whether to share a selected recording (voice).

The prompt box 751 may further include a select control 751b, and the select control 751b may be used to receive an operation performed by the user on whether to share the voice-to-text conversion content (text information corresponding to the selected recording). In some possible cases, "Share voice-to-text conversion content" is selected by default. In this case, the select control 751b is in a state E1. For example, the state E1 is "grayed". When the state of the select control 751b is the state E1, it indicates that text information corresponding to the selected voice is also shared when the selected voice is shared. In response to an operation performed on the select control 751b, the electronic device may change the state of the select control 751b to a state F1. For example, the state F1 is "not grayed". When the state of the select control 751b is the state F1, it indicates that the text information corresponding to the selected voice may not be shared when the selected voice is shared. The state of the select control 751b may be switched between the state E1 and the state F1, to determine whether to share the text information corresponding to the selected voice when the selected voice is shared.

The prompt box 751 may further include a sharing confirmation control 751c. When the state of the select control 751 is E1 (for example, "grayed"), the sharing confirmation control 751c may be used to trigger sharing of the selected voice and text information corresponding to the selected voice. In this case, in response to an operation performed on the sharing confirmation control 751c, the electronic device may display a user interface involved when a sharing manner is selected. After the sharing manner is selected, the electronic device may transmit the selected voice and the text information corresponding to the selected voice to another terminal. For a process, refer to the foregoing descriptions of the sharing manner in (1) in FIG. 26 and (2) in FIG. 26. Details are not described herein again.

When the state of the select control 751b is F1 (for example, "not grayed"), the sharing confirmation control 751c may be used to trigger sharing of the selected voice, but the text information corresponding to the selected voice is not shared. In this case, in response to an operation performed on the sharing confirmation control 751c, the electronic device may transmit the selected voice to the another device in a form of audio by using an application (for example, the application 1, the application 2, and another application shown in the figure) with the sharing function.

It should be understood that the select control 751b is optional. In some possible cases, whether to share the text information corresponding to the selected voice may not be involved when the selected voice is shared, and the text information corresponding to the selected voice is not shared by default. This is not limited in this embodiment of this application.

In some other possible cases, the to-be-shared content may include a selected voice, may further include text information corresponding to the selected voice, and may further include a note to which the voice belongs.

As shown in (1) in FIG. 27A, in response to an operation performed on the "Share" control 531, the electronic device may not display the foregoing involved prompt box A, and may display a prompt box D involved when the selected voice is shared. The prompt box D may be used to notify the user that the to-be-shared content is the selected voice, may be further used to receive an operation of confirming sharing of the selected voice or an operation of canceling sharing of the selected voice that is entered by the user, and may be further used to receive an operation of confirming sharing of a note to which a voice belongs or an operation of canceling sharing of the note that is entered by the user.

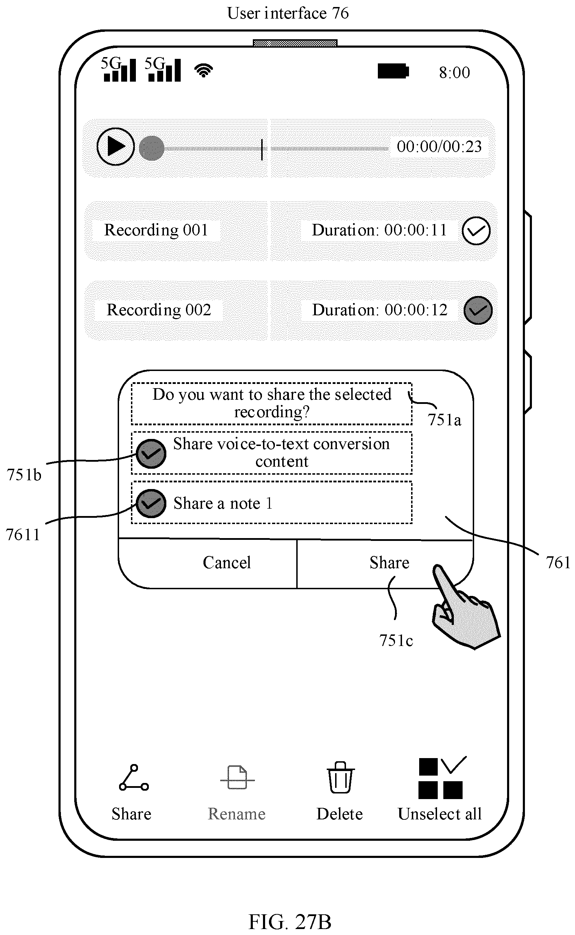

As shown in FIG. 27B, a prompt box 761 displayed in the user interface 76 may be an example prompt box D. The prompt box 761 may further include prompt information 751a. The prompt information 751a may be used to notify the user of whether to share a selected recording (voice). The prompt box 761 may further include a select control 751b, and the select control 751b may be used to receive an operation performed by the user on whether to share the voice-to-text conversion content (text information corresponding to the selected recording). For an operation performed on the prompt information 751a and the control 751b, refer to the foregoing descriptions of (2) in FIG. 27A. Details are not described herein again.

The prompt box 761 may further include a select control 7611, and the select control 7611 may be used to receive an operation of whether to select a note (note 1) to which a voice belongs. In some possible cases, a choice to share the note 1 is made by default. In this case, the select control is in a state E2. For example, the state E2 is "grayed". When the state of the select control 7611 is the state E2, it indicates that a note to which the selected voice belongs is also shared when the selected voice is shared. In response to an operation performed on the select control 7611, the electronic device may change the state of the select control 7611 to a state F2. For example, the state F2 is "not grayed". When the state of the select control 7611 is the state F2, it indicates that a note to which the selected voice belongs may not be shared when the selected voice is shared. The state of the select control 7611 may be switched between the state E2 and the state F2, to determine whether to share, when the selected voice is shared, the note to which the selected voice belongs.

In some other possible cases, the to-be-shared content may include selected voice-to-text conversion content.

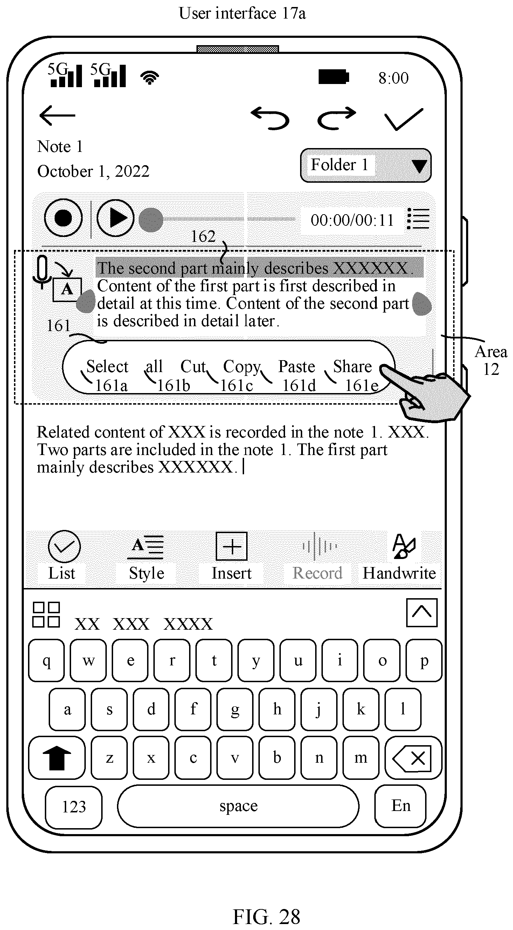

**For example,** **FIG. 28** **describes a group of example user interfaces involved when to-be-shared content may be selected voice-to-text conversion content.**

As shown in FIG. 28, a user interface 17a is an example user interface involved when selected voice-to-text conversion content is processed. For related content involved in the user interface 17a, refer to the foregoing descriptions of FIG. 8A. Details are not described herein again. In this case, the selection mark 162 indicates that the selected voice-to-text conversion content is: "The second part mainly describes XXXXXX. ". In response to an operation performed on the "Share" control 161e, the electronic device may transmit the selected voice-to-text conversion content to another device.

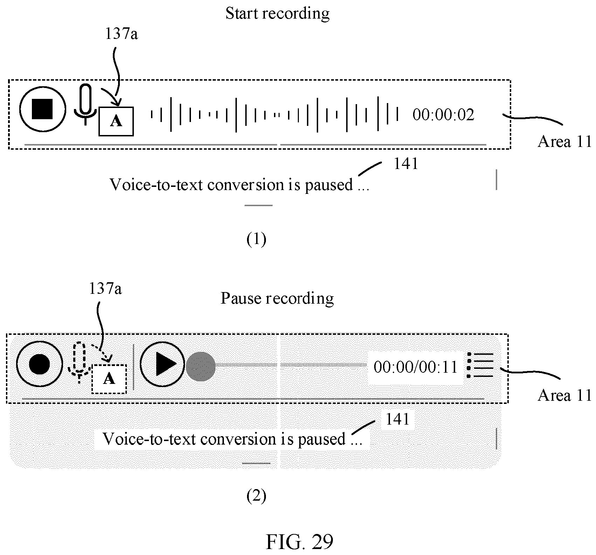

It should be understood that the user interface involved in this embodiment of this application is displayed as an example, and any user interface may include more or fewer controls. A form of each control may change, including but not limited to an icon or a text. A location of each control may also change, and should not constitute a limitation on this embodiment of this application. For example, in addition to the area 12, the conversion control 137a displayed in the area 1 may be displayed in the area 11 or another place. For example, as shown in (1) in FIG. 29, the conversion control 137a may be placed in the area 11 after recording is started. For another example, as shown in (2) in FIG. 29, the conversion control 1 may be placed in the area 11 after recording is paused.

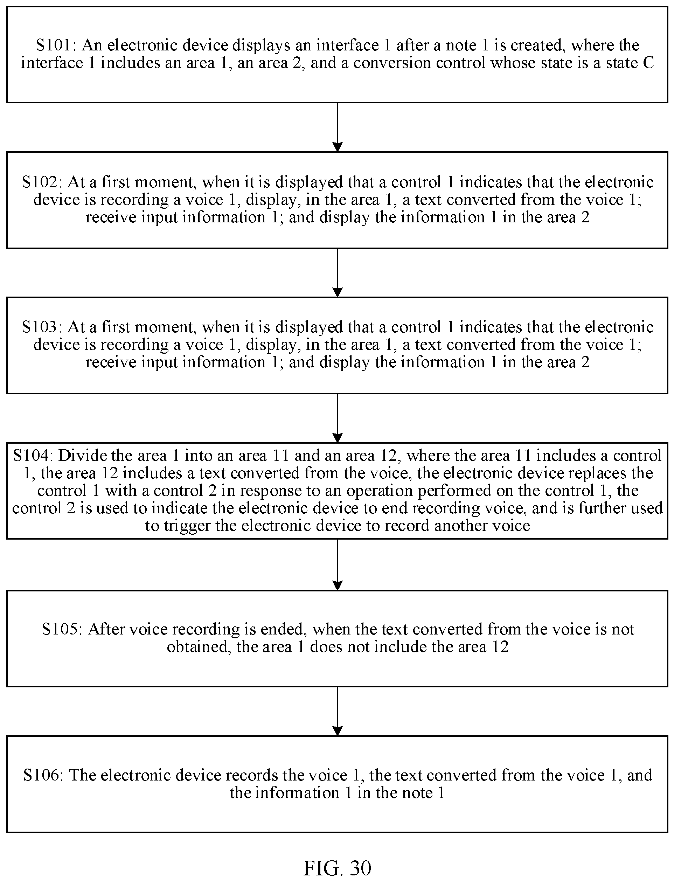

**FIG. 30** **is an example flowchart of an information processing method according to this application.**

In some possible cases, for an example process involved when an electronic device records information, refer to the following descriptions of step S101-step S106.

S101: The electronic device displays an interface 1 after a note 1 is created, where the interface 1 includes an area 1, an area 2, and a conversion control whose state is a state C.

In some possible cases, the note 1 in the foregoing content may also be referred to as a first file. The interface 1 may also be referred to as a first interface. The area 1 may be referred to as a first area. The area 2 may be referred to as a second area. The state C may be referred to as a first state. The conversion control may be referred to as a first control.

For a related process involved in creating the note 1 in step S101, refer to the foregoing descriptions of FIG. 1A and FIG. 1B. Details are not described herein again.

The conversion control may be the foregoing related conversion control 137a. The area 1 is the foregoing involved area used to present recording-related content. The area 2 is the foregoing involved editing area. The interface 1 may be the foregoing involved example user interface including the area 1, the area 2, and the conversion control whose state is the state C, for example, may be the user interface 13b shown in (3) in FIG. 2 and the user interface 13c shown in (4) in FIG. 2.

The conversion control in the state C is used to trigger conversion of a recorded voice into a text.

S102: At a first time, when it is displayed that a control 1 indicates that the electronic device is recording a voice 1, display, in the area 1, a text converted from the voice 1; receive input information 1; and display the information 1 in the area 2.

In some possible cases, the voice 1 may also be referred to as a first voice, and the control 1 may also be referred to as a second control. The information 1 may also be referred to as first information.

The voice 1 may be the foregoing involved voice recorded at the 1^{st} time. The first time may be a time at which the electronic device records the voice 1. The information 1 may be information inputted into the electronic device through an input tool, for example, a text or a picture. The input tool includes a keyboard and a pen toolbar. The control 1 may be the foregoing involved recording bar (recording bar 1) in the state 1 or a "Pause recording" control 136a.

After the electronic device creates the note 1, a recording control included in the interface 1 may trigger recording of the voice 1. When the conversion control is in the state C, the electronic device may enable a voice-to-text conversion function. In this case, when recording the voice 1, the electronic device may display, in the area 1, the text converted from the voice 1; receive information (for example, the information 1) input through the input tool; and display the information 1 in the area 2. For an example user interface involved in the process, refer to a related interface such as the user interface 13c shown in FIG. 2.

S103: In response to an operation performed on the conversion control whose state is the state C, the electronic device stops conversion of a voice into a text, and updates the state of the conversion control to a state D.

In response to an operation performed on the conversion control in the state C, the electronic device may update the state of the conversion control to the state D. The conversion control in the state D may be used to indicate to stop conversion of a voice into a text.

In this case, the electronic device may still continue to record a voice, and in a voice recording process, may receive information input through the input tool.

For an example interface involved in the process, refer to the foregoing descriptions of FIG. 7A and FIG. 7B. Details are not described herein again.

S104: Divide the area 1 into an area 11 and an area 12, where the area 11 includes the control 1, the area 12 includes a text converted from the voice, the electronic device replaces the control 1 with a control 2 in response to an operation performed on the control 1, the control 2 is used to indicate the electronic device to end recording voice, and is further used to trigger the electronic device to record another voice.

In some possible cases, the area 11 may be referred to as a first subarea, and the area 12 may be referred to as a second subarea. The control 2 may also be referred to as a third control.

The area 11 may be the foregoing involved voice recording/playback area, and the area 12 may be the foregoing involved voice-to-text conversion area.

When the control 1 is a recording bar (recording bar 1) in the state 1, the control 2 may be a recording bar (recording bar 2) in a state 2. When the control 1 is a "Pause recording" control 136a, the control 2 may be a recording start control 141a.

For related content involved in step S104, refer to the foregoing descriptions of related content in FIG. 7B and FIG. 7C. Details are not described herein again.

S105: After voice recording is ended, when the text converted from the voice is not obtained, the area 1 does not include the area 12.

For related content involved in such a process, refer to the foregoing descriptions of related content in (2) in FIG. 3 and (3) in FIG. 3. Details are not described herein again.

S106: The electronic device records the voice 1, the text converted from the voice 1, and the information 1 in the note 1.

The following first describes an example electronic device provided in an embodiment of this application.

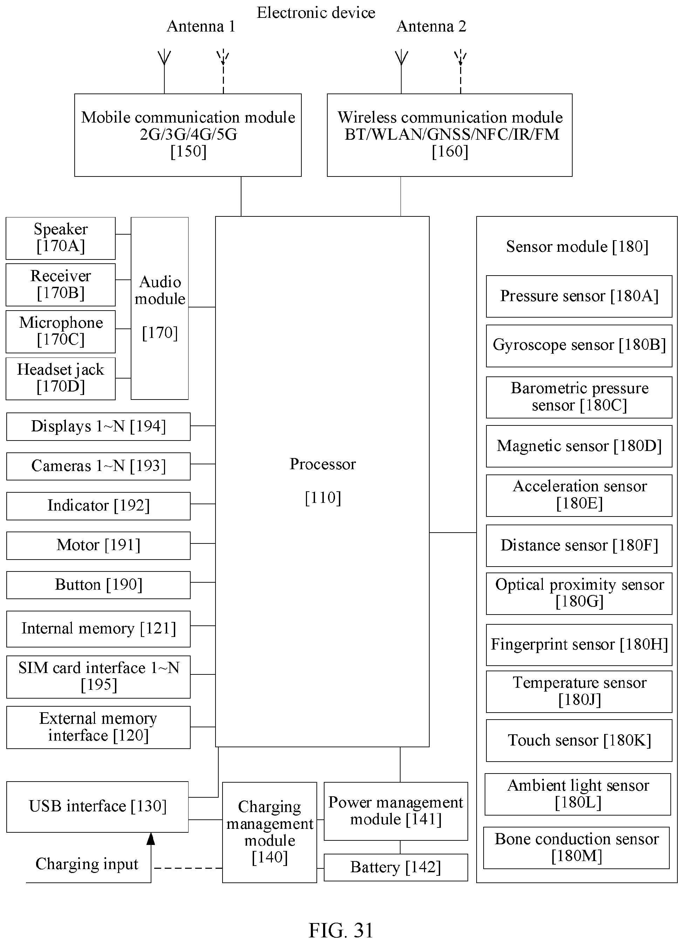

**FIG. 31** **is a schematic structural diagram of an electronic device according to an embodiment of this application.**

The following specifically describes this embodiment by using the electronic device as an example. It should be understood that, the electronic device may include more or fewer components than those shown in the figure, may combine two or more components, or may have different component configurations. The various components shown in the figure may be implemented in hardware, software, or a combination of hardware and software including one or more signal processing and/or application-specific integrated circuits.

The electronic device may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device. In some other embodiments of this application, the electronic device may include more or fewer components than those shown in the figure, some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that is just used or is cyclically used by the processor 110. If the processor 110 needs to use the instructions or the data again, the processor may directly invoke the instructions or the data from the memory. Repeated access is avoided, and a waiting time of the processor 110 is reduced, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, and the like.

It can be understood that an interface connection relationship between modules illustrated in this embodiment of this application is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from the charger.

The power management module 141 is configured to be connected to the battery 142, the charging management module 140, and the processor 110.

A wireless communication function of the electronic device may be implemented through the antenna 1, the antenna 2, the mobile communication module 150, the wireless communication module 160, the modem processor, the baseband processor, and the like.

In some embodiments, the antenna 1 and the mobile communication module 150 of the electronic device are coupled, and the antenna 2 and the wireless communication module 160 of the electronic device are coupled, so that the electronic device can communicate with a network and another device by using a wireless communication technology. The wireless communication technology may include a global system for mobile communications (global system for mobile communications, GSM), a general packet radio service (general packet radio service, GPRS), and the like.

The electronic device implements a display function by using a GPU, the display 194, an application processor, and the like.

The display 194 is configured to display an image, a video, and the like. The display 194 includes a display panel. In some embodiments, the electronic device may include 1 or N displays 194, where N is a positive integer greater than 1.

The electronic device may implement a shooting function through the ISP, the camera 193, the video codec, the GPU, the display 194, the application processor, and the like.

The ISP is used to process data fed back by camera 193.

The camera 193 is configured to capture a still image or video.

The digital signal processor is configured to process a digital signal, and may process another digital signal in addition to the digital image signal. For example, when the electronic device selects a frequency, the digital signal processor is configured to perform Fourier transform or the like on frequency energy.

The video codec is configured to compress or decompress a digital video.

The NPU is a neural-network (neural-network, NN) computing processor. The NPU quickly processes input information with reference to a structure of a biological neural network, for example, a transfer mode between human brain neurons, and may further continuously perform self-learning.

The internal memory 121 may include one or more random access memories (random access memories, RAMs) and one or more non-volatile memories (non-volatile memories, NVMs).

The external memory interface 120 may be configured to be connected to an external non-volatile memory, to expand a storage capacity of the electronic device. The external non-volatile memory communicates with the processor 110 by using the external memory interface 120, to implement a data storage function. For example, a file such as music or a video is stored in the external non-volatile memory.

The electronic device may use the audio module 170, the speaker 170A, the receiver 170B, the microphone 170C, the headset jack 170D, the application processor, and the like, to implement an audio function, and the like.

The audio module 170 is configured to convert digital audio information into analog audio signal output, and is also configured to convert analog audio input into a digital audio signal.

The speaker 170A, also referred to as "horn", is configured to convert an electrical audio signal into a sound signal. The electronic device may be used to listen to music or a recording, or answer a call in a hands-free mode by using the speaker 170A.

The receiver 170B, also referred to as "earpiece", is configured to convert an electrical audio signal into a sound signal.

The microphone 170C, also referred to as a "mic" and a "mike", is configured to convert a sound signal into an electrical signal.

The headset jack 170D is configured to be connected to a wired headset.

The button 190 includes a power button, a volume button, and the like.

The motor 191 may generate a vibration prompt.

The indicator 192 may be an indicator, and may be configured to indicate a charging state and a power change, or may be configured to indicate a message, a missed call, a notification, and the like.

The SIM card interface 195 is configured to be connected to a SIM card.

In this embodiment of this application, the processor 110 may invoke computer instructions stored in the internal memory 121, so that the electronic device performs an information processing method in embodiments of this application.

As used in embodiments, depending on the context, the term "when" can be interpreted as "if ...", "after ...", "in response to determining that ...", or "in response to detecting that ...". Similarly, depending on the context, the phrase "when it is determined that ..." or "if it is detected that ... (a stated condition or event)" can be interpreted as "if it is determined that ...", "in response to determining that ...", "when it is detected that ... (the stated condition or event)", or "in response to detecting that ... (the stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a soft disk, a hard disk, or a magnetic tape), an optical medium (for example, a DVD), a semiconductor medium (for example, an SSD), or the like.

A person of ordinary skill in the art may understand that all or some procedures of the methods in embodiments may be implemented by a computer program instructing related hardware. The program may be stored in the computer-readable storage medium. When the program is executed, the procedures in the method embodiments may be performed. The foregoing storage medium includes any medium that can store program code, for example, a ROM, a random storage memory RAM, a magnetic disk, or a compact disc.

## Claims

1. An information processing method, wherein the method comprises:
displaying, by an electronic device, a first interface, wherein the first interface comprises a first area, a second area, and a first control in a first state;
when the electronic device displays a second control and the first control in the first state at a first moment, recording, by the electronic device, a first voice, and displaying, in the first area, a text converted from the first voice, wherein the second control is used to indicate that recording is being performed, and the first control in the first state is used to indicate to convert a recorded voice into a text during recording;
when displaying the second control and the first control in the first state, receiving, by the electronic device, a first information entered by a user, and displaying the first information in the second area;
in response to an operation performed on the first control in the first state, when displaying the second control, switching, by the electronic device, a state of the first control to a second state, and stopping conversion of the recorded voice into the text, wherein the first control in the second state is used to indicate to pause conversion of the recorded voice into the text; and
recording, by the electronic device, the first voice, the text converted from the first voice, and the first information in a first file.

2. The method according to claim 1, wherein the first area comprises a first subarea and a second subarea, the first subarea is used to display the second control, the second subarea is used to display the text converted from the voice, and when the electronic device displays the second control, the method further comprises:
replacing, by the electronic device, the second control with a third control in response to an operation performed on the second control, wherein the third control is used to indicate the electronic device to end voice recording.

3. The method according to claim 2, whereinafter voice recording is ended, the first area does not comprise the second subarea when the electronic device does not obtain the text converted from the voice.

4. The method according to claim 1 or 2, wherein the method further comprises:
displaying, by the electronic device, a progress bar when the first voice is played back, wherein the progress bar is used to indicate a voice playback progress; and
when a first identifier is displayed at a first location in the progress bar, displaying, by the electronic device, the first information in a third state, and displaying a second information in the second area in a fourth state, wherein the first identifier at the first location is used to indicate the electronic device to play back the voice recorded at the first moment, and an input time of the second information is a second moment, and the second moment is later than the first moment.

5. The method according to claim 4, wherein the third state is that no mask is added, and the fourth state is that a mask is added.

6. The method according to claim 4, wherein when the first identifier is displayed at the first location in the progress bar, the method further comprises:
displaying, by the electronic device in the first area, the text converted from the voice recorded at the first moment.

7. The method according to any one of claims 4 to 6, wherein after the displaying second information in the second area in a fourth state, the method further comprises:
displaying, by the electronic device, the second information in the third state in response to an operation performed on a fourth control.

8. The method according to any one of claims 4-7, wherein when the first identifier is displayed at the first location in the progress bar, the method further comprises:
displaying, by the electronic device, third information in the second area in a fifth state in response to a first operation performed at a second location in the progress bar, wherein an input time of the third information is a third moment, and a voice recorded by the electronic device at the third moment is indicated at the second location.

9. The method according to any one of claims 2-8, wherein the method further comprises:
displaying, by the electronic device, Q-1 nodes in the progress bar when Q segments of voices are recorded after the first file is created, wherein the Q-1 nodes divide the progress bar into Q subprogress bars, an i^{th} subprogress bar in the Q subprogress bars is used to indicate an i^{th} segment of voice in the Q segments of voices, and Q is an integer greater than or equal to 2; and
playing back, by the electronic device, the i^{th} segment of voice when the first identifier is displayed in the i^{th} subprogress bar after an operation performed on a fifth control is detected.

10. The method according to claim 9, wherein the method further comprises:
selecting, by the electronic device, L segments of voices in the Q segments of voices, wherein L is an integer less than or equal to Q; and
when a sixth control is in a sixth state, in response to an operation performed on a seventh control, deleting, by the electronic device, the L segments of voices, and deleting a text converted from the L segments of voices; or
when the sixth control is not in a sixth state, in response to an operation performed on the seventh control, deleting, by the electronic device, the L segments of voices, and reserving a text converted from the L segments of voices.

11. The method according to claim 10, wherein the method further comprises:
when the eighth control is in an eighth state, in response to an operation performed on a ninth control, transmitting, by the electronic device to another device, content in the second area and a text converted from the Q segments of voices; or
when the eighth control is not in an eighth state, in response to an operation performed on the ninth control, transmitting, by the electronic device, content in the second area to another device.

12. The method according to any one of claims 1-11, wherein the receiving entered first information specifically comprises:
displaying, by the electronic device, a first input tool in the first interface; and
receiving, by the electronic device, the entered first information through the first input tool; and
the method further comprises:
further displaying a tenth control when the first input tool is displayed;
switching, by the electronic device, the first input tool to a second input tool in response to an operation performed on the tenth control; and
further displaying an eleventh control when the second input tool is displayed, wherein the eleventh control is used to trigger a switch from the second input tool to the first input tool.

13. The method according to any one of claims 1-12, wherein the method further comprises:
changing, by the electronic device, a size of the second subarea from a first size to a second size in response to an operation performed on a twelfth control.

14. A computer storage medium, wherein the storage medium stores a computer program, the computer program comprises executable instructions, and when the executable instructions are executed by a processor, the processor is enabled to perform the method according to any one of claims 1 to 13.

15. An electronic device, wherein the electronic device comprises one or more processors and a memory, the memory is coupled to the one or more processors, the memory is configured to store computer program code, the computer program code comprises computer instructions, and the one or more processors invoke the computer instructions to enable the electronic device to perform the method according to any one of claims 1 to 13.

## Patentansprüche

1. Ein Informationsverarbeitungsverfahren, wobei das Verfahren Folgendes umfasst:
Anzeige einer ersten Oberfläche durch ein elektronisches Gerät, wobei die erste Oberfläche einen ersten Bereich, einen zweiten Bereich und eine erste Steuerung in einem ersten Zustand umfasst;
Wenn das elektronische Gerät eine zweite Steuerung und die erste Steuerung im ersten Zustand zu einem ersten Zeitpunkt anzeigt, zeichnet das elektronische Gerät eine erste Stimme auf und zeigt im ersten Bereich einen aus der ersten Stimme konvertierten Text an, wobei die zweite Steuerung anzeigt, dass eine Aufnahme durchgeführt wird und die erste Steuerung im ersten Zustand während der Aufnahme die Umwandlung der aufgezeichneten Stimme in einen Text angibt;
Beim Anzeigen der zweiten Steuerung und der ersten Steuerung im ersten Zustand empfängt das elektronische Gerät eine erste vom Benutzer eingegebene Information und zeigt diese Information im zweiten Bereich an;
Als Antwort auf eine Bedienung der ersten Steuerung im ersten Zustand, wenn die zweite Steuerung angezeigt wird, schaltet das elektronische Gerät den Zustand der ersten Steuerung in einen zweiten Zustand um und stoppt die Umwandlung der aufgezeichneten Stimme in den Text, wobei die erste Steuerung im zweiten Zustand verwendet wird, um die Pause der Umwandlung der aufgezeichneten Stimme in den Text anzuzeigen; und
Aufnahme durch das elektronische Gerät der ersten Stimme, des aus der ersten Stimme konvertierten Textes und der ersten Information in einer ersten Datei.

2. Verfahren nach Anspruch 1, wobei der erste Bereich einen ersten Teilbereich und einen zweiten Teilbereich umfasst, der erste Teilbereich zur Anzeige der zweiten Steuerung dient, der zweite Teilbereich zur Anzeige des aus der Stimme konvertierten Textes dient, und wenn das elektronische Gerät die zweite Steuerung anzeigt, umfasst das Verfahren außerdem:
Ersetzen der zweiten Steuerung durch eine dritte Steuerung durch das elektronische Gerät als Antwort auf eine Bedienung der zweiten Steuerung, wobei die dritte Steuerung dazu dient, dem elektronischen Gerät das Beenden der Sprachaufzeichnung anzuzeigen.

3. Verfahren nach Anspruch 2, wobei nach Beendigung der Sprachaufzeichnung der erste Bereich den zweiten Teilbereich nicht umfasst, wenn das elektronische Gerät den aus der Stimme konvertierten Text nicht erhält.

4. Verfahren nach Anspruch 1 oder 2, wobei das Verfahren außerdem Folgendes umfasst:
Anzeige einer Fortschrittsanzeige durch das elektronische Gerät beim Abspielen der ersten Stimme, wobei die Fortschrittsanzeige zur Anzeige des Wiedergabefortschritts der Stimme dient; und
Wenn ein erstes Kennzeichen an einer ersten Position in der Fortschrittsanzeige angezeigt wird, zeigt das elektronische Gerät die erste Information in einem dritten Zustand an und zeigt eine zweite Information im zweiten Bereich in einem vierten Zustand an, wobei das erste Kennzeichen an der ersten Position verwendet wird, um dem elektronischen Gerät anzuzeigen, dass die zum ersten Zeitpunkt aufgezeichnete Sprache wiedergegeben werden soll, und die Eingabezeit der zweiten Information ein zweiter Zeitpunkt ist, wobei der zweite Zeitpunkt später als der erste Zeitpunkt ist.

5. Verfahren nach Anspruch 4, wobei der dritte Zustand darin besteht, dass keine Maske hinzugefügt wird, und der vierte Zustand darin besteht, dass eine Maske hinzugefügt wird.

6. Verfahren nach Anspruch 4, wobei, wenn das erste Kennzeichen an der ersten Position in der Fortschrittsanzeige angezeigt wird, das Verfahren weiterhin umfasst:
Anzeige, durch das elektronische Gerät im ersten Bereich, des aus der zum ersten Zeitpunkt aufgezeichneten Sprache konvertierten Textes.

7. Verfahren nach einem der Ansprüche 4 bis 6, wobei nach der Anzeige der zweiten Information im zweiten Bereich im vierten Zustand das Verfahren weiterhin umfasst:
Anzeige, durch das elektronische Gerät, der zweiten Information im dritten Zustand als Reaktion auf eine an einer vierten Steuerung ausgeführte Bedienung.

8. Verfahren nach einem der Ansprüche 4 bis 7, wobei, wenn das erste Kennzeichen an der ersten Position in der Fortschrittsanzeige angezeigt wird, das Verfahren weiterhin umfasst:
Anzeige, durch das elektronische Gerät, einer dritten Information im zweiten Bereich in einem fünften Zustand als Reaktion auf eine erste Bedienung an einer zweiten Position in der Fortschrittsanzeige, wobei die Eingabezeit der dritten Information ein dritter Zeitpunkt ist und eine vom elektronischen Gerät zum dritten Zeitpunkt aufgezeichnete Sprache an der zweiten Position angezeigt wird.

9. Verfahren nach einem der Ansprüche 2 bis 8, wobei das Verfahren weiterhin umfasst:
Anzeige von Q-1 Knoten durch das elektronische Gerät in der Fortschrittsanzeige, wenn Q Sprachabschnitte nach Erstellung der ersten Datei aufgezeichnet werden, wobei die Q-1 Knoten die Fortschrittsanzeige in Q Teilfortschrittsanzeigen unterteilen, eine i-te Teilfortschrittsanzeige in den Q Teilfortschrittsanzeigen verwendet wird, um auf einen i-ten Abschnitt der Q Sprachabschnitte hinzuweisen, und Q eine ganze Zahl größer oder gleich 2 ist; und
Wiedergabe des i-ten Sprachabschnitts durch das elektronische Gerät, wenn das erste Kennzeichen nach einer erfassten Bedienung an einer fünften Steuerung in der i-ten Teilfortschrittsanzeige erscheint.

10. Verfahren nach Anspruch 9, wobei das Verfahren weiterhin umfasst:
Auswahl von L Sprachabschnitten durch das elektronische Gerät aus den Q Sprachabschnitten, wobei L eine ganze Zahl kleiner oder gleich Q ist; und
wenn eine sechste Steuerung in einem sechsten Zustand ist, löscht das elektronische Gerät als Reaktion auf eine Operation, die an einer siebten Steuerung ausgeführt wird, die L-Sprachsegmente und einen aus den L-Sprachsegmenten konvertierten Text; oder
wenn sich die sechste Steuerung nicht im sechsten Zustand befindet, löscht das elektronische Gerät als Reaktion auf eine an der siebten Steuerung ausgeführte Operation die L-Sprachsegmente und behält einen aus den L-Sprachsegmenten konvertierten Text bei.

11. Verfahren gemäß Anspruch 10, wobei das Verfahren ferner umfasst:
wenn eine achte Steuerung im achten Zustand ist, überträgt das elektronische Gerät als Reaktion auf eine Operation an einer neunten Steuerung Inhalte im zweiten Bereich sowie einen aus Q-Sprachsegmenten konvertierten Text an ein anderes Gerät; oder
wenn die achte Steuerung nicht im achten Zustand ist, überträgt das elektronische Gerät als Reaktion auf eine Operation an der neunten Steuerung Inhalte im zweiten Bereich an ein anderes Gerät.

12. Verfahren nach einem der Ansprüche 1-11, wobei das Empfangen der eingegebenen ersten Information insbesondere Folgendes umfasst:
Anzeigen eines ersten Eingabewerkzeugs durch das elektronische Gerät in der ersten Benutzeroberfläche; und
Empfangen der eingegebenen ersten Information durch das elektronische Gerät über das erste Eingabewerkzeug; und
Das Verfahren umfasst ferner:
weitere Anzeige einer zehnten Steuerung, wenn das erste Eingabewerkzeug angezeigt wird;
Umschalten des ersten Eingabewerkzeugs auf ein zweites Eingabewerkzeug durch das elektronische Gerät als Reaktion auf eine an der zehnten Steuerung ausgeführte Operation; und
weitere Anzeige einer elften Steuerung, wenn das zweite Eingabewerkzeug angezeigt wird, wobei die elfte Steuerung dazu dient, das Umschalten vom zweiten Eingabewerkzeug zum ersten Eingabewerkzeug auszulösen.

13. Verfahren nach einem der Ansprüche 1-12, wobei das Verfahren ferner umfasst:
Ändern einer Größe des zweiten Teilbereichs von einer ersten auf eine zweite Größe durch das elektronische Gerät als Reaktion auf eine Operation, die an einer zwölften Steuerung ausgeführt wird.

14. Ein Computerspeichermedium, wobei das Speichermedium ein Computerprogramm speichert, das Computerprogramm ausführbare Anweisungen enthält und, wenn die ausführbaren Anweisungen von einem Prozessor ausgeführt werden, der Prozessor befähigt wird, das Verfahren nach einem der Ansprüche 1 bis 13 auszuführen.

15. Elektronisches Gerät, wobei das elektronische Gerät einen oder mehrere Prozessoren und einen Speicher umfasst, der Speicher mit dem bzw. den Prozessor(en) gekoppelt ist, der Speicher dafür eingerichtet ist, Computerprogrammcodes zu speichern, der Computerprogrammcodes Computeranweisungen umfasst, und der bzw. die Prozessor(en) die Computeranweisungen ausführen, um das elektronische Gerät dazu zu befähigen, das Verfahren gemäß einem der Ansprüche 1 bis 13 durchzuführen.

## Revendications

1. Procédé de traitement d'informations, ledit procédé comprenant :
l'affichage, par un dispositif électronique, d'une première interface, ladite interface comprenant une première zone, une deuxième zone et un premier contrôle dans un premier état ;
lorsque le dispositif électronique affiche un deuxième contrôle et le premier contrôle dans le premier état à un premier moment, l'enregistrement, par le dispositif électronique, d'une première voix, et l'affichage, dans la première zone, d'un texte converti à partir de la première voix, le deuxième contrôle étant destiné à indiquer que l'enregistrement est en cours, et le premier contrôle dans le premier état servant à indiquer la conversion d'une voix enregistrée en texte pendant l'enregistrement ;
lors de l'affichage du deuxième contrôle et du premier contrôle dans le premier état, la réception, par le dispositif électronique, d'une première information saisie par un utilisateur, et l'affichage de la première information dans la deuxième zone ;
en réponse à une opération effectuée sur le premier contrôle dans le premier état, lors de l'affichage du deuxième contrôle, la commutation, par le dispositif électronique, de l'état du premier contrôle à un second état, et l'arrêt de la conversion de la voix enregistrée en texte, le premier contrôle dans le second état servant à indiquer la pause de la conversion de la voix enregistrée en texte ; et
l'enregistrement, par le dispositif électronique, de la première voix, du texte converti à partir de la première voix et de la première information dans un premier fichier.

2. Procédé selon la revendication 1, la première zone comprenant une première sous-zone et une seconde sous-zone, la première sous-zone servant à afficher le deuxième contrôle, la seconde sous-zone servant à afficher le texte converti à partir de la voix, et lorsque le dispositif électronique affiche le deuxième contrôle, le procédé comprend en outre :
le remplacement, par le dispositif électronique, du deuxième contrôle par un troisième contrôle en réponse à une opération effectuée sur le deuxième contrôle, le troisième contrôle servant à indiquer au dispositif électronique de mettre fin à l'enregistrement vocal.

3. Procédé selon la revendication 2, lorsqu'après la fin de l'enregistrement vocal, la première zone ne comprend pas la seconde sous-zone lorsque le dispositif électronique n'obtient pas le texte converti à partir de la voix.

4. Procédé selon la revendication 1 ou 2, ledit procédé comprenant en outre :
l'affichage, par le dispositif électronique, d'une barre de progression lorsque la première voix est lue, la barre de progression servant à indiquer la progression de la lecture vocale ; et
lorsqu'un premier identifiant est affiché à un premier emplacement dans la barre de progression, l'affichage, par l'appareil électronique, de la première information dans un troisième état, et l'affichage d'une deuxième information dans la deuxième zone dans un quatrième état, le premier identifiant au premier emplacement étant utilisé pour indiquer à l'appareil électronique de lire la voix enregistrée au premier moment, et le temps d'entrée de la deuxième information correspondant à un deuxième moment, lequel est postérieur au premier moment.

5. Procédé selon la revendication 4, dans lequel le troisième état correspond à l'absence de masque, et le quatrième état à l'ajout d'un masque.

6. Procédé selon la revendication 4, dans lequel, lorsque le premier identifiant est affiché au premier emplacement dans la barre de progression, le procédé comprend en outre :
l'affichage, par l'appareil électronique dans la première zone, du texte converti à partir de la voix enregistrée au premier moment.

7. Procédé selon l'une quelconque des revendications 4 à 6, dans lequel, après l'affichage de la deuxième information dans la deuxième zone dans un quatrième état, le procédé comprend en outre :
l'affichage, par l'appareil électronique, de la deuxième information dans le troisième état en réponse à une opération effectuée sur une quatrième commande.

8. Procédé selon l'une des revendications 4 à 7, dans lequel, lorsque le premier identifiant est affiché au premier emplacement dans la barre de progression, le procédé comprend en outre :
l'affichage, par l'appareil électronique, d'une troisième information dans la deuxième zone dans un cinquième état en réponse à une première opération effectuée à un deuxième emplacement dans la barre de progression, le temps d'entrée de la troisième information étant un troisième moment, et une voix enregistrée par l'appareil électronique au troisième moment étant indiquée au deuxième emplacement.

9. Procédé selon l'une quelconque des revendications 2 à 8, dans lequel le procédé comprend en outre :
l'affichage, par l'appareil électronique, de Q-1 nœuds dans la barre de progression lorsque Q segments de voix sont enregistrés après la création du premier fichier, les Q-1 nœuds divisant la barre de progression en Q sous-barres de progression, une ième sous-barre de progression parmi les Q sous-barres servant à indiquer un ième segment de voix parmi les Q segments, et Q étant un entier supérieur ou égal à 2 ; et
la lecture, par l'appareil électronique, du ième segment de voix lorsque le premier identifiant est affiché dans la ième sous-barre de progression après détection d'une opération effectuée sur une cinquième commande.

10. Procédé selon la revendication 9, dans lequel le procédé comprend en outre :
la sélection, par l'appareil électronique, de L segments de voix parmi les Q segments, L étant un entier inférieur ou égal à Q ; et
lorsqu'un sixième contrôle est dans un sixième état, en réponse à une opération effectuée sur un septième contrôle, supprimer, par le dispositif électronique, les L segments de voix, et supprimer un texte converti à partir des L segments de voix ; ou
lorsque le sixième contrôle n'est pas dans un sixième état, en réponse à une opération effectuée sur le septième contrôle, supprimer, par le dispositif électronique, les L segments de voix, et conserver un texte converti à partir des L segments de voix.

11. Le procédé selon la revendication 10, dans lequel le procédé comprend en outre :
lorsque le huitième contrôle est dans un huitième état, en réponse à une opération effectuée sur un neuvième contrôle, transmettre, par le dispositif électronique à un autre appareil, le contenu de la deuxième zone et un texte converti à partir des Q segments de voix ; ou
lorsque le huitième contrôle n'est pas dans un huitième état, en réponse à une opération effectuée sur le neuvième contrôle, transmettre, par le dispositif électronique, le contenu de la deuxième zone à un autre appareil.

12. Le procédé selon l'une quelconque des revendications 1 à 11, dans lequel la réception des premières informations saisies comprend spécifiquement :
afficher, par le dispositif électronique, un premier outil de saisie dans la première interface ; et
recevoir, par le dispositif électronique, les premières informations saisies via le premier outil de saisie ; et
le procédé comprend en outre :
afficher en outre un dixième contrôle lorsque le premier outil de saisie est affiché ;
commuter, par le dispositif électronique, le premier outil de saisie vers un second outil de saisie en réponse à une opération effectuée sur le dixième contrôle ; et
afficher en outre un onzième contrôle lorsque le second outil de saisie est affiché, ledit onzième contrôle étant utilisé pour déclencher le passage du second outil de saisie au premier outil de saisie.

13. Le procédé selon l'une quelconque des revendications 1 à 12, dans lequel le procédé comprend en outre :
modifier, par le dispositif électronique, la taille de la seconde sous-zone d'une première taille à une seconde taille en réponse à une opération effectuée sur un douzième contrôle.

14. Un support de stockage informatique, ledit support stockant un programme informatique, le programme informatique comportant des instructions exécutables, et lorsque les instructions exécutables sont exécutées par un processeur, celui-ci est habilité à exécuter le procédé selon l'une quelconque des revendications 1 à 13.

15. Un dispositif électronique, où le dispositif électronique comprend un ou plusieurs processeurs et une mémoire, la mémoire étant couplée au(x) processeur(s), la mémoire étant configurée pour stocker un code de programme informatique, le code de programme informatique comprenant des instructions informatiques, et le(s) processeur(s) invoquent les instructions informatiques afin de permettre au dispositif électronique d'exécuter la méthode selon l'une quelconque des revendications 1 à 13.
